# EUROPEAN PATENT APPLICATION

(11) **EP 4 174 038 A1**
(43) Date of publication of application: **03.05.2023**
(21) Application number: 21939987.0
(22) Date of filing: 27.09.2021
(51) Int. Cl.: C03B 33/023, B24B 9/10, B65G 49/06, C03C 19/00

(54) **GLASS PLATE MACHINING SYSTEM**

(30) Priority: 16.09.2021 JP 2021150723
(71) Applicant: BANDO KIKO CO., LTD., Tokushima 770-0871 (JP)
(72) Inventor: BANDO, Kazuaki, Tokushima-shi Tokushima 770-0871 (JP)
(74) Representative: Ashton, Gareth Mark
(86) International application number: PCT/JP2021/035230
(87) International publication number: WO 2023/042406

(57) **Abstract**

Provided is a glass plate processing system capable of shortening a moving distance of a processing device until the processing device reaches a side edge of a glass plate of a small size having upper and lower surfaces of a small area, shortening arrival time (non-processing time) until the processing device reaches the side edge of the glass plate of a small size, and shortening a cycle time of processing.

A glass plate processing system 10 includes a first aligning means. When first and second glass plates different in area of upper and lower surfaces are processed, the first aligning means aligns a first side edge extending in a front-rear direction on one side in a width direction of the first glass plate to be processed first with a first side edge extending in the front-rear direction on the one side in the width direction of the second glass plate to be processed later and different in area from the first glass plate. The glass plate processing system 10 causes the first aligning means to align the first side edge of the second glass plate at a position of the first side edge of the first glass plate to perform processing on the second glass plate.

## Description

### Technical Field

The present invention relates to a glass plate processing system for processing a glass plate such as a window glass plate of an automobile or a liquid crystal glass plate, and more particularly to a glass plate processing system for sequentially feeding a glass plate to a cutting area, a breaking area, and a grinding area to perform cutting, breaking, and grinding on the glass plate.

### Background Art

There is disclosed a glass plate processing system including: a loading conveyor that carries in a glass plate; a cutting area located in front of the loading conveyor; a breaking area located in front of the cutting area; a grinding area located in front of the breaking area; an unloading conveyor located in front of the grinding area; and a conveyance mechanism that conveys the glass plate from the loading conveyor to each processing area (see Patent Literature 1).

The cutting area of the glass plate processing system includes a cutting table having a first moving mechanism that is moved in a width direction with the glass plate positioned and placed thereon, and a cutting device that is movable in a front-rear direction. In the cutting area, after the cutting device is moved backward in the front-rear direction and outward in the width direction of an edge of the glass plate placed on the cutting table, the cutting table is moved in the width direction toward the cutting device by the first moving mechanism, and then the edge of the glass plate placed on the cutting table is cut in using the cutting device. The breaking area includes a breaking table for placing the glass plate positioned after the cutting thereon, and a breaking device movable in the front-rear direction. In the breaking area, after the breaking device is moved backward in the front-rear direction toward the breaking table, the edge with a cut of the glass plate placed on the breaking table is broken using the breaking device.

The grinding area includes a grinding table having a second moving mechanism and being moved in the width direction while the glass plate positioned after the breaking is placed thereon, and a grinding device that is movable in the front-rear direction. In the grinding area, after the grinding device is moved backward in the front-rear direction and outward in the width direction of the edge of the glass plate placed on the grinding table, the grinding table is moved in the width direction toward the grinding device by the second moving mechanism, and then the edge of the glass plate placed on the grinding table is ground using the grinding device. The cutting and the grinding are performed in synchronization with each other.

### Citation List

### Patent Literature

Patent Literature 1: JP 2020-040877 A

### Summary of Invention

### Technical Problem

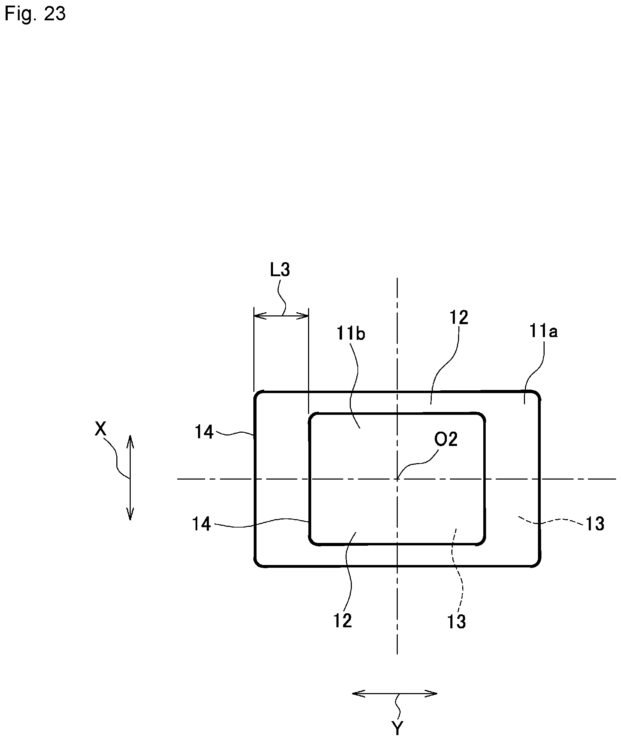

For example, a conventional glass plate processing system is performed such that when cutting, breaking, and grinding are performed on a glass plate 11a of a large size (large area) having an upper surface 12 and a lower surface 13 that are large in area, and then processing is performed on a glass plate 11b of a small size (small area) having an upper surface 12 and a lower surface 13 that are smaller in area than those of the glass plate 11a of a large size, the glass plate 11b of a small size is positioned by aligning a center point 02 of the glass plate 11b of a small size with a center point 02 of the glass plate 11a of a large size in the loading conveyor, and then the cutting, the breaking, and the grinding are performed on the glass plate 11b of a small size as illustrated in Fig. 23 that is a top view of the glass plates 11a and 11b positioned according to a conventional positioning standard.

As can be seen from Fig. 23, when the cutting is performed on the glass plate 11b of a small size by aligning the center point 02 of the glass plate 11b of a small size with the center point 02 of the glass plate 11a of a large size to position the glass plate 11b of a small size after the cutting, the breaking, and the grinding are performed on the glass plate 11a of a large size, the cutting device is moved outward in the width direction of first side edge 14 of each of the glass plates 11a and 11b placed on the cutting table, and the cutting table is moved in the width direction toward the cutting device located outward in the width direction of the glass plates 11a and 11b to perform the cutting. Then, a moving distance until the cutting device reaches the first side edge 14 of the glass plate 11b of a small size (moving distance in the width direction of the cutting table) increases by L3 more than a moving distance until the cutting device reaches the first side edge 14 of the glass plate 11a of a large size (moving distance in the width direction of the cutting table). Additionally, a moving distance until the cutting device returns from the first side edge 14 of the glass plate 11b of a small size to the outside in the width direction of the glass plate 11b (moving distance in the width direction of the cutting table) increases by L3. Thus, arrival time until the cutting device reaches the first side edge 14 of the glass plate 11b of a small size and return time until the cutting device returns to the outside in the width direction of the glass plate 11b from the first side edge 14 of the glass plate 11b of a small size increase, so that the cutting for the glass plate 11b of a small size cannot be performed quickly.

Additionally, when the grinding is performed on the glass plate 11b of a small size by aligning the center point O2 of the glass plate 11b of a small size with the center point O2 of the glass plate 11a of a large size to position the glass plate 11b of a small size after the cutting, the breaking, and the grinding are performed on the glass plate 11a of a large size, the grinding device is moved outward in the width direction of the first side edge 14 of each of the glass plates 11a and 11b placed on the grinding table, and the grinding table is moved in the width direction toward the grinding device located outward in the width direction of the glass plates 11a and 11b to perform the grinding. Then, a moving distance until the grinding device reaches the first side edge 14 of the glass plate 11b of a small size (moving distance in the width direction of the grinding table) increases by L3 more than a moving distance until the grinding device reaches the first side edge 14 of the first side edge 14 of the glass plate 11a of a large size (moving distance in the width direction of the grinding table). Additionally, a moving distance until the grinding device returns from the first side edge 14 of the glass plate 11b of a small size to the outside in the width direction of the glass plate 11b (moving distance in the width direction of the grinding table) increases by L3. Thus, arrival time until the grinding device reaches the first side edge 14 of the glass plate 11b of a small size and return time until the grinding device returns to the outside in the width direction of the glass plate 11b from the first side edge 14 of the glass plate 11b of a small size increase, so that the grinding for the glass plate 11b of a small size cannot be performed quickly.

An object of the present invention is to provide a glass plate processing system capable of shortening a moving distance of a processing device until reaching a side edge of a glass plate of a small size having an upper surface and a lower surface of a small area, and a moving distance of the processing device until the processing device returns from the side edge of the glass plate of a small size to the outside in a width direction of the glass plate, shortening arrival time (non-processing time) until the processing device reaches the side edge of the glass plate of a small size and return time (non-processing time) until the processing device returns from the side edge of the glass plate of a small size to the outside in the width direction of the glass plate, and shortening a cycle time of processing. Another object of the present invention is to provide a glass plate processing system capable of shortening a moving distance of a cutting device until reaching a side edge of a glass plate of a small size having an upper surface and a lower surface of a small area, and a moving distance of the cutting device until the cutting device returns from the side edge of the glass plate of a small size to the outside in a width direction of the glass plate, shortening arrival time (non-processing time) until the cutting device reaches the side edge of the glass plate of a small size and return time (non-processing time) until the cutting device returns from the side edge of the glass plate of a small size to the outside in the width direction of the glass plate, and shortening a cycle time of cutting. Yet another object of the present invention is to provide a glass plate processing system capable of shortening a moving distance of a grinding device until reaching a side edge of a glass plate of a small size having an upper surface and a lower surface of a small area, and a moving distance of the grinding device until returning from the side edge of the glass plate of a small size to the outside in a width direction of the glass plate, shortening arrival time (non-processing time) until the grinding device reaches the side edge of the glass plate of a small size and return time (non-processing time) until the grinding device returns from the side edge of the glass plate of a small size to the outside in the width direction of the glass plate, and shortening a cycle time of grinding.

### Solution to Problem

A premise of the present invention for solving the above problems is a glass plate processing system including: a loading area into which a glass plate to be processed is loaded; a processing area located in front of the loading area and configured to perform processing on the glass plate; an unloading area located in front of the processing area and configured to unload the glass plate processed; and a conveyance mechanism configured to sequentially convey the glass plate to the areas from backward to forward in a front-rear direction.

The present invention in the above premise has a feature of a glass plate processing system including a first positioning means. When first and second glass plates different in size and in area of an upper surface from each other are processed, the first positioning means locates an outermost edge located outermost in a width direction of a first side edge extending in a front-rear direction on one side in the width direction of the second glass plate to be processed later on a virtual line extending in the front-rear direction and being imagined based on an outermost edge located outermost in the width direction of a first side edge extending in the front-rear direction on the one side in the width direction of the first glass plate to be processed first. The glass plate processing system performs processing on the second glass plate after the second glass plate is positioned by locating the outermost edge of the second glass plate on the virtual line using the first positioning means.

As an example of the present invention, a glass plate processing system includes a second positioning means. When first and second glass plates different in size and in area of an upper surface from each other are processed, the second positioning means locates a second center line extending in the width direction, while dividing the second glass plate different in size and in area from the first glass plate in dimension into two regions in the front-rear direction, on a first center line extending in the width direction, while dividing the first glass plate in dimension into two regions in the front-rear direction. The glass plate processing system performs the processing on the second glass plate after positioning the second glass plate by locating the second center line of the second glass plate on the first center line of the first glass plate.

As another example of the present invention, the first positioning means and the second positioning means operate in the loading area.

As yet another example of the present invention, the processing area includes a cutting area located in front of the loading area, a breaking area located in front of the cutting area, and a grinding area located in front of the breaking area. The cutting area includes a cutting table that is provided with a first moving mechanism and that is moved in the width direction while the glass plate positioned is placed on the cutting table, and a cutting device that is movable in the front-rear direction and that cuts in an edge of the glass plate placed on the cutting table. The breaking area includes a breaking table for placing the glass plate positioned after the cutting on the breaking table, and a breaking device that is movable in the front-rear direction and breaks the edge of the glass plate placed on the breaking table. The grinding area includes a grinding table that is provided with a second moving mechanism and that is moved in the width direction while the glass plate positioned after the breaking is placed on the grinding table, and a grinding device that is movable in the front-rear direction and grinds the edge of the glass plate placed on the grinding table. The glass plate processing system causes the first positioning means to position the second glass plate by locating the outermost edge of the second glass plates on the virtual line, and the second positioning means to position the second center line of the second glass plate on the first center line of the first glass plate, and then performs the cutting, the breaking, and the grinding on the second glass plate.

As yet another example of the present invention, the loading area includes a loading conveyor that conveys a glass plate from backward to forward in the front-rear direction of the loading area, a stopper with which a front end edge of the glass plate comes into contact when the glass plate is moved forward using the loading conveyor, a plurality of rollers that is in contact with a lower surface of the glass plate and holds the glass plate movably in the width direction, a first lifting mechanism that lifts the plurality of rollers in an up-down direction, and a third moving mechanism that presses a second side edge of the glass plate raised together with the plurality of rollers by the first lifting mechanism in the width direction to move the glass plate in the width direction from the second side edge toward the first side edge. The first positioning means then locates an outermost edge located outermost in the width direction of the first side edge in the width direction of the glass plate on a first positioning reference extending in the front-rear direction as a virtual line in the loading area by pressing the second side edge of the glass plate lifted together with the plurality of rollers by the first lifting mechanism in the width direction using the third moving mechanism to move the glass plate in the width direction.

As yet another example of the present invention, the plurality of rollers includes at least one roller that has large rotation resistance, and the roller having the large rotation resistance prevents a glass plate located on the plurality of rollers from freely moving in the width direction.

As yet another example of the present invention, the third moving mechanism includes a contact member that comes into contact with the second side edge of the glass plate, and a servomotor that moves the contact member in the width direction. The glass plate processing system determines a first moving dimension in the width direction for locating the outermost edge located outermost in the width direction of the first side edge of the glass plate on the first positioning reference in accordance with a difference in dimension in the width direction of the glass plate, and determines the number of revolutions of a shaft of the servomotor based on the first moving dimension determined.

As yet another example of the present invention, the second positioning means locates the center line of the glass plate on a second positioning reference in the loading area by moving the glass plate backward in the front-rear direction using the loading conveyor after the glass plate is moved from backward to forward in the loading area by the loading conveyor and a front end edge of the glass plate comes into contact with the stopper, and the first positioning means locates the outermost edge located outermost in the width direction of the first side edge of the glass plate on the first positioning reference in the loading area by raising the glass plate together with the plurality of rollers using the first lifting mechanism and pressing the second side edge of the raised glass plate to move the raised glass plate in the width direction using the third moving mechanism after the second positioning means locates the center line of the glass plate on the second positioning reference.

As yet another example of the present invention, the glass plate processing system determines a second moving dimension of the loading conveyor backward in the front-rear direction for locating the center line of the glass plate on the second positioning reference in accordance with a difference in dimension of the glass plate in the front-rear direction, and the second positioning means causes the loading conveyor to move the glass plate backward in the front-rear direction by the determined second moving dimension after the front end edge of the glass plate comes into contact with the stopper.

As yet another example of the present invention, the second positioning means locates the center line of the glass plate on the second positioning reference in the loading area by lowering the glass plate raised by the first lifting mechanism and moving the glass plate backward in the front-rear direction using the loading conveyor after the outermost edge located outermost in the width direction of the first side edge in the width direction of the glass plate is located on the first positioning reference in the loading area.

As yet another example of the present invention, the glass plate processing system determines the second moving dimension of the loading conveyor backward in the front-rear direction for locating the center line of the glass plate on the second positioning reference in accordance with a difference in dimension of the glass plate in the front-rear direction, and the second positioning means causes the loading conveyor to move the glass plate backward in the front-rear direction by the determined second moving dimension after the outermost edge located outermost in the width direction of the first side edge in the width direction of the glass plate is located on the first positioning reference.

As yet another example of the present invention, the conveyance mechanism includes a suction pad that is located in each of the loading area, the cutting area, the breaking area, and the grinding area, and that sucks and holds the glass plate, a vacuum mechanism that applies a suction force to the suction pad, the suction force causing the suction pad to be attached to the glass plate, and a second lifting device that lowers the suction pad toward the areas above and raises the suction pad from the areas, and the glass plate processing system allows the suction pad to be changeable in mounting position in the front-rear direction or the width direction in accordance with an area of each of upper and lower surfaces of the glass plate.

As yet another example of the present invention, the conveyance mechanism includes a pad mounting plate extending in the front-rear direction or the width direction. The conveyance mechanism includes at least two suction pads disposed side by side in the front-rear direction or the width direction that are disposed on the pad mounting plate, and the at least two suction pads are changeable in mounting position in the front-rear direction or the width direction in the pad mounting plate.

As yet another example of the present invention, the at least two suction pads located in the cutting area includes an inner suction pad that sucks and holds the glass plate extending inside the cut and an outer suction pad that sucks and holds an edge of the glass plate extending outside the cut. The inner suction pad is installed on the pad mounting plate, and the outer suction pad is installed on a pad mounting arm that obliquely extends in the front-rear direction or the width direction from front and rear ends or both ends of the pad mounting plate.

As yet another example of the present invention, the pad mounting arm includes first and second arms that obliquely extend forward in the front-rear direction or outward in the width direction from the front end or one end of the pad mounting plate and turn in the width direction or the front-rear direction, and third and fourth arms that obliquely extend backward in the front-rear direction or outward in the width direction from the rear end or another end of the pad mounting plate and turn in the width direction or the front-rear direction. The conveyance mechanism allows the first to fourth arms to be changeable in turning angle with respect to the pad mounting plate, and allows the first to fourth arms to be changeable in mounting position of the outer suction pad.

### Advantageous Effects of Invention

The glass plate processing system according to the present invention causes the first positioning means to position the outermost edge located outermost in the width direction of the first side edge extending in the front-rear direction on the one side in the width direction of the second glass plate to be processed later and different in size and in area on the virtual line extending in the front-rear direction and being imagined based on the outermost edge located outermost in the width direction of the first side edge extending in the front-rear direction on the one side in the width direction of the first glass plate to be processed first, and then the second glass plate is processed. Thus, a moving distance until the processing device reaches the outermost edge (side edge) of the first glass plate of a large size (large area) with upper and lower surfaces of a large area equals to a moving distance until the processing device reaches the outermost edge (side edge) of the second glass plate of a small size (small area) with upper and lower surfaces of a smaller area than that of the first glass plate of a large size (large area), and a moving distance until the processing device returns from the outermost edge (side edge) of the first glass plate of a large size to the outside in the width direction of the first glass plate equals to a moving distance until the processing device returns from the outermost edge (side edge) of the second glass plate of a small size to the outside in the width direction of the second glass plate. This configuration enables shortening not only the moving distance until the processing device reaches the outermost edge (side edge) of the second glass plate of a small size and a moving distance until the processing device returns from the outermost edge (side edge) of the second glass plate of a small size to the outside in the width direction of the second glass plate, but also arrival time (non-processing time) until the processing device reaches the outermost edge (side edge) of the second glass plate of a small size and return time until the processing device returns from the outermost edge (side edge) of the second glass plate of a small size to the outside in the width direction of the second glass plate. The glass plate processing system can quickly perform processing on a glass plate of a small size, and can shorten a cycle time of the processing.

The glass plate processing system includes the second positioning means to process the first and second glass plates different in size and in area of an upper surface, the second positioning means positioning the second center line extending in a width direction, while dividing the second glass plate to be processed later and different in size and in area from the first glass plate to be processed first in dimension into two regions in the front-rear direction, on the first center line extending in the width direction, while dividing the first glass plate in dimension into two regions in the front-rear direction, and the glass plate processing system performs processing on the second glass plate after the second positioning means positions the second glass plate by locating the second center line of the second glass plate on the first center line of the first glass plate. The glass plate processing system causes not only the first positioning means to position the second glass plate by locating the outermost edge located outermost in the width direction of the first side edge extending in the front-rear direction on the one side in the width direction of the second glass plate on the virtual line extending in the front-rear direction and being imagined based on the outermost edge located outermost in the width direction of the first side edge extending in the front-rear direction on one side in the width direction of the first glass plate, but also the second positioning means to position the second center line extending in the width direction, while dividing the second glass plate in dimension into two regions in the front-rear direction, on the first center line extending in the width direction, while dividing the first glass plate in dimension into two regions in the front-rear direction, to position the second glass plate, and thus enabling glass plates different in size and in area of upper and lower surfaces to be easily positioned to reduce time for the positioning. Then, processing can be quickly performed on the glass plates different in size and in area of upper and lower surfaces, and cycle time of the processing can be reliably shortened.

The glass plate processing system includes the first positioning means and the second positioning means that operate in the loading area. The first positioning means and the second positioning means operate in the loading area, so that a glass plate positioned in advance is placed in a processing area located in front (downstream) of the loading area. Thus, the glass plate can be accurately processed, and processing on a glass plate of a small size can be quickly processed, and thus enabling cycle time of the processing to be shortened.

The glass plate processing system has processing areas including the cutting area located in front of the loading area, the breaking area located in front of the cutting area, and the grinding area located in front of the breaking area. The cutting area is provided with the cutting device including: the cutting table with the first moving mechanism that is moved in the width direction while a glass plate positioned is placed; and the cutting device that is movable in the front-rear direction and cuts in an edge of the glass plate placed on the cutting table. The breaking area includes the breaking table for placing the glass plate positioned after the cutting thereon, and the breaking device that is movable in the front-rear direction and breaks the edge of the glass plate placed on the breaking table. The grinding area includes the grinding table with the second moving mechanism that is moved in the width direction while the glass plate positioned after the breaking is placed, and the grinding device that is movable in the front-rear direction and grinds the edge of the glass plate placed on the grinding table. The first positioning means locates the outermost edge of the second glass plate to be processed later different in size and in area from the first glass plate to be processed first on the virtual line to position the second glass plate, and the second positioning means positions a center line of the second glass plate on the center line of the first glass plate to position the second glass plate. Then, the cutting, the breaking, and the grinding are performed on the second glass plate. The cutting is performed on the second glass plate after the first positioning means locates the outermost edge of the second glass plate different in area of an upper surface on the virtual line to position the second glass plate, and the second positioning means locates the center line of the second glass plate on the center line of the first glass plate to position the second glass plate. Thus, a moving distance of the cutting device (moving distance in the width direction of the cutting table) until the cutting device reaches a side edge of the first glass plate of a large size (large area) with upper and lower surface of a large area equals to a moving distance of the cutting device (moving distance in the width direction of the cutting table) until the cutting device reaches a side edge of the second glass plate of a small size (small area) with upper and lower surfaces of a smaller area than that of the first glass plate. Then a moving distance until the cutting device returns from an outermost edge (side edge) of the first glass plate to the outside in the width direction of the first glass plate equals to a moving distance until the cutting device returns from the outermost edge (side edge) of the second glass plate to the outside in the width direction of the second glass plate. Thus, the moving distance until the cutting device reaches the side edge of the second glass plate and the moving distance until the cutting device returns from the outermost edge (side edge) of the second glass plate to the outside in the width direction of the second glass plate can be shortened. Then, arrival time (non-processing time) until the cutting device reaches the outermost edge (side edge) of the second glass plate and return time until the cutting device returns from the outermost edge (side edge) of the second glass plate to the outside in the width direction of the second glass plate can be shortened. The glass plate processing system causes the first positioning means to locate the outermost edge of the second glass plate to be processed later and different in size and in area of an upper surface from the first glass plate to be processed first on the virtual line to position the second glass plate, and the second positioning means to locate the center line of the second glass plate on the center line of the first glass plate to position the second glass plate, and then the grinding is performed on the second glass plate. Thus, a moving distance until the grinding device (moving distance in the width direction of the grinding table) reaches the outermost edge (side edge) of the first glass plate of a large size (large area) with upper and lower surfaces of a large area equals to a moving distance until the grinding device (moving distance in the width direction of the grinding table) reaches the outermost edge (side edge) of the second glass plate of a small size (small area) with upper and lower surfaces of a smaller area than that of the first glass plate of a large size (large area), and a moving distance until the grinding device returns from the outermost edge (side edge) of the first glass plate of a large size to the outside in the width direction of the first glass plate equals to a moving distance until the grinding device returns from the outermost edge (side edge) of the second glass plate of a small size to the outside in the width direction of the second glass plate. This configuration enables shortening not only the moving distance until the grinding device reaches the side edge of the second glass plate of a small size and a moving distance until the grinding device returns from the side edge of the second glass plate of a small size to the outside in the width direction of the second glass plate, but also arrival time (non-processing time) until the grinding device reaches the outermost edge (side edge) of the second glass plate of a small size and return time until the grinding device returns from the outermost edge (side edge) of the second glass plate of a small size to the outside in the width direction of the second glass plate. The glass plate processing system can quickly perform cutting and grinding on a glass plate of a small size, and can shorten cycle time of the cutting and the grinding.

The glass plate processing system has the loading area including: the loading conveyor that conveys a glass plate from backward to forward in the front-rear direction of the loading area; the stopper with which a front end edge of the glass plate comes into contact when the glass plate is moved forward using the loading conveyor; the plurality of rollers that is in contact with a lower surface of the glass plate and holds the glass plate movably in the width direction; the first lifting mechanism that lifts the plurality of rollers in the up-down direction; and the third moving mechanism that presses the second side edge of the glass plate raised together with the plurality of rollers in the width direction by the first lifting mechanism to move the glass plate in the width direction from the second side edge toward the first side edge. The first positioning means causes the third moving mechanism to press the second side edge of the glass plate raised together with the plurality of rollers to move the glass plate in the width direction to locate the outermost edge located outermost in the width direction of the first side edge of the glass plate in the width direction on the first positioning reference extending in the front-rear direction as the virtual line in the loading area. Thus, the glass plate processing system causes the second side edge of the glass plate raised together with the plurality of rollers to be pressed, thereby moving the glass plate raised in the width direction to locate the outermost edge located outermost in the width direction of the first side edge of the glass plate on the first positioning reference extending in the front-rear direction as the virtual line in the loading area. This configuration enables the outermost edge located outermost in the width direction in the side edge extending in the front-rear direction on one side in the width direction of the second glass plate to be processed later and different in size and in area from the first glass plate to be processed first to be accurately located on the virtual line imagined based on the outermost edge located outermost in the width direction in the side edge extending in the front-rear direction on one side in the width direction of the first glass plate. Thus, the glass plates different in size and in area of upper and lower surfaces can be reliably positioned, and the first positioning means can be automatically performed by using the loading conveyor, the stopper, the plurality of rollers, the first lifting mechanism, and the third moving mechanism, without manual operation.

The glass plate processing system includes the plurality of rollers in which at least one of the rollers has large rotation resistance and the at least one roller has the large rotation resistance prevents the glass plate located on the plurality of rollers from freely moving in the width direction. Thus, when second side edge of the glass plate raised together with the plurality of rollers is pressed in the width direction by the third moving mechanism, the glass plate does not move by inertia in the width direction due to rotation of the plurality of rollers, and thus inadvertent movement of the glass plate in the width direction can be prevented. As a result, the outermost edge located outermost in the width direction in the side edge extending in the front-rear direction on one side in the width direction of the glass plate can be accurately located on the first positioning reference in the loading area.

The third moving mechanism includes: the contact member in contact with second side edge of the glass plate; and the servomotor that moves the contact member in the width direction, and the glass plate processing system that determines the first moving dimension in the width direction for locating the outermost edge located outermost in the width direction of the first side edge in the width direction of the glass plate on the first positioning reference in accordance with a difference in dimension in the width direction of the glass plate, and determines the number of revolutions of the shaft of the servomotor based on the determined first moving dimension, determines the first moving dimension in the width direction for locating the outermost edge located outermost in the width direction of the first side edge in the width direction of the glass plate on the first positioning reference in accordance with a difference in dimension in the width direction of the glass plate, and determines the number of revolutions of the shaft of the servomotor based on the determined first moving dimension. Thus, the third moving mechanism can accurately move the glass plate in the width direction by the first moving dimension, and can accurately locate the outermost edge located outermost in the width direction of the first side edge extending in the front-rear direction on one side in the width direction of the glass plate on the first positioning reference in the loading area.

The glass plate processing system includes the second positioning means that locates the center line of the glass plate on the second positioning reference in the loading area by moving the glass plate backward in the front-rear direction using the loading conveyor after the glass plate is moved from backward to forward in the loading area by the loading conveyor and the front end edge of the glass plate comes into contact with the stopper, and the first positioning means that locates the outermost edge located outermost in the width direction of the first side edge in the width direction of the glass plate on the first positioning reference in the loading area by raising the glass plate together with the plurality of rollers using the first lifting mechanism, and pressing the second side edge of the raised glass plate to move the raised glass plate in the width direction using the third moving mechanism after the second positioning means locates the center line of the glass plate on the second positioning reference. The glass plate processing system moves the glass plate backward in the front-rear direction using the loading conveyor to locate the center line of the glass plate on the second positioning reference in the loading area, and moves the second side edge of the raised glass plate in the width direction using the third moving mechanism to locate the outermost edge located outermost in the width direction of the first side edge on one side in the width direction of the glass plate on the first positioning reference in the loading area. Thus, the second center line extending in the width direction, while dividing the second glass plate to be processed later and different in size and in area from the first glass plate to be processed first in dimension into two regions in the front-rear direction, can be located on the first center line extending in the width direction, while dividing the first glass plate in dimension into two regions in the front-rear direction, and the outermost edge located outermost in the width direction of the first side edge extending in the front-rear direction on one side in the width direction of the second glass plate can be accurately located on the virtual line extending in the front-rear direction and being imagined based on the outermost edge located outermost in the width direction of the first side edge extending in the front-rear direction on one side in the width direction of the first glass plate. The glass plate processing system can reliably perform positioning of glass plates different in size and in area of upper and lower surfaces, can automatically operate the second positioning means using the loading conveyor without manual operation, and can automatically operate the first positioning means using the first lifting mechanism and the third moving mechanism without manual operation.

The glass plate processing system determines the second moving dimension of the loading conveyor backward in the front-rear direction for locating the center line of the glass plate on the second positioning reference in accordance with a difference in dimension of the glass plate in the front-rear direction, and the second positioning means causes the loading conveyor to move the glass plate backward in the front-rear direction by the determined second moving dimension after the front end edge of the glass plate comes into contact with the stopper. Then, the glass plate processing system determines the second moving dimension of the loading conveyor backward in the front-rear direction for locating the center line of the glass plate on the second positioning reference in accordance with the difference in dimension in the front-rear direction of the glass plate, and after the front end edge of the glass plate comes into contact with the stopper, the loading conveyor moves the glass plate backward in the front-rear direction based on the determined second moving dimension. Thus, the loading conveyor can accurately move the glass plate backward in the front-rear direction by the second moving dimension, and thus the center line extending in the width direction, while dividing the glass plate in dimension into two regions in the front-rear direction, can be accurately located on the second positioning reference in the loading area.

The glass plate processing system includes the second positioning means that locates the center line of the glass plate on the second positioning reference in the loading area by lowering the glass plate raised by the first lifting mechanism and moving the glass plate backward in the front-rear direction using the loading conveyor after the outermost edge located outermost in the width direction of the first side edge in the width direction of the glass plate is located on the first positioning reference in the loading area. Then, the glass plate processing system causes loading conveyor to move a glass plate backward in the front-rear direction to locate the center line extending in the width direction, while dividing the glass plate in dimension into two regions in the front-rear direction, on the second positioning reference in the loading area, so that the center line of the first glass plate to be processed first can be accurately aligned with a center line of a second glass plate to be processed later and different in size and in area of upper and lower surfaces from the first glass plate. As a result, positioning of the second glass plate can be accurately performed, and the second positioning means can be automatically operated using the loading conveyor without manual operation.

The glass plate processing system determines the second moving dimension of the loading conveyor backward in the front-rear direction for locating the center line of the glass plate on the second positioning reference in accordance with a difference in dimension of the glass plate in the front-rear direction, and the second positioning means causes the loading conveyor to move the glass plate backward in the front-rear direction by the determined second moving dimension after the outermost edge located outermost in the width direction of the first side edge in the width direction of the glass plate is located on the first positioning reference. Then, the glass plate processing system determines the second moving dimension of the loading conveyor backward in the front-rear direction for locating the center line of the glass plate, the center line extending in the width direction while dividing the glass plate in dimension in the front-rear direction into two regions, on the second positioning reference in accordance with the difference in dimension in the front-rear direction of the glass plate, and after the outermost edge located outermost in the width direction of the first side edge of the glass plate in the width direction is located on the first positioning reference, the loading conveyor moves the glass plate backward in the front-rear direction based on the determined second moving dimension. Thus, the loading conveyor can accurately move the glass plate backward in the front-rear direction by the second moving dimension, and thus the center line of the glass plate can be accurately located on the second positioning reference in the loading area.

The glass plate processing system is provided with the conveyance mechanism that includes the suction pad that is located in each of the loading area, the cutting area, the breaking area, and the grinding area, and that sucks and holds the glass plate, the vacuum mechanism that applies a suction force to the suction pad, the suction force causing the suction pad to be attached to the glass plate, and the second lifting device that lowers the suction pad toward the areas above and raises the suction pad from the areas, and the glass plate processing system allows the suction pad to be changed in mounting position in the front-rear direction or the width direction in accordance with an area of each of upper and lower surfaces of the glass plate. Then, for a glass plate of a large size (large area) with upper and lower surfaces of a large area, the suction pad can be located at an optimum place of the glass plate by moving the suction pad outward in the front-rear direction or outward in the width direction. Conversely, for a glass plate of a small size (small area) with upper and lower surfaces of a small area, the suction pad can be located at an optimum place of the glass plate by moving the suction pad inward in the front-rear direction or inward in the width direction. As a result, glass plates different in area of upper and lower surfaces can be reliably conveyed to each processing area by the conveyance mechanism.

The glass plate processing system is provided with the conveyance mechanism that includes the pad mounting plate extending in the front-rear direction or the width direction, and at least two suction pads disposed side by side in the front-rear direction or the width direction that are disposed on the pad mounting plate, so that mounting positions of the suction pads in the front-rear direction or the width direction in the pad mounting plate can be changed. Then, the glass plate is sucked and held by the at least two suction pads disposed side by side in the front-rear direction or the width direction on the pad mounting plate, so that the glass plate can be reliably held by the suction pads. The glass plate processing system changes mounting positions of the suction pads in the front-rear direction or the width direction in the pad mounting plate in accordance with areas of upper and lower surfaces of a glass plate, so that the suction pads can be disposed at optimal positions on glass plates different in area of upper and lower surfaces. As a result, the glass plates different in area of upper and lower surfaces can be reliably conveyed to each processing area by the conveyance mechanism.

The glass plate processing system is provided with the suction pad located in the cutting area, the suction pad including: an inner suction pad that sucks and holds a glass plate extending inside a cut; and an outer suction pad that sucks and holds an edge of the glass plate extending outside the cut. The inner suction pad is installed on the pad mounting plate, and the outer suction pad is installed on the pad mounting arm that obliquely extends in the front-rear direction or the width direction from front and rear ends or both ends of the pad mounting plate. Then, the inner suction pad sucks and holds the glass plate extending inside the cut, and the outer suction pad sucks and holds an edge of the glass plate, the edge extending outside the cut. As a result, the edge of the glass plate, extending outside the cut, does not inadvertently fall off during conveyance of the glass plate, and thus the glass plate after the cutting can be safely conveyed to the breaking area.

The glass plate processing system is provided with the pad mounting arm including: the first and second arms that obliquely extend forward in the front-rear direction or outward in the width direction from a front end or one end of the pad mounting plate and turn in the width direction or the front-rear direction; and third and fourth arms that obliquely extend backward in the front-rear direction or outward in the width direction from a rear end or another end of the pad mounting plate and turn in the width direction or the front-rear direction. The conveyance mechanism allows the first to fourth arms to be changed in turning angle with respect to the pad mounting plate, and allows the first to fourth arms to be changed in mounting position of the outer suction pad. Then, the glass plate processing system changes a turning angle of each of the first to fourth arms with respect to the pad mounting plate in accordance with areas of upper and lower surfaces of a glass plate to change a mounting position of the outer suction pad in each of the first to fourth arms, so that the outer suction pad can be disposed at an optimum position on the edge extending to the outside of the cut in the glass plate and area of upper and lower surfaces. As a result, the glass plate after the cutting can be safely conveyed to the breaking area by preventing the edge of the glass plate, extending to the outside of the cut, from falling off during conveyance of the glass plate.

### Brief Description of Drawings

Fig. 1 is a side view of a glass plate processing system illustrated as an example.
Fig. 2 is a top view of a glass plate processing system.
Fig. 3 is a side view of a loading area.
Fig. 4 is a top view of a loading area.
Fig. 5 is a front view of a loading area.
Figs. 6(a) to 6(d) are respectively top views of suction pads of first to fourth glass plate holders illustrated as an example.
Fig. 7 is a top view of a cutting table and a grinding table.
Fig. 8 is a side view of a cutting table and a grinding table.
Fig. 9 is a diagram illustrating movement of a cutting table and a grinding table.
Fig. 10 is a side view of a cutting device as an example installed in a cutting area.
Fig. 11 is a front view of a cutting device.
Fig. 12 is a top view of a cutting device.
Fig. 13 is a top view of a breaking table.
Fig. 14 is a side view of a breaking table.
Fig. 15 is a side view of a breaking device.
Fig. 16 is a front view of a breaking device.
Fig. 17 is a top view of a breaking device.
Fig. 18 is an enlarged side view of a breaking device.
Fig. 19 is a side view of a grinding device as an example installed in a grinding area.
Fig. 20 is a front view of a grinding device.
Fig. 21 is a top view of a grinding device.
Fig. 22 is a top view of a glass plate positioned in a loading area.
Fig. 23 is a top view of a glass plate positioned according to a conventional positioning reference.

### Description of Embodiments

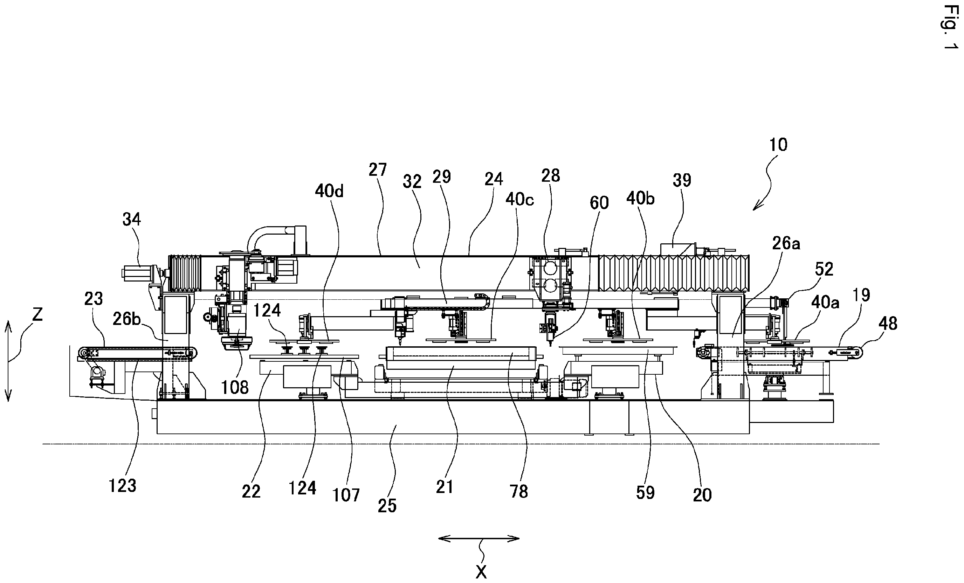

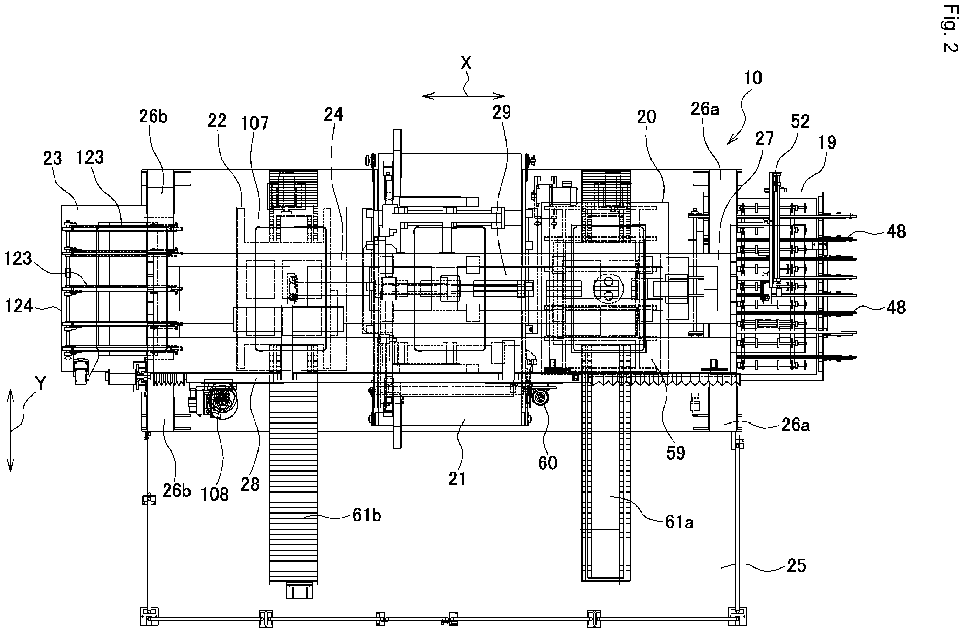

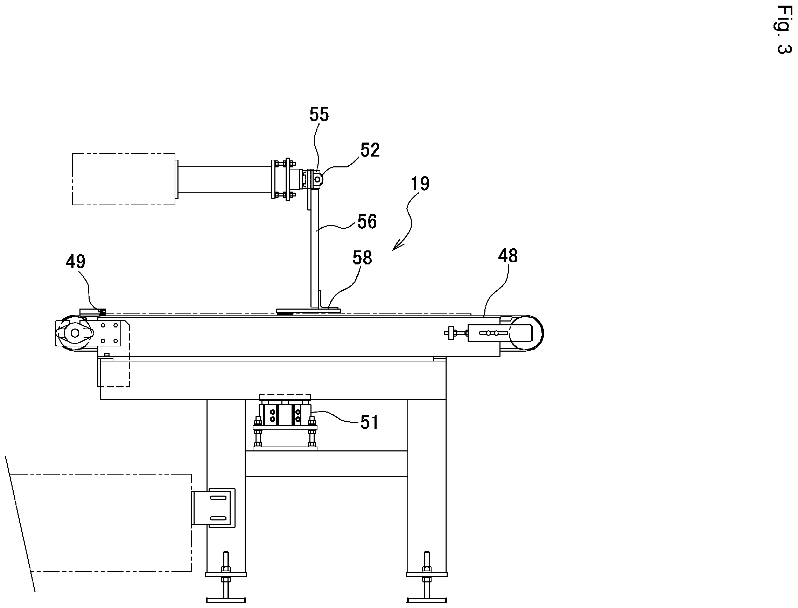

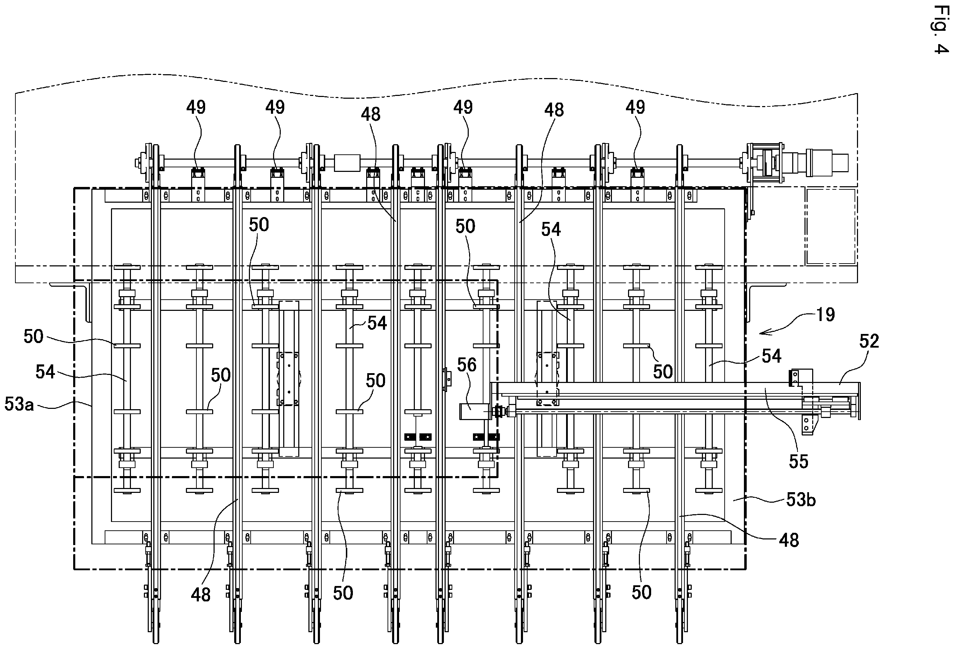

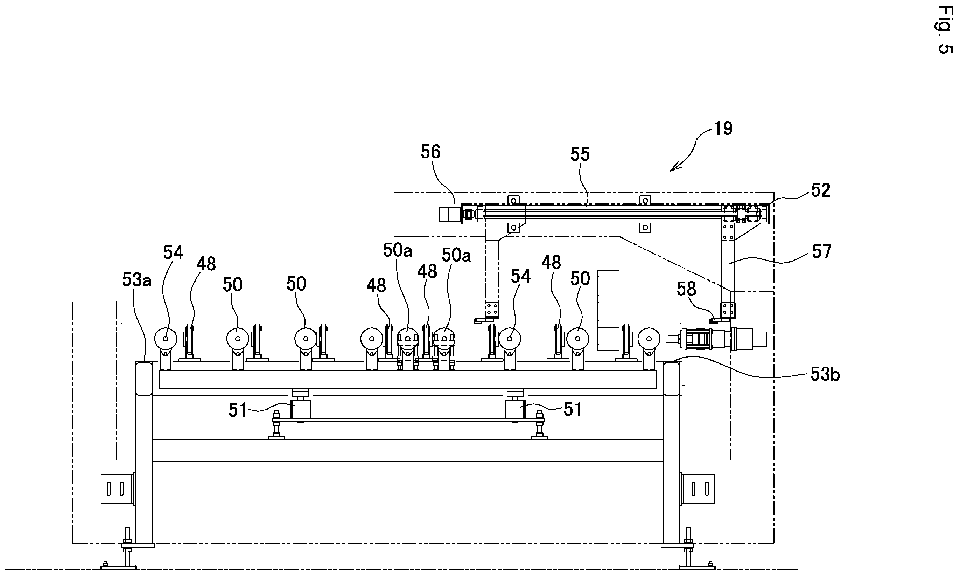

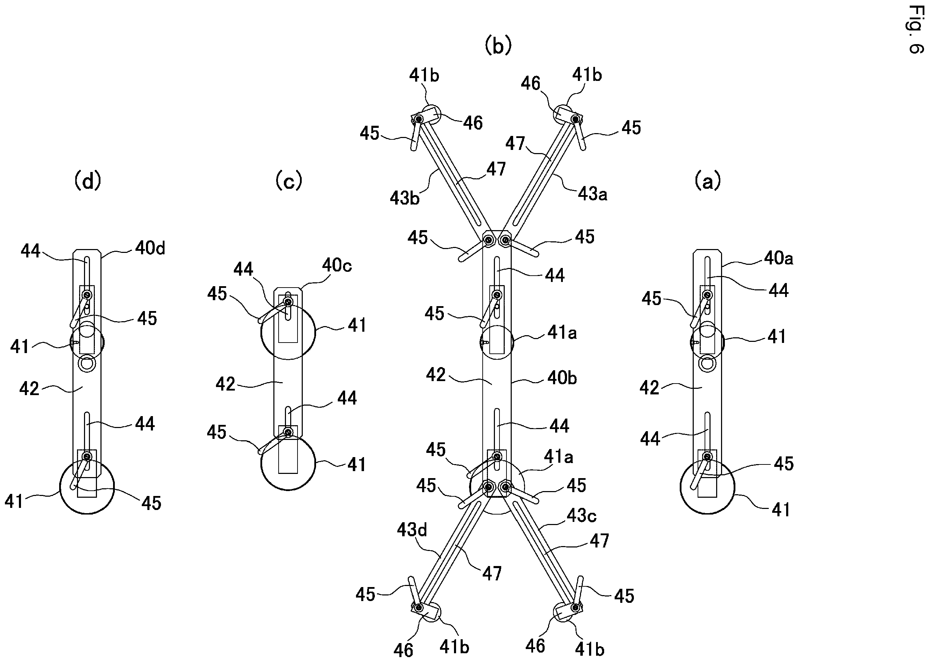

With reference to the accompanying drawings such as Fig. 1 that is a side view of a glass plate processing system 10 illustrated as an example, a glass plate processing system according to the present invention will be described in detail below. Fig. 2 is a top view of the glass plate processing system 10, and Fig. 3 is a side view of a loading area 19. Fig. 4 is a top view of the loading area 19, and Fig. 5 is a front view of the loading area 19. Figs. 6(a) to 6(d) are respectively top views of first to fourth glass plate holders 40a to 40d including corresponding suction pads 41, 41a, and 41b illustrated as an example. Figs. 1 and 2 each designate a front-rear direction (X-axis direction) indicated by an arrow X, a width direction (Y-axis direction) indicated by an arrow Y, and an up-down direction (Z-axis direction) indicated by an arrow Z.

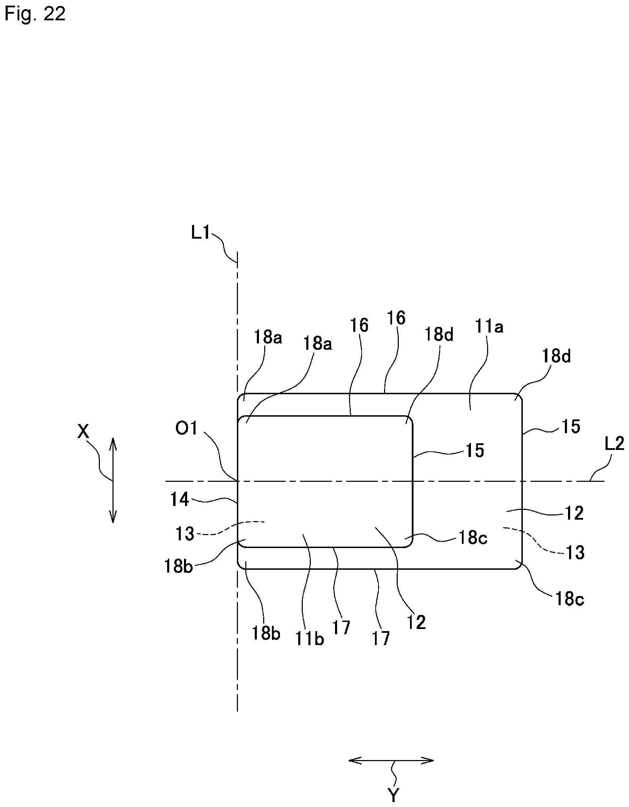

The glass plate processing system 10 processes glass plates 11a and 11b that each have an upper surface 12 with a predetermined area and a lower surface 13 with a predetermined area, and that each have a predetermined thickness, while being formed into a rectangle (quadrangle) with a planar shape long in the width direction (see Fig. 22). The glass plates 11a and 11b each have a first side edge 14 and a second side edge 15 that face each other at an interval in the width direction and extend in the front-rear direction, and a front end edge 16 and a rear end edge 17 that face each other at an interval in the front-rear direction and extend in the width direction. The glass plates 11a and 11b each have four corners (first to fourth corners 18a to 18d) that are chamfered. The glass plate may have a planar shape formed into a polygon other than a rectangle (quadrangle) or may be formed with each edge in a curved shape.

The glass plate processing system 10 performs cutting, breaking, and grinding on the glass plates 11a and 11b (plate-shaped glasses) to be processed and different in size and in area of the upper and lower surfaces 12 and 13, the glass plates to be processed ranging from the glass plate 11a of a large size (large area) with the upper surface 12 and the lower surface 13 of a large area to the glass plate 11b of a small size (small area) with the upper surface 12 and the lower surface 13 of a small area. The glass plate processing system 10 is controlled by a controller (control device) that is not illustrated. The controller is a computer that includes a central processing unit (CPU or MPU) and a memory (a main memory and a cache memory) and is operated by an independent operating system (virtual OS), and includes a built-in large-capacity hard disk (mass storage area). The controller is connected to an input device (not illustrated) such as a keyboard or a numeric keypad unit, and an output device (not illustrated) such as a monitor, a display, or a touch panel.

The large-capacity hard disk (large-capacity storage area) of the controller stores a plurality of pieces of coordinate data (coordinates of the side edges 14 and 15 of the glass plates 11a and 11b, coordinates of the front and rear end edges 16 and 17, coordinates of the first to fourth corners 18a to 18d, coordinates of centers of the glass plates 11a and 11b, and the like) on each of the glass plates 11a and 11b, which is different depending on a name and a product number of each of the glass plates 11a and 11b to be processed, and a size (area) and a shape of each of the glass plates 11a and 11b to be processed, and image data (planar images (six-sided images) and stereoscopic images (3D images)) on each of the glass plates 11a and 11b to be processed, while associating them with glass plate specific information (glass plate specific identifiers) for specifying the glass plates 11a and 11b. As the glass plate specific information, production numbers, serial numbers, and the like of the glass plates 11a and 11b are used. Alternatively, the controller may generate a unique identifier for specifying the glass plates 11a and 11b, and the generated identifier can be used as the glass plate specific information.

The controller controls a cutting device 60 and a breaking device 79 to be described later by NC control using the coordinate data on each of the glass plates 11a and 11b stored in the large-capacity hard disk in cutting in (cutting) in a cutting in (cutting) area 20 and grinding in a grinding area 22 to be described later. The controller in the NC control converts a position where coordinate processing (XY plane coordinates) is started and a change position of a processing direction into numbers with coordinates, and converts operation direction, distance, and speed in two axes of an X-axis (front-rear direction) and a Y-axis (width direction) into numbers. Signals obtained by converting command coordinates and the axes into numbers are transmitted (input) to the cutting device 60 and the breaking device 79. The NC control accurately represents a shape to be processed by repeating "coordinate → axis → command".

The glass plate processing system 10 includes: a loading area 19 (processing start area) in which the glass plates 11a and 11b before processing are loaded; an unloading area 23 (processing end area) from which the glass plates 11a and 11b after the processing are unloaded; a plurality of processing areas 20 to 22 that are disposed (provided) between the loading area 19 and the unloading area 23 to process the glass plates 11a and 11b; and a conveyance mechanism 24 that sequentially conveys the glass plates 11a and 11b from the loading area 19 to the processing areas 20 to 22, and the unloading area 23 in order from backward (upstream) to forward (downstream) in the front-rear direction, and that also moves the cutting device 60 and a grinding device 108 in the front-rear direction. The processing areas 20 to 22 are disposed side by side at an interval between the loading area 19 and the unloading area 23 in the front-rear direction while facing each other in the front-rear direction.

The processing areas 20 to 22 include a cutting area 20 located forward (downstream) the loading area 19 in the front-rear direction and separated forward from the loading area 19 by a predetermined dimension, a breaking area 21 located forward (downstream) the cutting area 20 in the front-rear direction and separated forward from the cutting area 20 by a predetermined dimension, and a grinding area 22 located forward (downstream) the breaking area 21 in the front-rear direction and separated forward from the breaking area 21 by a predetermined dimension. The cutting area 20, the breaking area 21, and the grinding area 22 are formed on a system base 25 (machine base) formed in a rectangular shape elongated in the front-rear direction.

The conveyance mechanism 24 includes a pair of first pillars 26a located on a rear part of the system base 25 and extending in the up-down direction, a pair of second pillars 26b located on a front part of the system base 25 and extending in the up-down direction, a fixed frame 27 located between the first and second pillars 26a and 26b and extending in the front-rear direction, a first moving means 28 formed in one side part of the fixed frame 27, and a second moving means 29 formed below the fixed frame 27.

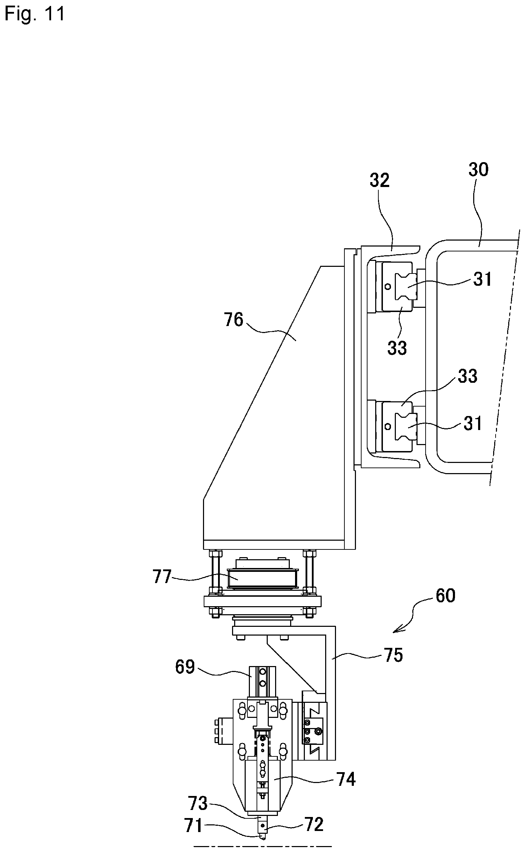

The first moving means 28 moves the cutting device 60 and the grinding device 108 forward and backward (linearly) in the front-rear direction (X-axis direction). The first moving means 28 includes a first guide frame 30, a pair of first guide rails 31, a first feed screw (ball screw) that is not illustrated, a first traveling frame 32, a plurality of first slide blocks (housing nuts) that is not illustrated, a pair of first guide shoes 33, and a first servomotor 34 (see Fig. 11). The first guide frame 30 is installed on the fixed frame 27 while extending in the front-rear direction. The first guide rails 31 face each other at an interval in the up-down direction, and are fixed to one side part of the first guide frame 30 with a predetermined fixing means while extending in the front-rear direction. The first feed screw (ball screw) is located between the first guide rails 30, and is rotatably supported by a plurality of bearings (not illustrated) fixed to the one side part of the first guide frame 30 while extending in the front-rear direction.

The first traveling frame 32 is located in the one side part of the first guide frame 30 while extending in the front-rear direction. The first slide blocks (housing nuts) are arranged side by side at a predetermined interval in the front-rear direction, and are fixed to the facing surface of the first traveling frame 32 facing the first guide frame 30 with a predetermined fixing means. The first guide shoes 33 face each other at an interval in the up-down direction, and are fixed to the facing surface of the first traveling frame 32, the facing surface facing the first guide frame 30, with a predetermined fixing means while extending in the front-rear direction.

The first servomotor 34 is located at a front end of the first guide frame 30 and is connected to the second pillar 26b with a bracket. The first servomotor 34 includes a shaft that is connected and fixed to the other end of the first feed screw. Start and stop, and the number of revolutions of the first servomotor 34 are controlled by a control unit connected to the controller via an interface (wired or wireless) that is not illustrated. The control unit of the first servomotor 34 drives the first servomotor 34 at a predetermined number of revolutions and rotational speed when receiving a drive signal from the controller, and stops the drive of the first servomotor 34 when receiving a stop signal from the controller. The first feed screw is rotated by the rotation of the first servomotor 34, and the cutting device 60 and the grinding device 108 are moved forward and backward (linearly moved) in the front-rear direction (X-axis direction) by the rotation of the first feed screw.

When the shaft of the first servomotor 34 rotates in a counterclockwise direction, the first feed screw rotates in the counterclockwise direction. The rotation of the first feed screw in the counterclockwise direction causes the first slide block to move from forward to backward in the front-rear direction on the first guide frame 30. The movement of the first slide block causes the first traveling frame 32 to move from forward to backward in the front-rear direction on the first guide frame 30. Conversely, when the shaft of the first servomotor 34 rotates in a clockwise direction, the first feed screw rotates in the clockwise direction. The rotation of the first feed screw in the clockwise direction causes the first slide block to move from backward to forward in the front-rear direction on the first guide frame 30. The movement of the first slide block causes the first traveling frame 32 to move from backward to forward in the front-rear direction on the first guide frame 30.

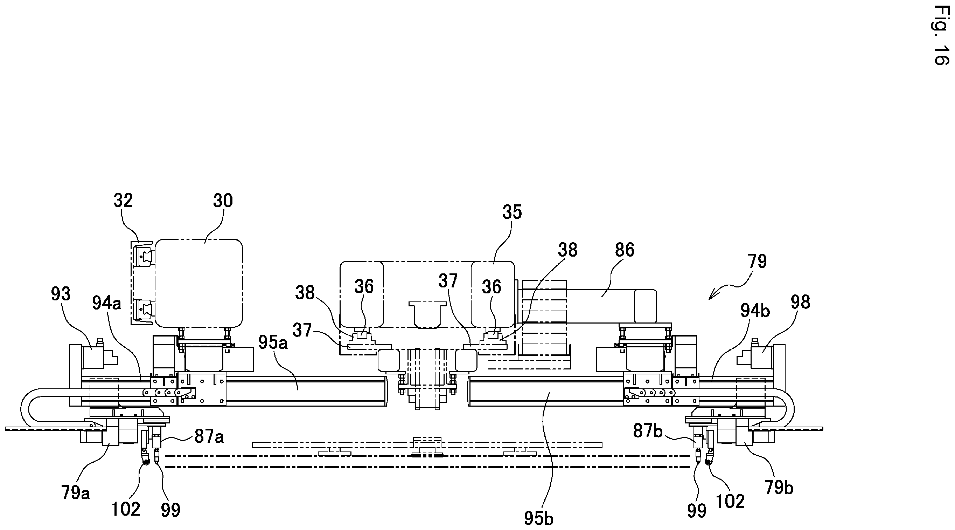

The second moving means 29 moves the first to fourth glass plate holders 40a to 40d described later forward and backward (linearly) in the front-rear direction (X-axis direction). The second moving means 29 includes a second guide frame 35, a pair of second guide rails 36, a second feed screw (ball screw) that is not illustrated, a second traveling frame 37, a plurality of second slide blocks (housing nuts) that is not illustrated, a pair of second guide shoes 38, a second servomotor 39, and first to fourth glass plate holders 40a to 40d (first to fourth glass plate lifters) (see Fig. 16). The second guide frame 35 is installed on the fixed frame 27 while extending in the front-rear direction. The second guide rails 36 face each other at an interval in the width direction, are fixed to a lower part of the second guide frame 35 with a predetermined fixing means while extending in the front-rear direction. The second feed screw (ball screw) is located between the second guide rails 36, and is rotatably supported by a plurality of bearings (not illustrated) fixed to a lower part of the second guide frame 35 while extending in the front-rear direction.

The second traveling frame 37 is located below the second guide frame 35 while extending in the front-rear direction. The second slide blocks (housing nuts) are disposed side by side at a predetermined interval in the width direction, and are fixed to a facing surface of the second traveling frame 37, the facing surface facing the second guide frame 35, with a predetermined fixing means. The second guide shoes 38 face each other at an interval in the width direction, and are fixed to the facing surface of the second traveling frame 37, facing the second guide frame 35, with a predetermined fixing means while extending in the front-rear direction.

The second servomotor 39 is located at a rear end of the second guide frame 35 and is fixed to the fixed frame 27. The second servomotor 39 includes a shaft that is connected and fixed to one end of the second feed screw with a timing belt (and/or a gear). Start and stop, and the number of revolutions of the second servomotor 39 are controlled by a control unit connected to the controller via an interface (wired or wireless) that is not illustrated. The control unit of the second servomotor 39 drives the second servomotor 39 at a predetermined number of revolutions and rotational speed when receiving a drive signal from the controller, and stops the drive of the second servomotor 39 when receiving a stop signal from the controller. The second feed screw is rotated by the rotation of the second servomotor 39, and the first to fourth glass plate holders 40a to 40d are moved forward and backward (linearly moved) in the front-rear direction (X-axis direction) by the rotation of the second feed screw.

When the shaft of the second servomotor 39 rotates in the clockwise direction, the second feed screw rotates in the clockwise direction. The rotation of the second feed screw in the clockwise direction causes the second slide block to move from forward to backward in the front-rear direction on the second guide frame 35. The movement of the second slide block causes the second traveling frame 37 (first to fourth glass plate holders 40a to 40d) to move from backward to forward in the front-rear direction on the second guide frame 35. Conversely, when the shaft of the second servomotor 39 rotates in the counterclockwise direction, the second feed screw rotates in the counterclockwise direction. The rotation of the second feed screw in the counterclockwise direction causes the second slide block to move from forward to backward in the front-rear direction on the second guide frame 35. The movement of the second slide block causes the second traveling frame 37 (first to fourth glass plate holders 40a to 40d) to move from forward to backward in the front-rear direction on the second guide frame 35.

The first to fourth glass plate holders 40a to 40d are attached to a lower part of the second traveling frame 37 and extend downward from the traveling frame 37. The first to fourth glass plate holders 40a to 40d are disposed at equal intervals in the front-rear direction. The first to fourth glass plate holders 40a to 40d each include a suction pad 41 that sucks and holds the glass plates 11a and 11b, a pad mounting plate 42 extending in the front-rear direction, a first arm 43a to a fourth arm 43d (only second holder 40b), a vacuum mechanism (air suction device, or air vacuum pump) that is not illustrated, and an air cylinder (second lifting device) that is not illustrated. Start and stop of the vacuum mechanism and the air cylinder are controlled by a control unit connected to the controller via an interface (wired or wireless) that is not illustrated.

The first glass plate holder 40a, the third glass plate holder 40c, and the fourth glass plate holder 40d each include two suction pads 41 attached to the pad mounting plate 42 as illustrated in the corresponding one of Figs. 5(a), 5(c), and 5(d). Three or more suction pads 41 may be attached to the pad mounting plate 42. The pad mounting plate 42 is provided with first and second slits 44 extending in the front-rear direction or the width direction, and the suction pads 41 are fixed using the corresponding first and second slits 44 and respective handle screws 45.

The suction pads 41 can be changed in mounting position in the front-rear direction or the width direction in the corresponding first and second slits 44 (pad mounting plate 42) in each of the first glass plate holder 40a, the third glass plate holder 40c, and the fourth glass plate holder 40d. To change the mounting position of the suction pad 41, the handle screw 45 is rotated in the counterclockwise direction to release the suction pad 41 fixed in the corresponding one of the first and second slits 44. Then, the suction pad 41 is moved (mounting position is changed) in the front-rear direction or the width direction. and the handle screw 45 is rotated in the clockwise direction to fix the suction pad 41 to the corresponding one of the first and second slits 44 (pad mounting plate 42).

The suction pads 41 of the second glass plate holder 40b include an inner suction pad 41a and an outer suction pad 41b as illustrated in Fig. 5(b). The inner suction pad 41a sucks and holds a part of each of the glass plates 11a and 11b, the part extending inward of a cut formed in an edge e (peripheral part) of the corresponding one of the glass plates 11a and 11b by the cutting device 60 (cutter wheel 71). The outer suction pad 41b sucks and holds the edge e of each of the glass plates 11a and 11b, the edge e extending outward of the cut formed in the edge e (peripheral part) of the corresponding one of the glass plates 11a and 11b by the cutting device 60 (cutter wheel 71).

Two inner suction pads 41a are attached to the pad mounting plate 42. Three or more inner suction pads 41a may be attached to the pad mounting plate 42. The pad mounting plate 42 is provided with the first and second slits 44 extending in the front-rear direction or the width direction, and the inner suction pads 41a are fixed in the corresponding first and second slits 44 using respective handle screws 45.

The inner suction pads 41a can be changed in mounting position in the front-rear direction or the width direction in the corresponding first and second slits 44 (pad mounting plate 42) in the second glass plate holder 40b. To change the mounting position of the inner suction pad 41a, the handle screw 45 is rotated in the counterclockwise direction to release the inner suction pad 41a fixed in the corresponding one of the first and second slits 44. Then, the inner suction pad 41a is moved (mounting position is changed) in the front-rear direction or the width direction, and the handle screw 45 is rotated in the clockwise direction to fix the inner suction pad 41a to the corresponding one of the first and second slits 44 (pad mounting plate 42).

Each of the first and second arms 43a and 43b of the second glass plate holder 40b has a base end that is rotatably attached to a front end or one end of the pad mounting plate 42, and extends in the front-rear direction or the width direction while being inclined at a predetermined angle toward corresponding one of one side and the other side (with respect to the axis of the pad mounting plate 42) in the width direction or the front-rear direction. The first and second arms 43a and 43b are each fixed to the front end or the one end of the pad mounting plate 42 with the handle screw 45. The first and second arms 43a and 43b can be changed in turn angle with respect to the axis of the pad mounting plate 42. To change the turn angle of each of the first and second arms 43a and 43b, the handle screw 45 is rotated in the counterclockwise direction to release the corresponding one of the first and second arms 43a and 43b fixed at the front end or the one end of the pad mounting plate 42. Then, each of the first and second arms 43a and 43b is turned, and the handle screw 45 is rotated in the clockwise direction to fix each of the first and second arms 43a and 43b to the front end or the one end of the pad mounting plate 42.

The first and second arms 43a and 43b are each provided with one outer suction pad 41b attached with an attachment plate 46. Two or more outer suction pads 41b may be attached to each of the first and second arms 43a and 43b. The first and second arms 43a and 43b are each provided with a slit 47 extending in the front-rear direction or the width direction, and the outer suction pad 41b is fixed in the slit 47 using the handle screw 45. The outer suction pad 41b can be changed in mounting position in the front-rear direction or the width direction in the slit 47 in each of the first and second arms 43a and 43b, and can be turned in the horizontal direction in the slit 47 in each of the first and second arms 43a and 43b. To change the mounting position of the outer suction pad 41b and turn the outer suction pad 41b, the handle screw 45 is rotated in the counterclockwise direction to release the outer suction pad 41b fixed in the slit 47 in each of the first and second arms 43a and 43b. Then, the outer suction pad 41b is moved (the mounting position is changed) in the front-rear direction or the width direction, and the outer suction pad 41b is turned together with the attachment plate 46 about the axis of the handle screw 45. The handle screw 45 is then rotated in the clockwise direction to fix the outer suction pad 41b in the slit 47 in each of the first and second arms 43a and 43b.

Each of the third and fourth arms 43c and 43d of the second glass plate holder 40b has a base end that is rotatably attached to a rear end or the other end of the pad mounting plate 42, and extends in the front-rear direction or the width direction while being inclined at a predetermined angle toward corresponding one of one side and the other side (with respect to the axis of the pad mounting plate 42) in the width direction or the front-rear direction. The third and fourth arms 43c and 43d are each fixed to the rear end or the other end of the pad mounting plate 42 with the handle screw 45. The third and fourth arms 43c and 43d can be changed in turn angle with respect to the axis of the pad mounting plate 42. To change the turn angle of each of the third and fourth arms 43c and 43d, the handle screw 45 is rotated in the counterclockwise direction to release the corresponding one of the third and fourth arms 43c and 43d fixed at the rear end or the other end of the pad mounting plate 42. Then, each of the third and fourth arms 43c and 43d is turned, and the handle screw 45 is rotated in the clockwise direction to fix each of the third and fourth arms 43c and 43d to the rear end or the other end of the pad mounting plate 42.

The third and fourth arms 43c and 43d are each provided with one outer suction pad 41b attached with an attachment plate 46. Two or more outer suction pads 41b may be attached to each of the third and fourth arms 43c and 43d. The third and fourth arms 43c and 43d are each provided with a slit 47 extending in the front-rear direction or the width direction, and the outer suction pad 41b is fixed in the slit 47 using the handle screw 45. The outer suction pad 41b can be changed in mounting position in the front-rear direction or the width direction in the slit 47 in each of the third and fourth arms 43c and 43d, and can be turned in the horizontal direction in the slit 47 in each of the third and fourth arms 43c and 43d. To change the mounting position of the outer suction pad 41b and turn the outer suction pad 41b, the handle screw 45 is rotated in the counterclockwise direction to release the outer suction pad 41b fixed in the slit 47 in each of the third and fourth arms 43c and 43d. Then, the outer suction pad 41b is moved (the mounting position is changed) in the front-rear direction or the width direction, and the outer suction pad 41b is turned together with the attachment plate 46 about the axis of the handle screw 45. The handle screw 45 is then rotated in the clockwise direction to fix the outer suction pad 41b in the slit 47 in each of the third and fourth arms 43c and 43d.

The glass plate processing system 10 causes the glass plates 11a and 11b to be sucked and held by the two suction pads 41 disposed side by side in the front-rear direction or the width direction on the pad mounting plate 42, so that the glass plates 11a and 11b can be reliably held by the suction pads 41. The glass plate processing system 10 moves the suction pads 41 outward in the front-rear direction or outward in the width direction on the pad mounting plate 42 to increase a distance between the suction pads 41 in the front-rear direction or the width direction for the glass plate 11a of a large size (large area) with the upper and lower surfaces 12 and 13 of a large area, and moves the suction pads 41 inward in the front-rear direction or inward in the width direction to reduce the distance between the suction pads 41 in the front-rear direction or the width direction for the glass plate 11b of a small size (small area) with the upper and lower surfaces 12 and 13 of a small area, and thus changing the suction pads 41 in mounting position in the front-rear direction or the width direction on the pad mounting plate 42 in accordance with the areas of the upper and lower surfaces 12 and 13 of each of the glass plates 11a and 11b. This configuration enables the suction pads 41 to be disposed at respective optimal positions on the glass plates 11a and 11b different in area of the upper and lower surfaces 12 and 13, and thus enabling the glass plates 11a and 11b different in area of the upper and lower surfaces 12 and 13 can be reliably conveyed to each of the processing areas 20 to 22 by the conveyance mechanism 24.

The glass plate processing system 10 causes the inner suction pads 41a provided on the pad mounting plate 42 to suck and hold a part of each of the glass plates 11a and 11b, the part extending inward of the cut, and causes the outer suction pad 41b provided on each of the first to fourth arms 43a to 43d to suck and hold the edge e of each of the glass plates 11a and 11b, the edge e extending outward of the cut. Thus, the edge e of each of the glass plates 11a and 11b, extending outward of the cut, is prevented from inadvertently falling off during conveyance of the glass plates 11a and 11b, so that the glass plates 11a and 11b after the cutting can be safely conveyed to the breaking area 21.

The glass plate processing system 10 changes the turn angles of the first to fourth arms 43a to 43d with respect to the pad mounting plate 42 in accordance with the areas of the upper and lower surfaces 12 and 13 of the glass plates 11a and 11b to change the mounting positions of the outer suction pads 41b in the first to fourth arms 43a to 43d. Then, the outer suction pads 41b are turned in the horizontal direction with respect to the corresponding first to fourth arms 43a to 43d, so that the outer suction pads 41b can be disposed at optimal positions on the edge e extending outward of the cut of each of the glass plates 11a and 11b different in area of the upper and lower surfaces 12 and 13. As a result, the glass plates 11a and 11b after the cutting can be safely conveyed to the breaking area 21 while the edge e of each of the glass plates 11a and 11b, extending outward of the cut thereof, is prevented from falling off during conveyance of the glass plates 11a and 11b.

The first glass plate holder 40a of the first to fourth glass plate holders 40a to 40d reciprocates in the front-rear direction between the loading area 19 and the cutting area 20 to advance from the loading area 19 toward the cutting area 20 and retreat from the cutting area 20 toward the loading area 19. The second glass plate holder 40b reciprocates in the front-rear direction between the cutting area 20 and the breaking area 21 to advance from the cutting area 20 toward the breaking area 21 and retreat from the breaking area 21 toward the cutting area 20. The third glass plate holder 40c reciprocates in the front-rear direction between the breaking area 21 and the grinding area 22 to advance from the breaking area 21 toward the grinding area 22 and retreat from the grinding area 22 toward the breaking area 21. The fourth glass plate holder 40d reciprocates in the front-rear direction between the grinding area 22 and the unloading area 23 to advances from the grinding area 22 toward the unloading area 23 and retreat from the unloading area 23 toward the grinding area 22.

The loading area 19 includes a loading conveyor 48, a stopper 49, a roller 50, a pair of lifting mechanisms 51 (first lifting mechanism), and a moving mechanism 52 (third moving mechanism). The loading area 19 is supported by legs extending upward from a floor surface of the system base 25. The loading area 19 is configured such that the first positioning means and the second positioning means are performed to position the glass plates 11a and 11b that advance toward each of the processing areas 20 to 22.

The loading area 19 includes a first side edge part 53a on one side in which a first positioning reference L1 (first virtual positioning reference line) extending in the front-rear direction and a second positioning reference L2 (second virtual positioning reference line) extending in the width direction are set (see Fig. 22). The first positioning reference L1 is a virtual line extending straight in the front-rear direction and being imagined based on an outermost edge located outermost in the width direction in the first side edge 14 of the glass plate 11a (glass plate to be processed first) of a large size (large area), the first side edge 14 extending in the front-rear direction on one side in the width direction. For example, when the first side edge 14 on the one side of each of the glass plates 11a and 11b is formed in a curved shape, the outermost edge is a vertex of the curve, located outermost in the width direction. When the first side edge 14 of each of the glass plates 11a and 11b extends straight in the front-rear direction, the first side edge 14 is the outermost edge.

On the first positioning reference L1, the outermost edge located outermost in the width direction of the first side edge 14 extending in the front-rear direction on the first side in the width direction of each of the glass plates 11a and 11b is located. Here, positioning the outermost edge on the first positioning reference L1 includes not only a case where the outermost edge completely coincides with the first positioning reference L1, but also a case where the outermost edge is located near (nearest) the first positioning reference L1 inward in the width direction, and a case where the outermost edge is located near (nearest) the first positioning reference L1 outward in the width direction.

On the second positioning reference L2, a center O1 (center line L2 extending in the width direction, while dividing each of the glass plates 11a and 11b in dimension into two regions in the front-rear direction) in the front-rear direction of the first side edge 14 extending in the front-rear direction on the first side in the width direction of each of the glass plates 11a and 11b is located. Here, positioning the center O1 in the front-rear direction (center line L2) on the second positioning reference L2 includes not only a case where the center O1 in the front-rear direction (center line L2) completely coincides with the second positioning reference L2, but also a case where the center O1 in the front-rear direction (center line L2) is located near (nearest) the second positioning reference L2 forward in the front-rear direction, and a case where the center O1 in the front-rear direction (center line L2) is located near (nearest) the second positioning reference L2 backward in the front-rear direction.

The controller (glass plate processing system 10) calculates a dimension in the width direction of each of the glass plates 11a and 11b using the coordinate data on each of the glass plates 11a and 11b stored in the large-capacity hard disk to determine not only the first moving dimension (first moving distance) in the width direction for positioning the first side edge 14 of each of the glass plates 11a and 11b on the first positioning reference L1 (first virtual positioning reference line) in accordance with a difference in the calculated dimension in the width direction (Y-axis direction) of each of the glass plates 11a and 11b, but also the number of revolutions of a shaft of a third servomotor 56 (number of revolutions of a shaft for moving the glass plates 11a and 11b by the first moving dimension (first moving distance) in the width direction) based on the determined first moving dimension. The controller (glass plate processing system 10) stores the determined first moving dimension and the determined number of revolutions of the shaft of the third servomotor 56 in the large-capacity hard disk while associating them with the glass plate specific information (glass plate specific identifier) on each of the glass plates 11a and 11b.

The controller (glass plate processing system 10) calculates a dimension in the front-rear direction (X-axis direction) of each of the glass plates 11a and 11b using the coordinate data on each of the glass plates 11a and 11b stored in the large-capacity hard disk to determine a second moving dimension of the loading conveyor 48 backward in the front-rear direction of the second moving dimension for locating the center O1 in the front-rear direction of the first side edge 14 of each of the glass plates 11a and 11b on the second positioning reference L2 (second virtual positioning reference line) in accordance with a difference in the calculated dimension in the front-rear direction of each of the glass plates 11a and 11b. The controller (glass plate processing system 10) stores the determined second moving dimension in the large-capacity hard disk while associating it with the glass plate specific information (glass plate specific identifier) on each of the glass plates 11a and 11b.

The controller (glass plate processing system 10) calculates a moving dimension (moving distance) of the cutting device 60 and the grinding device 108 in the front-rear direction based on the calculated dimension of each of the glass plates 11a and 11b in the front-rear direction to determine the number of revolutions of the shaft of the first servomotor 34 (the number of revolutions of the shaft for moving the cutting device 60 and the grinding device 108 in the front-rear direction by the moving dimension (moving distance)) based on the calculated moving dimension. The controller (glass plate processing system 10) stores the determined moving dimension and the determined number of revolutions of the shaft of the first servomotor 34 in the large-capacity hard disk while associating them with the glass plate specific information (glass plate specific identifier) on each of the glass plates 11a and 11b. The moving dimension (moving distance) of each of the first glass plate holder 40a to the fourth glass plate holder 40d in the front-rear direction is stored in the large-capacity hard disk while associating it with the glass plate specific information (glass plate specific identifier) on each of the glass plates 11a and 11b.

As illustrated in Figs. 3 to 5, the loading conveyor 48 is one of loading conveyors 48 of multiple endless tracks that extend in the front-rear direction (X-direction), and that are disposed side by side at predetermined intervals in the width direction (Y-direction). Start and stop, and a conveyance distance of each of the loading conveyors 48 are controlled by a control unit connected to the controller via an interface (wired or wireless) that is not illustrated. The loading conveyors 48 convey the glass plate 11a and 11b from backward to forward in the front-rear direction from a rear end (loading port) toward a front end (unloading port) of the loading area 19. Stoppers 49 are provided at the front end of the loading area 19 and are disposed side by side at intervals in the width direction. The stoppers 49 come into contact with the front end edge 16 of each of the glass plates 11a and 11b moving forward from the rear end toward the front end of the loading area 19 using the loading conveyors 48. The stoppers 49 are each provided with a contact sensor (not illustrated). The contact sensor is connected to the controller and detects the contact of the front end edge 16 of the corresponding one of the glass plates 11a and 11b with the stopper 49. The contact sensor transmits a contact signal to the controller when detecting the contact of the front end edge 16 with the stopper 49.

The roller 50 is one of rollers 50 that are rotatably attached to respective shafts 54 extending in the front-rear direction, and are installed between the corresponding loading conveyors 48 together with the respective shafts 54. The rollers 50 are disposed side by side at predetermined intervals in the front-rear direction and are disposed side by side at predetermined intervals in the width direction. The rollers 50 rotate clockwise and counterclockwise in the width direction, and come into contact with the lower surface 13 of corresponding one of the glass plates 11a and 11b to hold the glass plates 11a and 11b in a movable manner in the width direction. The shafts 54 are attached to a pedestal located below the shafts with bearings.

The rollers 50 includes a roller 50a and a resistance plate (rubber ring) that is not illustrated and increases rotation resistance of the roller 50a, the resistance plate being attached between the roller 50a and the corresponding one of the shafts 54. The resistance plate (rubber ring) increases resistance of the roller 50a to the shaft 54, so that the roller 50a does not rotate unless a rotational force exceeding the rotation resistance is applied to the roller 50a, and thus free rotation of the roller 50a is prevented by the resistance plate. When the glass plates 11a and 11b are placed on the rollers 50, free movement of the glass plates 11a and 11b in the width direction is prevented by the roller 50a having a large rotation resistance. The resistance plate (rubber ring) may be attached between at least one of the rollers 50 and the shaft 54.

Lifting mechanisms 51 (first lifting mechanisms) are installed below the pedestal to which the shafts 54 are attached, and are disposed side by side at a predetermined interval in the width direction. The lifting mechanisms 51 are formed using respective air cylinders, and the shafts 54 and the rollers 50 are raised and lowered in the vertical direction together with the pedestal by the air cylinders. The air cylinders each have a raising dimension and a lowering dimension that are set in advance. Start and stop of the air cylinders (lifting mechanisms 51) are controlled by a control unit connected to the controller via an interface (wired or wireless) that is not illustrated. When receiving a lifting signal from the controller, the control unit of the air cylinders (lifting mechanisms 51) raises and lowers the air cylinders.

While the loading conveyors 54 convey the glass plates 11a and 11b, the rollers 50 (the pedestal and the shafts 54) are lowered below the loading conveyors 54 by the air cylinders (lifting mechanisms 51), and thus the rollers 50 are not in contact with the lower surfaces 13 of the glass plates 11a and 11b. When the rollers 50 (the pedestal and the shafts 54) are raised by the air cylinders (the lifting mechanisms 51), a part of a peripheral part of each of the rollers 54 is exposed to above the loading conveyors 48, and then the glass plates 11a and 11b are raised to above the loading conveyors 48 by the rollers 50.

The moving mechanism 52 (third moving mechanism) includes a rod 55 located above the loading conveyors 48 and the rollers 50, a third servomotor 56 (servomotor) installed (built in) to the rod 55, a feed screw (feed screw mechanism) that is not illustrated and is installed (built in) to the rod 55 while being connected to a shaft of the third servomotor 56, a moving arm 57 extending downward from the rod 55, and a contact member 58 installed at a lower end of the moving arm 57. Start and stop, the number of revolutions, and a rotation speed of the third servomotor 56 (moving mechanism) are controlled by a control unit connected to the controller via an interface (wired or wireless) that is not illustrated. The control unit of the third servomotor 56 drives the third servomotor 56 at a predetermined number of revolutions and rotational speed when receiving a drive signal from the controller, and stops the drive of the third servomotor 56 when receiving a stop signal from the controller.

The rod 55 is attached to a rear surface of a first pillar 26a while extending in the width direction. The moving arm 57 is movably installed on the feed screw, and is linearly moved to one side and the other side in the width direction along the rod 55 by rotation of the feed screw caused by rotation of the shaft of the third servomotor 56. The contact member 58 is linearly moved to the one side and the other side in the width direction together with the moving arm 57 along with the movement of the moving arm 57 in the width direction. The contact member 58 comes into contact with the second side edge 15 of the corresponding one of the glass plates 11a and 11b while the rollers 50 raised by the air cylinders (lifting mechanisms 51) are in contact with the lower surface 13 of the corresponding one of the glass plates 11a and 11b, and presses the corresponding one of the glass plates 11a and 11b in the width direction to move the glass plates 11a and 11b in the width direction.

Besides the third servomotor 56, a linear motor (linear motion motor) may be used, and the linear motor (moving mechanism) may be installed to the rod 55. When the linear motor is installed to the rod 55, the linear motor moves along the rod 55 to one side and the other side in the width direction, and the moving arm 57 and the contact member 58 are accordingly moved to the one side and the other side in the width direction. Start and stop, and a moving distance of the linear motor (moving mechanism) are controlled by a control unit connected to the controller via an interface (wired or wireless) that is not illustrated.

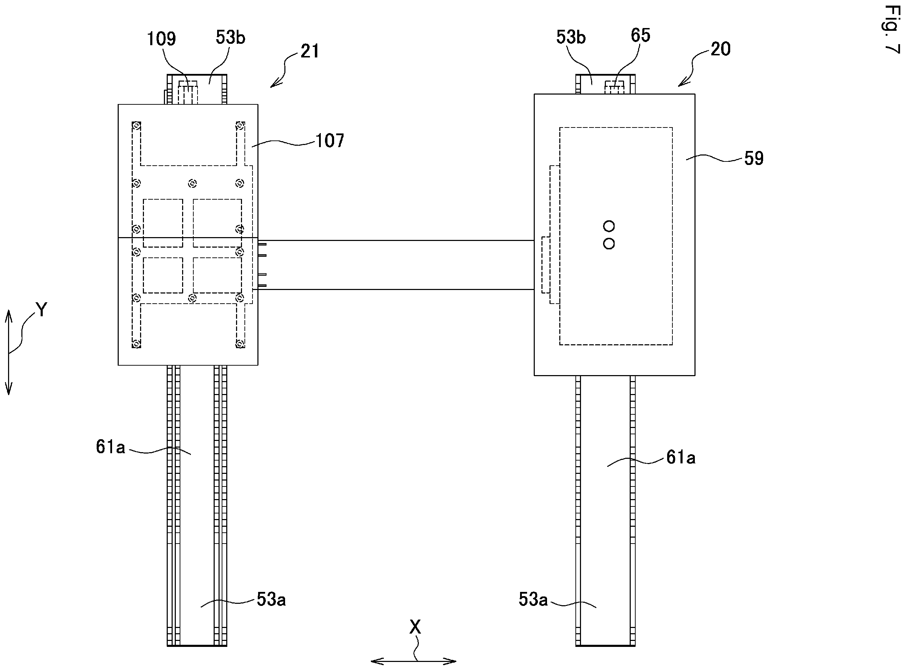

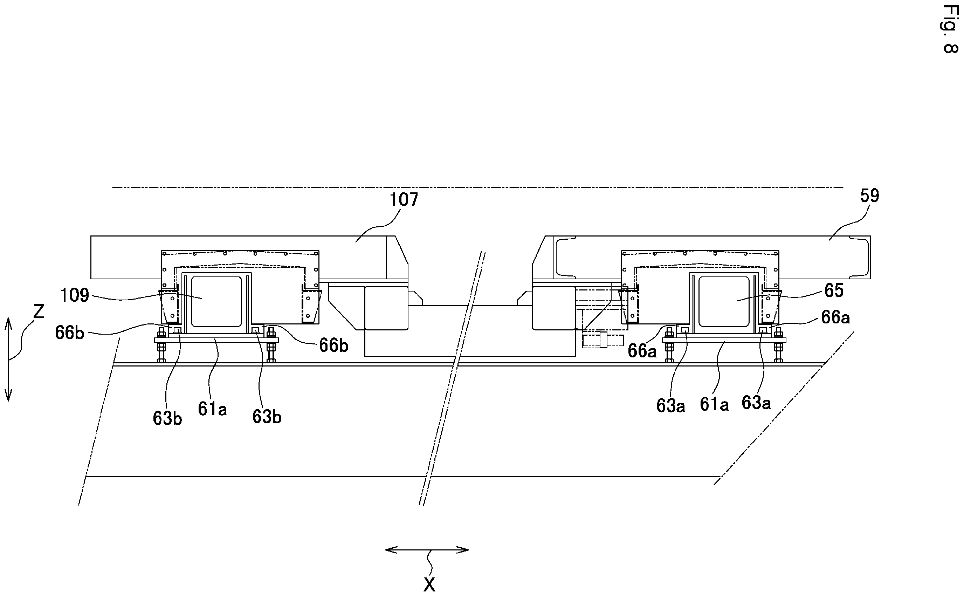

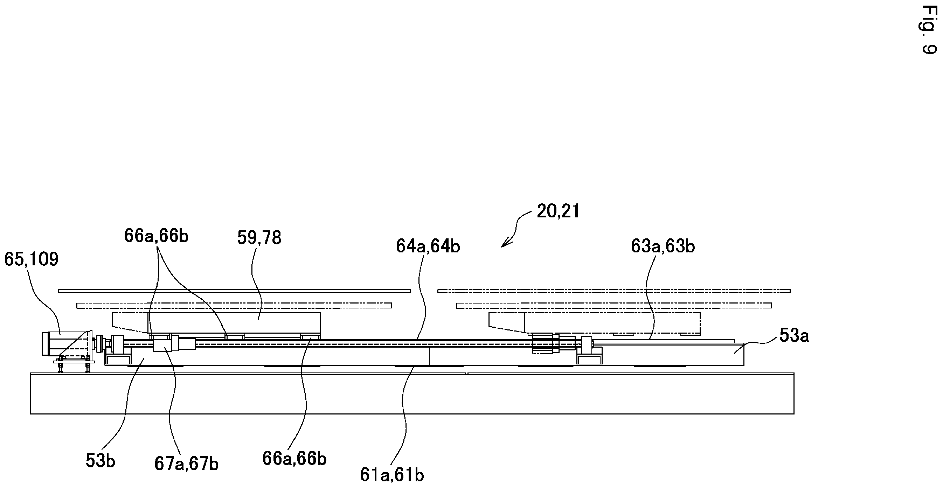

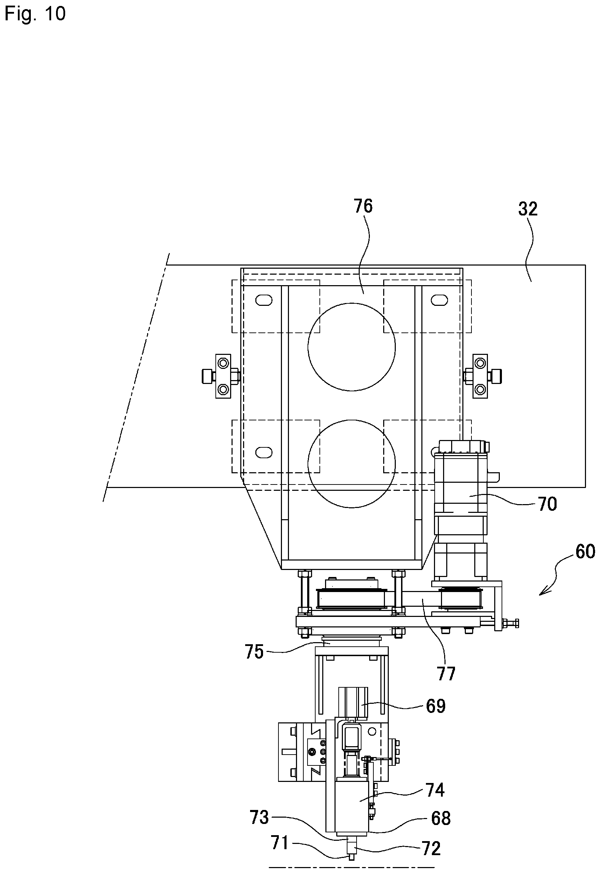

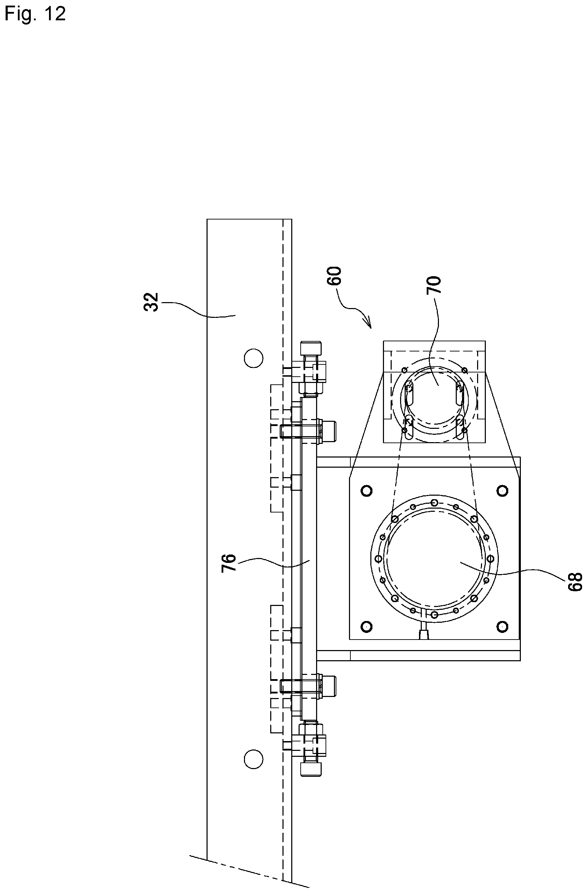

Fig. 7 is a top view of a cutting table 59 and a grinding table 107, and Fig. 8 is a side view of the cutting table 59 and the grinding table 107. Fig. 9 is a diagram illustrating movement of the cutting table 59 and the grinding table 107, and Fig. 10 is a side view of the cutting device 60 as an example installed in the cutting area 20. Fig. 11 is a front view of the cutting device 60, and Fig. 12 is a top view of the cutting device 60.

The cutting area 20 includes the cutting table 59 (cutting table) placing the glass plates 11a and 11b positioned in the loading area 19 thereon, and the cutting device 60 (cutting device) that cuts the edge e (peripheral part) of each of the glass plates 11a and 11b placed on the cutting table 59. Figs. 7 and 8 each designate the front-rear direction (X-axis direction) indicated by the arrow X, the width direction (Y-axis direction) indicated by the arrow Y, and the up-down direction (Z-axis direction) indicated by the arrow Z.

The cutting table 59 is installed on a base lane 61a long in the width direction fixed to the floor surface of the system base 25. The cutting table 59 is moved in the width direction using the first moving mechanism 62 while the glass plates 11a and 11b positioned are placed thereon. The first moving mechanism 62 includes traveling guide rails 63a, a feed screw 64a (ball screw), a fourth servomotor 65, guide shoes 66a, and a slide block 67a (housing nut). The traveling guide rails 63a are installed on the upper surface of the base lane 61a while extending in the width direction. The feed screw 64a (ball screw) is installed on an upper surface of the base lane 61a and laterally to the traveling guide rails 63a while extending in the width direction. The fourth servomotor 65 is installed in the base lane 61a to reciprocate the cutting table 59 in the width direction.

The fourth servomotor 65 includes a shaft that is connected to the other end of the feed screw 64a. Start and stop, the number of revolutions, and a rotation speed of the fourth servomotor 65 are controlled by a control unit connected to the controller via an interface (wired or wireless) that is not illustrated. The control unit of the fourth servomotor 65 drives the fourth servomotor 65 at a predetermined number of revolutions and rotational speed when receiving a drive signal from the controller, and stops the drive of the fourth servomotor 65 when receiving a stop signal from the controller.

The feed screw 64a is rotatably supported by a bearing (not illustrated) fixed to the base lane 61a. The guide shoes 66a are attached to a lower surface of the cutting table 59 and extend in the width direction. The guide shoes 66a are slidably fitted to the respective traveling guide rails 63a. The slide block 67a (housing nut) is attached to the lower surface of the cutting table 59 and between the guide shoes 66a. The slide block 67a is rotatably screwed to the feed screw 64a.

When the shaft of the fourth servomotor 65 rotates in the clockwise direction, the feed screw 64a is rotated in the clockwise direction, and then the rotation of the feed screw 64a in the clockwise direction causes the slide block 67a to move the feed screw 64a from a second side edge part 53b toward a first side edge part 53a of the cutting area 20 in the width direction. The movement of the slide block 67a causes the cutting table 59 to move from the second side edge part 53b toward the first side edge part 53a of the cutting area 20 in the width direction. Conversely, when the shaft of the fourth servomotor 65 rotates in the counterclockwise direction, the feed screw 64a is rotated in the counterclockwise direction, and then the rotation of the feed screw 64a in the counterclockwise direction causes the slide block 67a to move the feed screw 64a from the first side edge part 53a toward the second side edge part 53b of the cutting area in the width direction. The movement of the slide block 67a causes the cutting table 59 to move from the first side edge part 53a toward the second side edge part 53b of the cutting area 20 in the width direction.

The cutting device 60 includes a cutting tool 68, an air cylinder 69, and a fifth servomotor 70. The cutting tool 68 includes a cutter wheel 71, a cutter holder 72 (cutting holder), a cutter lifting shaft 73, and a cutter lifting guide 74. The cutter wheel 71 is connected to the cutter holder 72 with a bearing (not illustrated), and freely rotates about an axis of the bearing provided. The cutter wheel 71 operates three-dimensionally with respect to the cutter holder 72. The cutter wheel 71 forms a cut in the edge e (peripheral part) of each of the glass plates 11a and 11b.

The cutter holder 72 is located immediately above the cutter wheel 71 and connected to the cutter wheel 71 to support the cutter wheel 71. The cutter lifting shaft 73 is located directly above the cutter holder 72 and connected to the cutter holder 72 to support the cutter holder 72. The cutter lifting guide 74 is located immediately above the cutter lifting shaft 73 and connected to the cutter lifting shaft 73 to support the cutter lifting shaft 73. The cutting tool 68 (including the air cylinder 69) is connected to a support shaft 75 that is located immediately above the air cylinder 69 to rotatably support the cutting tool 68. The support shaft 75 is attached to a bracket 76 located immediately above the support shaft. The bracket 76 (cutting device 60) is connected to the first moving means 28 of the conveyance mechanism 24 that advances and retreats (linearly moves) in the front-rear direction (X-axis direction).

The air cylinder 69 is installed immediately above the cutter lifting shaft 73. The air cylinder 69 vertically moves the cutter wheel 71 (cutter holder 72) in the up-down direction (Z-axis direction), and lowers the cutter wheel 71 toward the upper surfaces 12 of the glass plates 11a and 11b to add (apply) cutting pressure (downward pressing force) to the cutter wheel 71 at the time of forming a cutting line (cut line) to the edge e of each of the glass plates 11a and 11b. The fifth servomotor 70 includes a shaft connected to the support shaft 75 with a timing belt 77. The fifth servomotor 70 finely adjusts a cutting direction, or an angle around an axis orthogonal to an XY plane, of the cutting tool 68 (cutter wheel 71).

Start and stop, the number of revolutions, and a rotation speed of the fifth servomotor 70 are controlled by a control unit connected to the controller via an interface (wired or wireless) that is not illustrated. The control unit of the fifth servomotor 70 drives the fifth servomotor 70 at a predetermined number of revolutions and rotational speed when receiving a drive signal from the controller, and stops the drive of the fifth servomotor 70 when receiving a stop signal from the controller. The cutting device 60 is configured such that the control unit of the fifth servomotor 70 rotates the shaft of the motor 70 based on an NC control signal transmitted from the controller to control the cutting tool 68 (cutter wheel 71) by NC control, and the cutting tool 68 (cutter wheel 71) forms a cut in a shape as desired in the edge e (peripheral part) of each of the glass plates 11a and 11b according to the NC control.

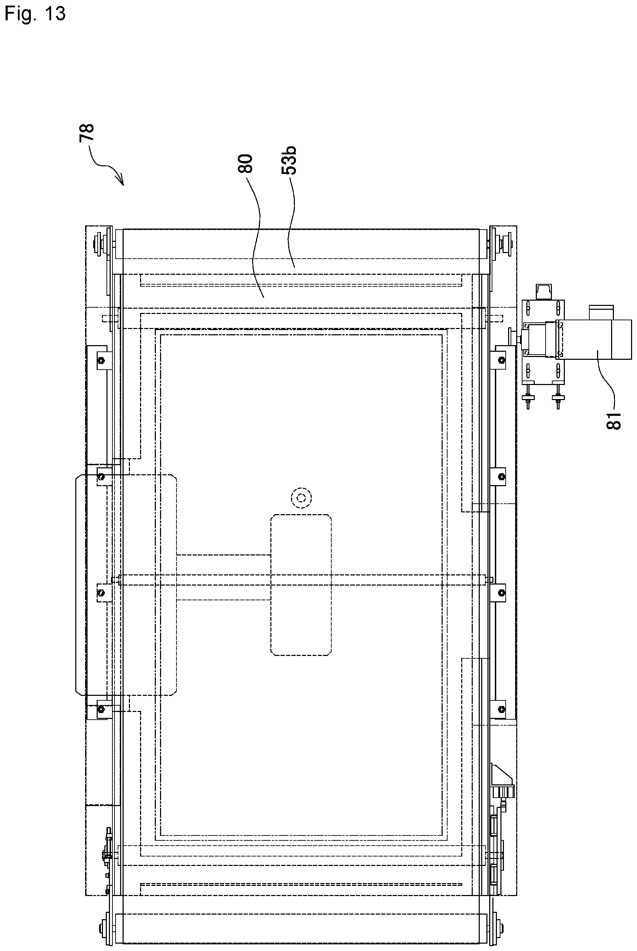

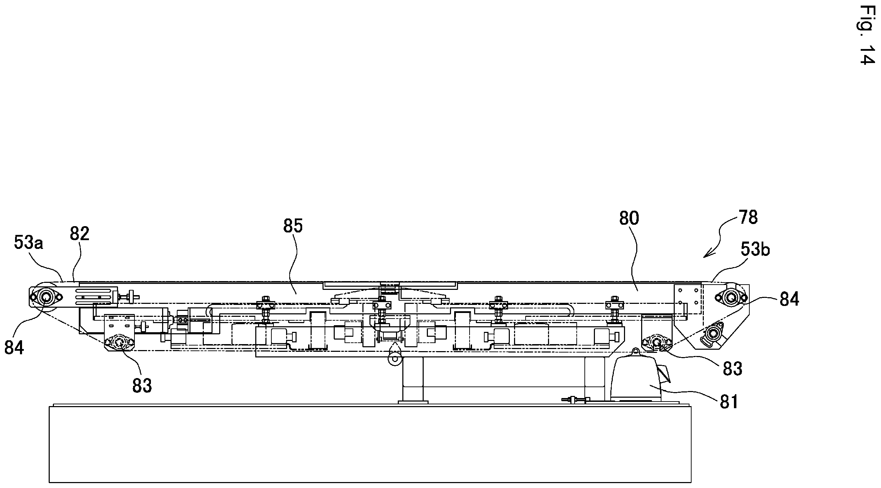

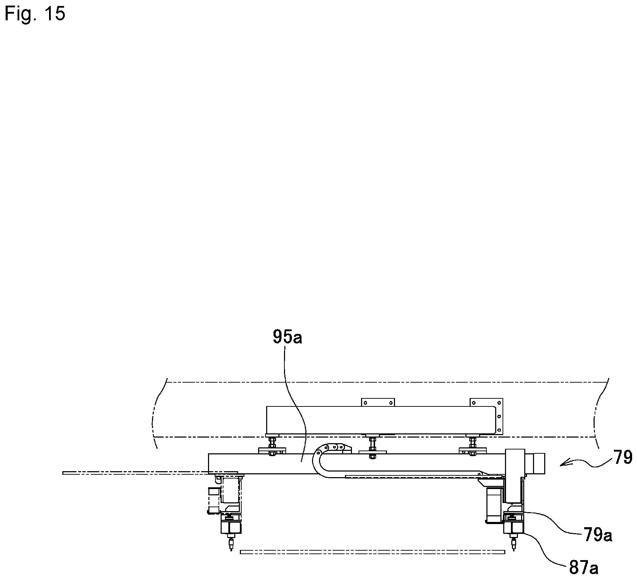

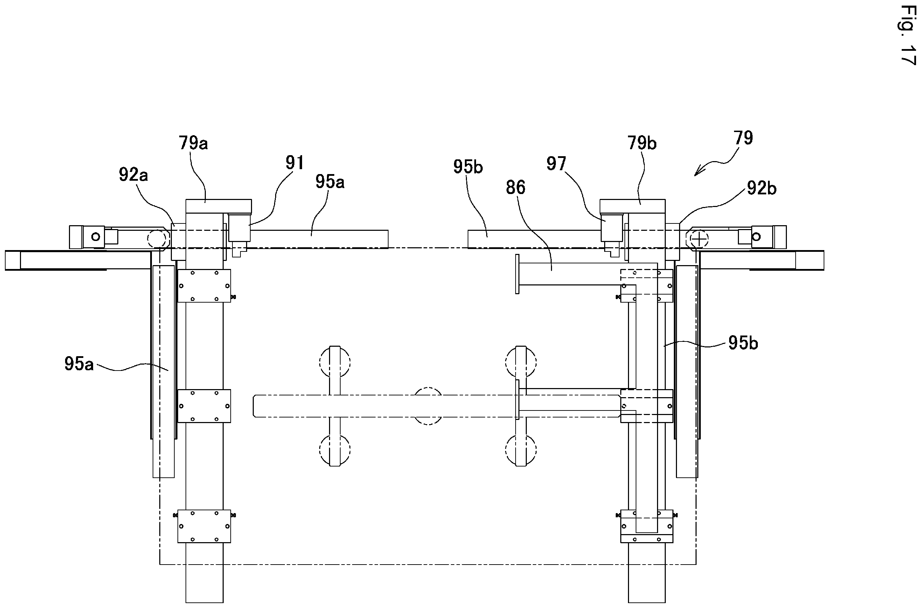

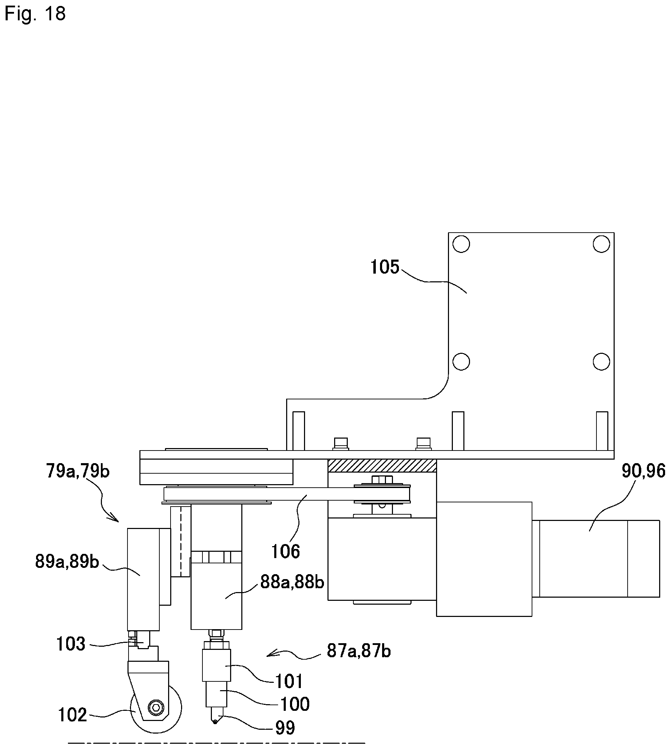

Fig. 13 is a top view of a breaking table 78, and Fig. 14 is a side view of the breaking table 78. Fig. 15 is a side view of the breaking device 79, and Fig. 16 is a front view 79 of the breaking device. Fig. 17 is a top view of the breaking device 79, and Fig. 18 is an enlarged side view of the breaking device 79. The breaking area 21 includes the breaking table 78 (breaking base) for placing the glass plates 11a and 11b positioned in the loading area 19 and subjected to the cutting in the cutting area 20 thereon, and the breaking device 79 that breaks the edge e (peripheral part) located outside the cuts of the glass plates 11a and 11b placed on the breaking table 78.

The breaking table 78 includes a belt conveyor 80 that travels in the width direction (Y-axis direction) and a conveyor drive motor 81 that causes the belt conveyor 80 to travel, the breaking table 78 being installed on a base board fixed to the floor surface of the system base 25. The belt conveyor 80 includes a belt 82 extending in the width direction, a plurality of pulleys 83 and carrier rollers 84 that support the belt 82, and a conveyor frame 85 that supports the belt 82, the pulleys 83, and the carrier rollers 84. On the belt conveyor 80, the glass plates 11a and 11b after the cutting are placed. The belt conveyor 80 conveys the edge e of each of the glass plates 11a and 11b broken by the breaking device 79 to the other side (from the first side edge part 53a to the second side edge part 53b) in the width direction, and discards the edge e of each of the glass plates 11a and 11b into a dust box (not illustrated).

The conveyor drive motor 81 includes a shaft connected to a pulley 83 with a timing belt. Start and stop of the conveyor drive motor 81 are controlled by a control unit connected to the controller via an interface (wired or wireless) that is not illustrated. Rotation speed (traveling speed of the belt) of the shaft of the conveyor drive motor 81 is set in advance, and is stored in the large-capacity hard disk of the controller while the rotation speed (traveling speed of the belt) is associated with specific information on the conveyor drive motor 81. The control unit of the conveyor drive motor 81 drives the drive motor 81 at a predetermined rotation speed when receiving a drive signal from the controller, and stops the drive of the drive motor 81 when receiving a stop signal from the controller. When the shaft of the conveyor drive motor 81 rotates in the clockwise direction, the rotation is transmitted to the pulley 83 with the timing belt to rotate the pulley 83 in the clockwise direction, and then the rotation of the pulley 83 cause the belt 82 to travel toward the other side in the width direction.

The breaking device 79 includes two devices of a first breaking device 79a and a second breaking device 79b that are apart from each other in the width direction. The first and second breaking devices 79a and 79b are connected to a suspension frame 86. The suspension frame 86 is connected to a side part of the second guide frame 35. The first breaking device 79a includes a breaking tool 87a, a first air cylinder 88a and a second air cylinder 89a, a sixth servomotor 90 (Z-axis servomotor), a seventh servomotor 91 (X-axis servomotor) and a first X-axis actuator 92a, an eighth servomotor 93 (Y-axis servomotor) and a first Y-axis actuator 94a, and a first actuator frame 95a.

The second breaking device 79b includes a breaking tool 87b, a third air cylinder 88b, a fourth air cylinder 89b, a ninth servomotor 96 (Z-axis servomotor), a tenth servomotor 97 (X-axis servomotor) and a second X-axis actuator 92b, an eleventh servomotor 98 (Y-axis servomotor) and a second Y-axis actuator 94b, and a second actuator frame 95b. The first actuator frame 95a and the second actuator frame 95b are connected in series at their front ends .

As illustrated in Fig. 18, the breaking tools 87a and 87b of the corresponding first and second breaking devices 79a and 79b each include a breaking cutter wheel 99, a breaking cutter holder 100, a cutter lifting shaft 101, a pressing roller 102, and a roller lifting shaft 103. The breaking cutter wheel 99 is connected to the breaking cutter holder 100 with a bearing (not illustrated), and freely rotates about an axis of the bearing provided. The breaking cutter wheel 99 cuts (end-cuts) the edge e of each of the glass plates 11a and 11b along the cut in the edge e (peripheral part) of the corresponding one of the glass plates 11a and 11b. The cutter lifting shaft 101 is located directly above the breaking cutter holder 100 and connected to the cutter holder 100 to support the cutter holder 100. The pressing roller 102 is located near the breaking cutter wheel 99 and outside the cutter wheel 99 in the width direction, and presses the edge e (peripheral part) of each of the glass plates 1a and 11b downward. The roller lifting shaft 103 is located immediately above the pressing roller 102, and is connected to the pressing roller 102 to support the pressing roller 102.

The first air cylinder 88a is installed immediately above the cutter lifting shaft 101 and is connected to the cutter lifting shaft 101. The first air cylinder 88a is connected to a support shaft 104 that is located immediately above the first air cylinder to rotatably support the breaking tool 87a. The support shaft 104 is attached to a bracket 105 located immediately above the support shaft. The bracket 105 is slidably attached to the first actuator frame 95a.

The first air cylinder 88a vertically moves the breaking cutter wheel 99 (breaking cutter holder 100) of the first breaking device 79a in the up-down direction (Z-axis direction), and lowers the cutter wheel 99 toward the upper surfaces 12 of the glass plates 11a and 11b to add (apply) a downward pressing force to the cutter wheel 99 at the time of breaking the edge e of each of the glass plates 11a and 11b. The first air cylinder 88a has a raising dimension and a lowering dimension that are set in advance. Start and stop of the first air cylinder 88a (lifting mechanism) are controlled by a control unit connected to the controller via an interface (wired or wireless) that is not illustrated. When receiving a lifting signal from the controller, the control unit of the first air cylinder 88a raises and lowers the air cylinder 88a.

The second air cylinder 89a is installed immediately above the roller lifting shaft 103 of the first breaking device 79a, and near and outside the first air cylinder 88a in the width direction, and is connected to the roller lifting shaft 103. The second air cylinder 89a vertically moves the pressing roller 102 of the first breaking device 79a in the up-down direction (Z-axis direction), and lowers the roller 102 toward the upper surfaces 12 of the glass plates 11a and 11b to add (apply) a downward pressing force to the roller 102 at the time of breaking of the edge e of each of the glass plates 11a and 11b. The second air cylinder 89a has a raising dimension and a lowering dimension that are set in advance. Start and stop of the second air cylinder 89a (lifting mechanism) are controlled by a control unit connected to the controller via an interface (wired or wireless) that is not illustrated. When receiving a lifting signal from the controller, the control unit of the second air cylinder 89a raises and lowers the air cylinder 89a.

The sixth servomotor 90 (Z-axis servomotor) is located near and inside the first air cylinder 88a in the width direction, and is connected and fixed to a lower surface of the bracket 105. The sixth servomotor 90 includes a shaft connected to the support shaft 104 with a timing belt 106. The sixth servomotor 90 finely adjusts a breaking direction, or an angle around the axis orthogonal to the XY plane, of the breaking tool 87a (breaking cutter wheel 99) of the first breaking device 79a. Start and stop, the number of revolutions, and a rotation speed of the sixth servomotor 90 are controlled by a control unit connected to the controller via an interface (wired or wireless) that is not illustrated. The control unit of the sixth servomotor 90 drives the sixth servomotor 90 at a predetermined number of revolutions and rotational speed when receiving a drive signal from the controller, and stops the drive of the sixth servomotor 90 when receiving a stop signal from the controller.

The seventh servomotor 91 (X-axis servomotor) is installed on the first actuator frame 95a, and includes a shaft connected to the first X-axis actuator 92a. The first X-axis actuator 92a includes a screw part and a guide part, which are not illustrated. When the shaft of the seventh servomotor 91 rotates in the clockwise direction, the screw part of the first X-axis actuator 92a is rotated in the clockwise direction. When the screw part is rotated in the counterclockwise direction, the breaking tool 87a of the first breaking device 79a is moved forward in the front-rear direction together with the bracket 105 along the first actuator frame 95a. When the shaft of the seventh servomotor 91 rotates in the counterclockwise direction, the screw part of the first X-axis actuator 92a is rotated in the counterclockwise direction. When the screw part is rotated in the counterclockwise direction, the breaking tool 87a of the first breaking device 79a is moved backward in the front-rear direction together with the bracket 105 along the first actuator frame 95a. Start and stop, the number of revolutions, and a rotation speed of the seventh servomotor 91 are controlled by a control unit connected to the controller via an interface (wired or wireless) that is not illustrated. The control unit of the seventh servomotor 91 drives the seventh servomotor 91 at a predetermined number of revolutions and rotational speed when receiving a drive signal from the controller, and stops the drive of the seventh servomotor 91 when receiving a stop signal from the controller.

The eighth servomotor 93 (Y-axis servomotor) is installed on the first actuator frame 95a in the Y-axis, and includes a shaft connected to the first Y-axis actuator 94a. The first Y-axis actuator 94a includes a screw part and a guide part, which are not illustrated. When the shaft of the eighth servomotor 93 rotates in the clockwise direction, the screw part of the first Y-axis actuator 94a rotates in the clockwise direction. When the screw part rotates in the counterclockwise direction, the breaking tool 87a of the first breaking device 79a moves toward one side in the width direction together with the bracket 105 along the first actuator frame 95a. When the shaft of the eighth servomotor 93 rotates in the counterclockwise direction, the screw part of the first Y-axis actuator 94a rotates in the counterclockwise direction. When the screw part rotates in the counterclockwise direction, the breaking tool 87a of the first breaking device 79a moves toward the other side in the width direction together with the bracket 105 along the first actuator frame 95a. Start and stop, the number of revolutions, and a rotation speed of the eighth servomotor 93 are controlled by a control unit connected to the controller via an interface (wired or wireless) that is not illustrated. The control unit of the eighth servomotor 93 drives the eighth servomotor 93 at a predetermined number of revolutions and rotational speed when receiving a drive signal from the controller, and stops the drive of the eighth servomotor 93 when receiving a stop signal from the controller.

The third air cylinder 88b is installed immediately above the cutter lifting shaft 101 and is connected to the cutter lifting shaft 101. The third air cylinder 88b is connected to a support shaft 104 that is located immediately above the first air cylinder to rotatably support the breaking tool 87b. The support shaft 104 is attached to a bracket 105 located immediately above the support shaft. The bracket 105 is slidably attached to the second actuator frame 95b.

The third air cylinder 88b vertically moves the breaking cutter wheel 99 (breaking cutter holder 100) of the second breaking device 79b in the up-down direction (Z-axis direction), and lowers the cutter wheel 99 toward the upper surfaces 12 of the glass plates 11a and 11b to add (apply) a downward pressing force to the cutter wheel 99 at the time of breaking the edge e of each of the glass plates 11a and 11b. The third air cylinder 88b has a raising dimension and a lowering dimension that are set in advance. Start and stop of the third air cylinder 88b (lifting mechanism) are controlled by a control unit connected to the controller via an interface (wired or wireless) that is not illustrated. When receiving a lifting signal from the controller, the control unit of the third air cylinder 88b raises and lowers the air cylinder 88b.

The fourth air cylinder 89b is installed immediately above the roller lifting shaft 103 of the second breaking device 79b, and near and outside the third air cylinder 88b in the width direction, and is connected to the roller lifting shaft 103. The fourth air cylinder 89b vertically moves the pressing roller 102 of the second breaking device 79b in the up-down direction (Z-axis direction), and lowers the roller 102 toward the upper surfaces 12 of the glass plates 11a and 11b to add (apply) a downward pressing force to the roller 102 at the time of breaking of the edge e of each of the glass plates 11a and 11b. The fourth air cylinder 89b has a raising dimension and a lowering dimension that are set in advance. Start and stop of the fourth air cylinder 89b (lifting mechanism) are controlled by a control unit connected to the controller via an interface (wired or wireless) that is not illustrated. When receiving a lifting signal from the controller, the control unit of the fourth air cylinder 89b raises and lowers the air cylinder 89b.

The ninth servomotor 96 (Z-axis servomotor) is located near and inside the third air cylinder 88b in the width direction, and is connected and fixed to a lower surface of the bracket 105. The ninth servomotor 96 includes a shaft connected to the support shaft 104 with the timing belt 106. The ninth servomotor 96 finely adjusts a breaking direction, or an angle around the axis orthogonal to the XY plane, of the breaking tool 87b (breaking cutter wheel 99) of the second breaking device 79b. Start and stop, the number of revolutions, and a rotation speed of the ninth servomotor 96 are controlled by a control unit connected to the controller via an interface (wired or wireless) that is not illustrated. The control unit of the ninth servomotor 96 drives the ninth servomotor 96 at a predetermined number of revolutions and rotational speed when receiving a drive signal from the controller, and stops the drive of the ninth servomotor 96 when receiving a stop signal from the controller.

The tenth servomotor 97 (X-axis servomotor) is installed on the second actuator frame 95b, and includes a shaft connected to the second X-axis actuator 92b. The second X-axis actuator 92b includes a screw part and a guide part, which are not illustrated. When the shaft of the tenth servomotor 97 rotates in the clockwise direction, the screw part of the second X-axis actuator 92b is rotated in the clockwise direction. When the screw part is rotated in the counterclockwise direction, the breaking tool 87b of the second breaking device 79b is moved forward in the front-rear direction together with the bracket 105 along the second actuator frame 95b. When the shaft of the tenth servomotor 97 rotates in the counterclockwise direction, the screw part of the second X-axis actuator 92b is rotated in the counterclockwise direction. When the screw part is rotated in the counterclockwise direction, the breaking tool 87b of the second breaking device 79b is moved backward in the front-rear direction together with the bracket 105 along the second actuator frame 95b. Start and stop, the number of revolutions, and a rotation speed of the tenth servomotor 97 are controlled by a control unit connected to the controller via an interface (wired or wireless) that is not illustrated. The control unit of the tenth servomotor 97 drives the tenth servomotor 97 at a predetermined number of revolutions and rotational speed when receiving a drive signal from the controller, and stops the drive of the tenth servomotor 97 when receiving a stop signal from the controller.

The eleventh servomotor 98 (Y-axis servomotor) is installed on the second actuator frame 95b, and includes a shaft connected to the second Y-axis actuator 94b. The second Y-axis actuator 94b includes a screw part and a guide part, which are not illustrated. When the shaft of the eleventh servomotor 98 rotates in the clockwise direction, the screw part of the second Y-axis actuator 94b rotates in the clockwise direction. When the screw part rotates in the counterclockwise direction, the breaking tool 87b of the second breaking device 79b moves toward one side in the width direction together with the bracket 105 along the second actuator frame 95b. When the shaft of the eleventh servomotor 98 rotates in the counterclockwise direction, the screw part of the second Y-axis actuator 94b rotates in the counterclockwise direction. When the screw part rotates in the counterclockwise direction, the breaking tool 87b of the second breaking device 79b moves toward the other side in the width direction together with the bracket 105 along the second actuator frame 95b. Start and stop, the number of revolutions, and a rotation speed of the eleventh servomotor 98 are controlled by a control unit connected to the controller via an interface (wired or wireless) that is not illustrated. The control unit of the eleventh servomotor 98 drives the eleventh servomotor 98 at a predetermined number of revolutions and rotational speed when receiving a drive signal from the controller, and stops the drive of the eleventh servomotor 98 when receiving a stop signal from the controller.

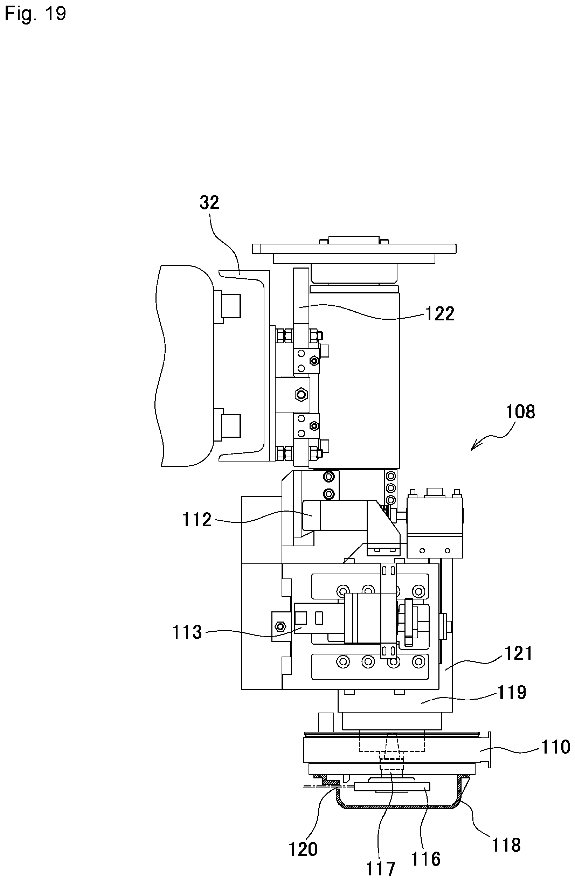

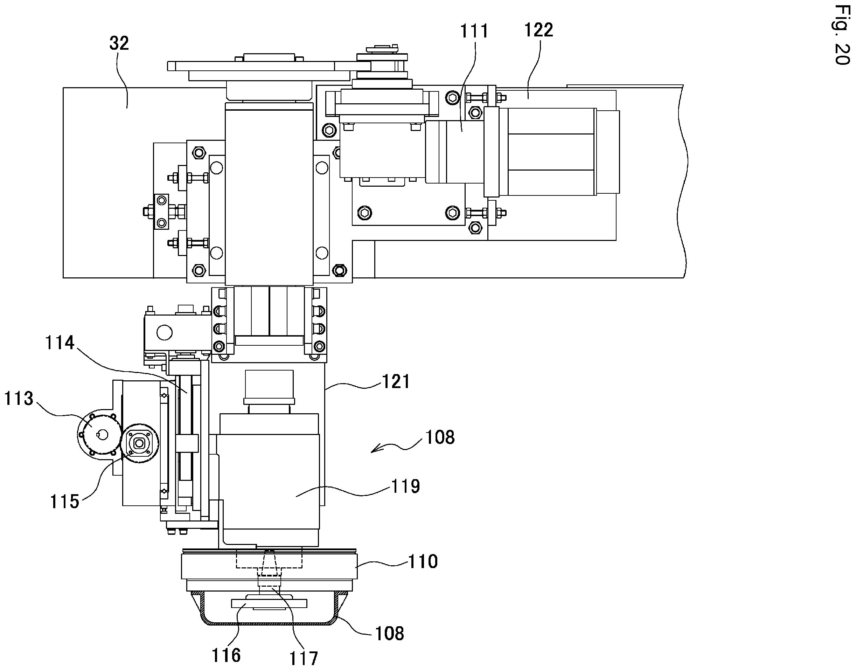

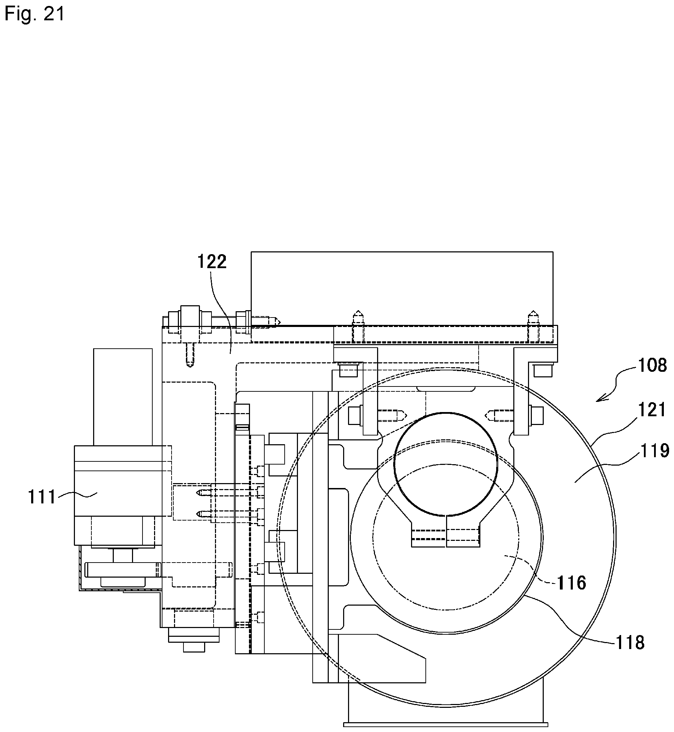

Fig. 19 is a side view of the grinding device 108 illustrated as an example installed in the grinding area 22, and Fig. 20 is a front view of the grinding device 108. Fig. 21 is a top view of the grinding device 108. The grinding area 22 includes the grinding table 107 (grinding base) for placing the glass plates 11a and 11b positioned in the loading area 19, and subjected to the cutting in the cutting area 20 and the breaking in the breaking area 21, thereon, and the grinding device 108 that grinds the edge e (peripheral part) of each of the glass plates 11a and 11b placed on the grinding table 107.

The grinding table 107 is installed on a base lane 61b long in the width direction fixed to the floor surface of the system base 25 (see Fig. 7). The grinding table 107 includes multiple suction pads 124 that suck and hold the glass plates 11a and 11b, and a vacuum mechanism (an air suction device, or an air vacuum pump that is not illustrated and that applies a suction force to the suction pads 124 by applying negative pressure to the suction pads 124. Start and stop of the vacuum mechanism are controlled by a control unit connected to the controller via an interface (wired or wireless) that is not illustrated.

The grinding table 107 is moved in the width direction using the second moving mechanism 62b while the glass plates 11a and 11b positioned are placed thereon. The second moving mechanism 62b includes traveling guide rails 63b, a feed screw 64b (ball screw), a twelfth servomotor 109, guide shoes 66b, and a slide block 67b (housing nut). The traveling guide rails 63b are installed on the upper surface of the base lane 61b while extending in the width direction. The feed screw 64b (ball screw) is installed on an upper surface of the base lane 61b and laterally to the traveling guide rails 63b while extending in the width direction. The twelfth servomotor 109 is installed in the base lane 61b to reciprocate the grinding table 107 in the width direction.

The twelfth servomotor 109 includes a shaft that is connected to the other end of the feed screw 64b. Start and stop, the number of revolutions, and a rotation speed of the twelfth servomotor 109 are controlled by a control unit connected to the controller via an interface (wired or wireless) that is not illustrated. The control unit of the twelfth servomotor 109 drives the twelfth servomotor 109 at a predetermined number of revolutions and rotational speed when receiving a drive signal from the controller, and stops the drive of the twelfth servomotor 109 when receiving a stop signal from the controller.

The feed screw 64b is rotatably supported by a bearing (not illustrated) fixed to the base lane 61b. The guide shoes 66b are attached to a lower surface of the grinding table 107 and extend in the width direction. The guide shoes 66b are slidably fitted to the respective traveling guide rails 63b. The slide block 67b (housing nut) is attached to the lower surface of the grinding table 107 and between the guide shoes 66b. The slide block 67b is rotatably screwed to the feed screw 64b.

When the shaft of the twelfth servomotor 109 rotates in the clockwise direction, the feed screw 64b is rotated in the clockwise direction, and then the rotation of the feed screw 64b in the clockwise direction causes the slide block 67b to move the feed screw 64b from a second side edge part 53b toward a first side edge part 53a of the grinding area 22 in the width direction. The movement of the slide block 67b causes the grinding table 107 to move from the second side edge part 53b toward the first side edge part 53a of the grinding area 22 in the width direction. When the shaft of the twelfth servomotor 109 rotates in the counterclockwise direction, the feed screw 64b is rotated in the counterclockwise direction, and then the rotation of the feed screw 64b in the counterclockwise direction causes the slide block 67b to move the feed screw 64b from the first side edge part 53a toward the second side edge part 53b of the grinding area 22 in the width direction. The movement of the slide block 67b causes the grinding table 107 to move from the first side edge part 53a toward the second side edge part 53b of the grinding area 22 in the width direction.

The twelfth servomotor 109 is driven in synchronization with the fourth servomotor 65 in the cutting area 20. Then, the grinding table 107 is moved from the second side edge part 53b toward the first side edge part 53a of the grinding area 22 in synchronization with movement of the cutting table 59 from the second side edge part 53b to the first side edge part 53a of the cutting area 20, or the grinding table 107 is moved from the first side edge part 53a toward the second side edge part 53b of the grinding area 22 in synchronization with movement of the cutting table 59 from the first side edge part 53a to the second side edge part 53b of the cutting area 20.

The grinding device 108 includes a grinding tool 110, a thirteenth servomotor 111 (Z-axis grinding servomotor), a fourteenth servomotor 112 (lifting servomotor), a fifteenth servomotor 113 (cutting servomotor), a grinding wheel lifting screw 114, and a grinding wheel cutting screw 115. The grinding tool 110 includes a grinding wheel 116, a grinding holder 117, a cover 118, and a spindle motor 119. The grinding wheel 116 is formed in a disk shape having a predetermined diameter, and has an outer peripheral surface that is used for grinding the edge e (peripheral part) of each of the glass plates 11a and 1b.

The grinding holder 117 is located immediately above the grinding wheel 116 and rotatably supports the grinding wheel 116. The cover 118 is located immediately below the grinding wheel 116 to cover the entire grinding wheel 116. The cover 118 is detachably attached to the grinding holder 117. The cover 118 is provided with a slit 120 into which the edge e of each of the glass plates 11a and 11b is to be inserted. The spindle motor 119 is located immediately above the grinding wheel 116 (grinding holder 117), and is installed and housed in the motor housing 121. The spindle motor 119 includes a shaft connected to the center of the grinding wheel 116.

Rotation of the shaft of the spindle motor 119 rotates the grinding wheel 116. The motor housing 121 is fixed to the traveling frame 32 with a bracket 122. Start and stop, the number of revolutions, and a rotation speed of the spindle motor 119 are controlled by a control unit connected to the controller via an interface (wired or wireless) that is not illustrated. The control unit of the spindle motor 119 drives the spindle motor 119 at a predetermined number of revolutions and rotational speed when receiving a drive signal from the controller, and stops the drive of the spindle motor 119 when receiving a stop signal from the controller.

The thirteenth servomotor 111 (Z-axis grinding servomotor) is located near and behind the grinding tool 110, and is connected and fixed to the traveling frame 32 with the bracket 122. The thirteenth servomotor 111 includes a shaft connected to a support shaft of the motor housing 121. The thirteenth servomotor 111 finely adjusts a position (angle around the axis) of the grinding wheel 116 in the axial direction to allow the outer peripheral surface of the grinding wheel 116 to come into contact with the edge e of each of the glass plates 11a and 11b in a parallel manner. Start and stop, the number of revolutions, and a rotation speed of the thirteenth servomotor 111 are controlled by a control unit connected to the controller via an interface (wired or wireless) that is not illustrated. The control unit of the thirteenth servomotor 111 drives the thirteenth servomotor 111 at a predetermined number of revolutions and rotational speed when receiving a drive signal from the controller, and stops the drive of the thirteenth servomotor 111 when receiving a stop signal from the controller.

The fourteenth servomotor 112 (lifting servomotor) is located near and outside the motor housing 121 (spindle motor 119) in the width direction, and is connected and fixed to the motor housing 121. The fourteenth servomotor 112 includes a shaft that is connected to the grinding wheel lifting screw 114 to rotate the grinding wheel lifting screw 114. The fourteenth servomotor 112 vertically moves the grinding wheel 116 (motor housing 121) in accordance with a thickness dimension of each of the glass plates 11a and 11b to finely adjust a height of the grinding wheel 116 to allow the outer peripheral surface of the grinding wheel 116 to come into contact with the edge e of each of the glass plates 11a and 11b while the grinding wheel 116 and the edge e of each of the glass plates 11a and 11b are aligned in height. Start and stop, the number of revolutions, and a rotation speed of the fourteenth servomotor 112 are controlled by a control unit connected to the controller via an interface (wired or wireless) that is not illustrated. The control unit of the fourteenth servomotor 112 drives the fourteenth servomotor 112 at a predetermined number of revolutions and rotational speed when receiving a drive signal from the controller, and stops the drive of the fourteenth servomotor 112 when receiving a stop signal from the controller.

Initial setting for starting processing of the glass plates 11a and 11b includes a distance from an attachment reference surface of the grinding wheel 116 to the center of a groove, the distance being is input to the controller. The controller calculates the number of revolutions of the shaft of the fourteenth servomotor 112 based on the distance received, and transmits the number of revolutions calculated to the control unit of the fourteenth servomotor 112. The control unit of the fourteenth servomotor 112 rotates the shaft of the fourteenth servomotor 112 at the number of revolutions received from the controller. When the shaft of the fourteenth servomotor 112 rotates in the clockwise direction at the number of revolutions predetermined, the grinding wheel lifting screw 114 is rotated in the clockwise direction to lower the screw 114, thereby lowering the grinding wheel 116 (motor housing 120). When the shaft of the fourteenth servomotor 112 rotates in the counterclockwise direction at the number of revolutions predetermined, the grinding wheel lifting screw 114 is rotated in the counterclockwise direction to raise the screw 114, thereby raising the grinding wheel 116 (motor housing 120). As long as the glass plates 11a and 11b to be processed are not changed in thickness, the height of the grinding wheel 116 is finely adjusted once, and is not subsequently adjusted.

The fifteenth servomotor 113 (cutting servomotor) is located immediately below the fourteenth servomotor 112 (lifting servomotor) and near and outside the motor housing 120 (spindle motor 119) in the width direction, and is connected and fixed to the motor housing 120. The fifteenth servomotor 113 includes a shaft that is connected to the grinding wheel cutting screw 115 to rotate the grinding wheel cutting screw 115. The fifteenth servomotor 113 moves the grinding wheel 116 (motor housing 120) in the width direction in accordance with a width dimension (size) of each of the glass plates 11a and 11b to finely adjust a position of the grinding wheel 116 in the front-rear direction such that the outer peripheral surface of the grinding wheel 116 comes into contact with the edge e of each of the glass plates 11a and 11b. Start and stop, the number of revolutions, and a rotation speed of the fifteenth servomotor 113 are controlled by a control unit connected to the controller via an interface (wired or wireless) that is not illustrated. The control unit of the fifteenth servomotor 113 drives the fifteenth servomotor 113 at a predetermined number of revolutions and rotational speed when receiving a drive signal from the controller, and stops the drive of the fifteenth servomotor 113 when receiving a stop signal from the controller.

The initial setting for starting processing of the glass plates 11a and 11b includes a diameter of the grinding wheel 116 to the center of a groove, the diameter being is input to the controller. The controller calculates the number of revolutions of the shaft of the fifteenth servomotor 113 based on the diameter of the grinding wheel 116 received, and transmits the number of revolutions calculated to the control unit of the fifteenth servomotor 113. The control unit of the fifteenth servomotor 113 rotates the shaft of the fifteenth servomotor 113 at the number of revolutions received from the controller. When the shaft of the fifteenth servomotor 113 rotates in the clockwise direction at the number of revolutions predetermined, the grinding wheel cutting screw 115 is rotated in the clockwise direction to move the screw 115 backward in the front-rear direction, thereby moving the grinding wheel 116 (motor housing 120) backward in the front-rear direction. When the shaft of the fifteenth servomotor 113 rotates in the counterclockwise direction at the number of revolutions predetermined, the grinding wheel cutting screw 115 is rotated in the counterclockwise direction to move the screw 115 forward in the front-rear direction, thereby moving the grinding wheel 116 (motor housing 120) forward in the front-rear direction. As long as the grinding wheel 116 is not changed in diameter, the position of the grinding wheel 116 in the front-rear direction is finely adjusted once, and is not subsequently adjusted.

In the unloading area 23, an unloading conveyor 113 is installed. The unloading area 23 is supported by legs extending upward from the floor surface of the system base 25. The unloading conveyor 23 is one of unloading conveyors 23 of multiple endless tracks that extend in the front-rear direction (X-direction), and that are disposed side by side at predetermined intervals in the width direction (Y-direction). Start and stop, and a conveyance distance of each of the unloading conveyors 23 are controlled by a control unit connected to the controller via an interface (wired or wireless) that is not illustrated. The unloading conveyors 23 convey the glass plate 11a and 11b from backward to forward in the front-rear direction from a rear end (loading port) toward a front end (unloading port) of the unloading area 23.

Hereinafter, an example of processing (cutting, breaking, grinding) of the glass plates 11a and 11b will be described. Mounting positions are adjusted for the following suction pads: the suction pads 41 in the pad mounting plate 42 of the first glass plate holder 40a; the inner suction pads 41a in the pad mounting plate 42 of the second glass plate holder 40b; the suction pads 41 in the pad mounting plate 42 of the third glass plate holder 40c; and the suction pads 41 in the pad mounting plate 42 of the fourth glass plate holder 40d. Then, turning angles of the first to fourth arms 43a to 43d with respect to the axis of the pad mounting plate 42 are adjusted, and mounting positions of the outer suction pads 41b for the first to fourth arms 43a to 43d are adjusted. At a start of the processing, the first glass plate holder 40a stands by above the loading area 19, the second glass plate holder 40b stands by above the cutting area 20, the third glass plate holder 40c stands by above the breaking area 21, and the fourth glass plate holder 40d stands by above the grinding area 22.

The controller is connected to an output device such as a monitor, a display, or a touch panel, on which various glass plate images are output (displayed). From among the various glass plate images output (displayed) on the output device, the specific glass plates 11a and 11b to be processed are clicked (tapped, or selected). When the specific glass plates 11a and 11b are selected, the controller selects an NC control program for processing to be performed on the glass plates 11a and 11b. The controller outputs (displays) input areas on the output device for the following: a distance from the attachment reference surface of the grinding wheel 116 to the center of the groove; dimensions of the glass plates 11a and 11b in the front-rear direction; and a diameter of the grinding wheel 116.

After a distance is input to the input area for a distance from the attachment reference surface of the grinding wheel 116 to the center of the groove and a diameter is input to the input area for a diameter of the grinding wheel 116, an input button output (displayed) on the output device is clicked (tapped). When the distance and the diameter are input, the controller drives not only the fourteenth servomotor 112 to vertically move the grinding wheel 116 (motor housing 120) to finely adjust a height of the grinding wheel 116, but also the fifteenth servomotor 113 to move the grinding wheel 116 (motor housing 120) in the width direction to finely adjust a position of the grinding wheel 116 in the front-rear direction. After the fine adjustments are finished, the controller outputs (displays) a processing start button on the output device. When the processing start button is clicked (tapped), the processing of the glass plates 11a and 11b is started.

The selected glass plates 11a and 11b to be processed (before processing) are loaded onto the loading area 19. In the loading area 19, the first positioning means and the second positioning means are performed. The glass plates 11a and 11b to be processed are automatically fed to the loading conveyor 48 in the loading area 19 by an automatic feeding device (not illustrated). The automatic feeding device contains multiple glass plates 11a and 11b to be processed and identical in area (in size) of the upper surface 12 and the lower surface 13, the glass plates being stacked in the up-down direction, and feeds the glass plates 11a and 11b to the loading conveyor 48 one by one.

An example of a procedure of positioning the glass plates 11a and 11b in the loading area 19 is as follows. The controller transmits a conveyance signal (ON signal) to the control unit of the loading conveyor 48, and the control unit of the loading conveyor 48 having received an advance signal (ON signal) drives the loading conveyors 48. The glass plates 11a and 11b loaded onto the loading area 19 are placed on the loading conveyor 48 while the lower surface 13 of the corresponding one of the glass plates 11a and 11b is in contact with the loading conveyor 48. The glass plates 11a and 11b each have the first side edge 14 (including the first side edge 14 that is curved, or in a curved shape) that is parallel to the first side edge part 53a of the loading area 19, and the second side edge 15 that is parallel to the second side edge part 53b of the loading area 19.

The glass plates 11a and 11b placed on the loading conveyor 48 are gradually moved forward in the front-rear direction from backward to forward in the loading area 19 by the loading conveyor 48. When the glass plates 11a and 11b are moved from backward to forward in the loading area 19 and the front end edge 16 of the corresponding one of the glass plates 11a and 11b come into contact with the stoppers 49, the contact sensor installed in each of the stoppers 49 detects the contact of the front end edge 16 of the corresponding one of the glass plates 11a and 11b with the corresponding one of the stoppers 49, and transmits a contact signal to the controller.

The controller having received the contact signal transmits a stop signal (OFF signal) to the control unit of the loading conveyor 48, and the control unit of the loading conveyor 48 having received the stop signal (OFF signal) stops driving of the loading conveyors 48. Next, the controller transmits not only the second moving dimension of the loading conveyor 48 backward in the front-rear direction to the control unit of the loading conveyor 48, the second moving dimension being set for locating the center O of the first side edge 14 of each of the glass plates 11a and 11b in the front-rear direction, the center O aligning with the center line L2 extending in the width direction, while dividing the glass plates 11a and 11b in dimension into two regions in the front-rear direction, on the second positioning reference L2 (second virtual positioning reference line) of the loading area 19, but also a retreat signal (ON signal) to the control unit of the loading conveyor 48.

The control unit of the loading conveyor 48 having received the second moving dimension and the retreat signal (ON signal) drives the loading conveyor 48 to move the glass plates 11a and 11b backward in the front-rear direction by the second moving dimension with the loading conveyor 48. When the loading conveyor 48 moves the glass plates 11a and 11b backward in the front-rear direction by the second moving dimension, the center O1 in the front-rear direction (center line L2 of the glass plates 11a and 11b) of the first side edge of the glass plates 11a and 11b in the width direction is located on the second positioning reference L2 (second virtual positioning reference line) in the loading area 19 (second positioning means).

After moving the glass plates 11a and 11b backward in the front-rear direction by the second moving dimension, the controller transmits a stop signal (OFF signal) to the control unit of the loading conveyor 48, and the control unit of the loading conveyor 48 having received the stop signal (OFF signal) stops driving of the loading conveyors 48. Next, the controller transmits a raising signal (ON signal) to the control unit of the air cylinder (first lifting mechanism 51). The control unit of the air cylinder (first lifting mechanism 51) having received the raising signal (ON signal) raises the air cylinder. When the air cylinder is raised to raise the rollers 50, a peripheral part of each of the rollers 50 is partially exposed above the loading conveyor 48. Then, the raised rollers 50 lift the glass plates 11a and 11b above the loading conveyor 48 while being in contact with the lower surface 13 of the corresponding one of the glass plates 11a and 11b.

After the raising of the air cylinder (first lifting mechanism 51) is finished, the controller transmits not only the number of revolutions of the third servomotor 56 to the control unit of the third servomotor 56, the number of revolutions being calculated from the first moving dimension (first moving distance) in the width direction of the moving mechanism (third moving mechanism 52) for positioning the first side edge 14 of each of the glass plates 11a and 11b on the first positioning reference L1 (first virtual positioning reference line), but also a positive rotation signal (ON signal) to the control unit of the third servomotor 56. The control unit of the third servomotor 56, having received the number of revolutions of the third servomotor 56 and the positive rotation signal (ON signal), drives the third servomotor 56 to rotate the shaft of the third servomotor 56 in the clockwise direction by the number of revolutions predetermined.

When the shaft of the third servomotor 56 rotates in the clockwise direction to rotate the feed screw, the rotation of the feed screw causes the contact member 58 to gradually move together with the moving arm 57 from a movement start point toward one side in the width direction. The contact member 58 moving toward the one side in the width direction comes into contact with the second side edge 15 of each of the glass plates 11a and 11b, and the contact member 58 presses the second side part 15 of each of the glass plates 11a and 11b in the width direction to move the glass plates 11a and 11b from the other side toward the one side in the width direction. The glass plates 11a and 11b pressed by the contact member 58 are moved on the rollers 50 in the width direction from the other side toward the one side in the width direction, and an outermost edge located outermost in the width direction of the first side edge 14 of each of the glass plates 11a and 11b in the width direction is located on the first positioning reference L1 (first virtual positioning reference line) in the loading area 19 (first positioning means).

When the movement of the contact member 58 toward the one side in the width direction is finished and the outermost edge located outermost in the width direction of the first side edge 14 of each of the glass plates 11a and 11b in the width direction is located on the first positioning reference L1 in the loading area 19, the controller transmits a stop signal (OFF signal) to the control unit of the third servomotor 56. The control unit of the third servomotor 56 having received the stop signal (OFF signal) stops driving of the third servomotor 56. After the driving of the third servomotor 56 is stopped, the controller transmits a negative rotation signal (ON signal) to the control unit of the third servomotor 56. The control unit of the third servomotor 56, having received the negative rotation signal (ON signal), drives the third servomotor 56 to rotate the shaft of the third servomotor 56 in the counterclockwise direction by the number of revolutions predetermined.

When the shaft of the third servomotor 56 rotates in the counterclockwise direction to rotate the feed screw, the rotation of the feed screw causes the contact member 58 to gradually move together with the moving arm 57 toward the other side in the width direction, and then the contact member 58 returns to the movement start point. After the contact member 58 returns to the movement start point, the controller transmits not only a stop signal (OFF signal) to the control unit of the third servomotor 56, but also a lowering signal (ON signal) to the control unit of the air cylinder (first lifting mechanism 51). The control unit of the third servomotor 56 having received the stop signal (OFF signal) stops the driving of the third servomotor 56, and the control unit of the air cylinder (first lifting mechanism 51), having received the lowering signal (ON signal), lowers the air cylinder. When the air cylinder is lowered, the lower surface 13 of corresponding one of the glass plates 11a and 11b positioned by the first positioning means and the second positioning means comes into contact with the conveyance conveyor 48.

The glass plate processing system 10 is configured as follows: the loading conveyor 48 moves the glass plates 11a and 11b from backward to forward in the loading area 19 to bring the front end edge 16 of the corresponding one of the glass plates 11a and 11b into contact with the stopper 49; the loading conveyor 48 then moves the corresponding one of the glass plates 11a and 11b backward in the front-rear direction to locate the center O1 (center line L2 of the glass plates 11a and 11b) of the first side edge 14 in the width direction of the corresponding one of the glass plates 11a and 11b in the front-rear direction on the second positioning reference L2 in the loading area 19; the second positioning means then moves the corresponding one of the glass plates 11a and 11b to locate the center O1 (center line L2 of the glass plates 11a and 11b) of the first side edge 14 in the width direction of the corresponding one of the glass plates 11a and 11b in the front-rear direction on the second positioning reference L2; the air cylinder (first lifting mechanism 51) then raises the glass plates 11a and 11b together with the rollers 50; the third moving mechanism 52 then presses and moves the corresponding one of the raised glass plates 11a and 11b to displace the second side edge 14 of the corresponding one of the raised glass plates 11a and 11b in the width direction; and then the outermost edge located outermost in the width direction of the first side edge 14 of the corresponding one of the glass plates 11a and 11b in the width direction is located on the first positioning reference L1 in the loading area 19. Thus, the center O1 in the front-rear direction (the center line L2 of the glass plate 11b) of the first side edge 14 extending in the front-rear direction on one side in the width direction of the glass plate 11b to be processed latter and different in area of upper and lower surfaces 12 and 13 can be accurately located (aligned) at a position of the center O1 in the front-rear direction (the center line L2 of the glass plate 11a) of the first side edge 14 extending in the front-rear direction on the one side in the width direction of the glass plate 11a to be processed first. As a result, the outermost edge of the first side edge 14 of the glass plate 11b that is to be processed later and that is different in size and in area of the upper surface 12 and the lower surface 12 from the glass plate 11a to be processed first can be accurately located (aligned) at a position of the outermost edge of the first side edge 14 of the glass plate 11a.

Another example of the procedure of positioning the glass plates 11a and 11b in the loading area 19 is as follows. The controller transmits an advance signal (ON signal) to the control unit of the loading conveyor 48, and the control unit of the loading conveyor 48 having received an advance signal (ON signal) drives the loading conveyors 48. The glass plates 11a and 11b loaded onto the loading area 19 are placed on the loading conveyor 48 while the lower surface 13 of the corresponding one of the glass plates 11a and 11b is in contact with the loading conveyor 48. The glass plates 11a and 11b placed on the loading conveyor 48 are gradually moved forward in the front-rear direction from backward (start position) to forward in the loading area 19 by the loading conveyor 48. When the glass plates 11a and 11b are moved from backward to forward in the loading area 19 and the front end edge 16 of the corresponding one of the glass plates 11a and 11b come into contact with the stoppers 49, the contact sensor installed in each of the stoppers 49 detects the contact of the front end edge 16 of the corresponding one of the glass plates 11a and 11b with the corresponding one of the stoppers 49, and transmits a contact signal to the controller.

The controller having received the contact signal transmits a stop signal (OFF signal) to the control unit of the loading conveyor 48, and the control unit of the loading conveyor 48 having received the stop signal (OFF signal) stops driving of the loading conveyors 48. Next, the controller transmits a raising signal (ON signal) to the control unit of the air cylinder (first lifting mechanism 51). The control unit of the air cylinder having received the raising signal (ON signal) raises the air cylinder. When the air cylinder is raised to raise the rollers 50, a peripheral part of each of the rollers 50 is partially exposed above the loading conveyor 48. Then, the raised rollers 50 lift the glass plates 11a and 11b above the loading conveyor 48 while being in contact with the lower surface 13 of the corresponding one of the glass plates 11a and 11b.

After the raising of the air cylinder is finished, the controller transmits not only the number of revolutions of the third servomotor 56 to the control unit of the third servomotor 56, the number of revolutions being calculated from the first moving dimension (first moving distance) in the width direction of the moving mechanism (third moving mechanism 52) for locating the first side edge 14 of each of the glass plates 11a and 11b on the first positioning reference L1 (first virtual positioning reference line), but also a positive rotation signal (ON signal) to the control unit of the third servomotor 56. The control unit of the third servomotor 56, having received the number of revolutions and the positive rotation signal (ON signal), drives the third servomotor 56 to rotate the shaft of the third servomotor 56 in the clockwise direction by the number of revolutions predetermined.

When the shaft of the third servomotor 56 rotates in the clockwise direction to rotate the feed screw, the rotation of the feed screw causes the contact member 58 to gradually move together with the moving arm 57 from a movement start point toward one side in the width direction (side part 53a of the loading area 19). The contact member 58 moving toward the one side in the width direction comes into contact with the second side edge 15 of each of the glass plates 11a and 11b, and the contact member 58 presses the second side edge 15 of each of the glass plates 11a and 11b in the width direction to move the glass plates 11a and 11b from the other side toward the one side in the width direction. The glass plates 11a and 11b pressed by the contact member 58 are moved on the rollers 59 in the width direction from the other side toward the one side in the width direction, and an outermost edge located outermost in the width direction of the first side edge 14 of each of the glass plates 11a and 11b in the width direction is located on the first positioning reference L1 (first virtual positioning reference line) in the loading area 19 (first positioning means).

When the movement of the contact member 58 toward the one side in the width direction is finished and the first side edge 14 of each of the glass plates 11a and 11b in the width direction is located on the first positioning reference L1 in the loading area 19, the controller transmits a stop signal (OFF signal) to the control unit of the third servomotor 56. The control unit of the third servomotor 56 having received the stop signal (OFF signal) stops driving of the third servomotor 56. After the driving of the third servomotor 56 is stopped, the controller transmits a negative rotation signal (ON signal) to the control unit of the third servomotor 56. The control unit of the third servomotor 56, having received the negative rotation signal (ON signal), drives the third servomotor 56 to rotate the shaft of the third servomotor 56 in the counterclockwise direction by the number of revolutions predetermined.

When the shaft of the third servomotor 56 rotates in the counterclockwise direction to rotate the feed screw, the rotation of the feed screw causes the contact member 58 to gradually move together with the moving arm 57 toward the other side in the width direction (side part 53b of the loading area 19), and then the contact member 58 returns to the movement start point. After the contact member 58 returns to the movement start point, the controller transmits not only a stop signal (OFF signal) to the control unit of the third servomotor 56, but also a lowering signal (ON signal) to the control unit of the air cylinder (first lifting mechanism 51). The control unit of the third servomotor 56 having received the stop signal (OFF signal) stops the driving of the third servomotor 56, and the control unit of the air cylinder, having received the lowering signal (ON signal), lowers the air cylinder. When the air cylinder is lowered, the lower surface 13 of corresponding one of the glass plates 11a and 11b comes into contact with the conveyance conveyor 48.

After the lower surface 13 of corresponding one of the glass plates 11a and 11b comes into contact with the conveyance conveyor 48, the controller transmits not only the second moving dimension of the loading conveyor 48 backward in the front-rear direction to the control unit of the loading conveyor 48, the second moving dimension being set for locating the center 01 of the first side edge 14 of each of the glass plates 11a and 11b in the front-rear direction on the second positioning reference L2 (second virtual positioning reference line) of the loading area 19, but also a conveyance signal (ON signal) to the control unit of the loading conveyor 48.

The control unit of the loading conveyor 48 having received the second moving dimension and the conveyance signal (ON signal) drives the loading conveyor 48 to move the glass plates 11a and 11b backward in the front-rear direction by the second moving dimension with the loading conveyor 48. When the loading conveyor 48 moves the glass plates 11a and 11b backward in the front-rear direction by the second moving dimension, the center O2 in the front-rear direction (center line L2 extending in the width direction, while dividing each of the glass plates 11a and 11b in dimension into two regions in the front-rear direction) of the first side edge 14 of the glass plates 11a and 11b in the width direction is located on the second positioning reference L2 (second virtual positioning reference line) in the loading area 19 (second positioning means). After moving the glass plates 11a and 11b backward in the front-rear direction by the second moving dimension, the controller transmits a stop signal (OFF signal) to the control unit of the loading conveyor 48, and the control unit of the loading conveyor 48 having received the stop signal (OFF signal) stops driving of the loading conveyors 48. The glass plates 11a and 11b are positioned by using the first positioning means and the second positioning means.

The glass plate processing system 10 is configured as follows: the loading conveyor 48 moves the glass plates 11a and 11b from backward to forward in the loading area 19 to bring the front end edge 16 of the corresponding one of the glass plates 11a and 11b into contact with the stopper 49; the air cylinder (first lifting mechanism 51) then raises the glass plates 11a and 11b together with the rollers 50; the third moving mechanism 52 then presses the second side edge 14 of the corresponding one of the raised glass plates 11a and 11b to move the corresponding one of the glass plates 11a and 11b in the width direction, thereby locating the outermost edge located outermost in the width direction of the first side edge 14 of the corresponding one of the glass plates 11a and 11b in the width direction on the first positioning reference L1 in the loading area 19; the first positioning means locates the outermost edge located outermost in the width direction of the first side edge 14 of the corresponding one of the glass plates 11a and 11b in the width direction on the first positioning reference L1 in the loading area 19; the air cylinder (first lifting mechanism 51) then lowers the glass plates 11a and 11b together with the rollers 50, and the loading conveyor moves the glass plates from backward to forward in the loading area to bring the front end edge of the corresponding one of the glass plates into contact with the stopper; and the loading conveyor 48 then moves the corresponding one of the glass plates 11a and 11b backward in the front-rear direction to locate the center O1 in front-rear direction of the first side edge 14 of the corresponding one of the glass plates 11a and 11b in the width direction (the center line L2 of each of the glass plates 11a and 11b) on the second positioning reference L2 in the loading area 19. Thus, the outermost edge of the first side edge 14 of the glass plate 11b to be processed later and different in size and in area of the upper surface 12 and the lower surface 13 from the glass plate 11a, the first side edge 14 extending in the front-rear direction on one side in the width direction, can be accurately located (aligned) at a position of the outermost edge of the first side edge 14 of the glass plate 11a to be processed first. As a result, the center 01 (the center line L2 of the glass plate 11b) of the first side edge 14 of the glass plate 11b to be processed later and different in size and in area of the upper and lower surfaces 12 and 13 from the glass plate 11a can be accurately aligned (located) at a position of the center O1 (the center line L2 of the glass plate 11a) of the first side edge 14 of the glass plate 11a to be processed first.

Fig. 22 is a top view of the glass plates 11a and 11b positioned in the loading area 19. The glass plate processing system 10 positions the glass plate 11a of a large size, having the upper and lower surfaces 12 and 13 with large areas, and the glass plate 11b of a small size, having the upper and lower surfaces 12 and 13 smaller in area than the glass plate 11a of a large size, by using a first aligning means and a second aligning means. In this case, the first side edge 14 of the glass plate 11a of a large size, extending in the front-rear direction, and the first side edge 14 of the glass plate 11b of a small size, extending in the front-rear direction are located on the first positioning reference L1 (first virtual positioning reference line) in the loading area 19, as illustrated in Fig. 22. Then, the center O1 in front-rear direction of the first side edge 14 of the glass plate 11a of a large size, and the center O1 in front-rear direction of the first side edge 14 of the glass plate 11b of a small size, are located on the second positioning reference L2 (second virtual positioning reference line) in the loading area 19.

As illustrated in Fig. 22, the glass plate 11a of a large size and the glass plate 11b of a small size are positioned by using the first positioning means and the second positioning means such that the outermost edge located outermost in the width direction of the first side edge 14 of each of the glass plates 11a and 11b (the first side edge 14 in each of the glass plates 11a and 11b illustrated) is aligned on the first positioning reference L1 (first virtual positioning reference line). Then, the center O1 in the front-rear direction of the first side edge 14 of each of the glass plates 11a and 11b (the center line L2 dividing the glass plates 11a and 11b in dimension into two regions in the front-rear direction and extending in the width direction) is aligned on the second positioning reference L2 (second virtual positioning reference line).

After the positioning of the glass plates 11a and 11b is finished by using the first positioning means and the second positioning means, the controller transmits a lowering signal (ON signal) to the control unit of the air cylinder of the first glass plate holder 40a. The control unit of the air cylinder, having received the lowering signal (ON signal), lowers the suction pads 41 toward the upper surfaces 12 of the glass plates 11a and 11b with the air cylinder. After the suction pads 41 of the first glass plate holder 40a comes into contact with the corresponding upper surfaces 12 of the glass plates 11a and 11b, the controller transmits a suction signal (ON signal) to the control unit of the vacuum mechanism of the first glass plate holder 40a. The control unit of the vacuum mechanism having received the suction signal (ON signal) activates the vacuum mechanism.

When the vacuum mechanism is activated, the glass plates 11a and 11b located in the loading area 19 are sucked by the corresponding suction pads 41. After the vacuum mechanism is activated, the controller transmits a raising signal (ON signal) to the control unit of the air cylinder of the first glass plate holder 40a. The control unit of the air cylinder having received the raising signal (ON signal) raises the suction pads 41 with the air cylinder. The glass plates 11a and 11b positioned by the first aligning means and the second aligning means in the loading area 19 are raised together with the suction pads 41 while being sucked by the corresponding suction pads 41.

After the suction pads 41 (the glass plates 11a and 11b) are raised, the controller transmits an advance signal (ON signal) to the control unit of the second servomotor 39. The control unit of the second servomotor 39 having received the advance signal (ON signal) drives the second servomotor 39. The shaft of the second servomotor 39 rotates to move the slide block from backward to forward in the front-rear direction along the second guide frame, thereby moving the first glass plate holder 40a (the glass plates 11a and 11b sucked by the corresponding suction pads 41) from the loading area 19 to the cutting area 20. When the slide block is moved, the first glass plate holder 40a is moved forward in the front-rear direction together with the second to fourth glass plate holders 40b to 40d.

After the first glass plate holder 40a is moved to the cutting area 20, the controller transmits a lowering signal (ON signal) to the control unit of the air cylinder of the first glass plate holder 40a. The control unit of the air cylinder, having received the lowering signal (ON signal), lowers the suction pads 41 (the glass plates 11a and 11b) onto the cutting table 59 in the cutting area 20 with the air cylinder. After the glass plates 11a and 11b sucked by the corresponding suction pads 41 of the first glass plate holder 40a come into contact with the cutting table 59, the controller transmits a stop signal (OFF signal) to the control unit of the vacuum mechanism of the first glass plate holder 40a. The control unit of the vacuum mechanism, having received the stop signal (OFF signal), stops operation of the vacuum mechanism. When the vacuum mechanism is stopped, suction with the suction pads 41 for the glass plates 11a and 11b is released, and then the glass plates 11a and 11b positioned are placed on the cutting table 59.

Next, the controller transmits a raising signal (ON signal) to the control unit of the air cylinder of the first glass plate holder 40a, and the first glass plate holder 40a (air cylinder) is raised above the cutting table 59 in response to the raising signal. After the first glass plate holder 40a is raised, the controller transmits a retreat signal (ON signal) to the control unit of the second servomotor 39. Then, the shaft of the second servomotor 39 rotates to move the first glass plate holder 40a from the cutting area 20 to the loading area 19, and the first glass plate holder 40a stands by above the loading area 19. The second to fourth glass plate holders 40b to 40d move backward in the front-rear direction together with the first glass plate holder 40a. Then, the second glass plate holder 40b stands by above the cutting area 20, the third glass plate holder 40c stands by above the breaking area 21, and the fourth glass plate holder 40d stands by above the grinding area 22.

Procedure for conveying the glass plates 11a and 11b after the cutting from the cutting area 20 to the breaking area 21 using the second glass plate holder 40b, procedure for conveying the glass plates 11a and 11b after the breaking from the breaking area 21 to the grinding area 21 using the third glass plate holder 40c, and procedure for conveying the glass plates 11a and 11b after the grinding from the grinding area 22 to the unloading area 23 using the fourth glass plate holder 40d are each identical to that for conveying the glass plates 11a and 11b after the cutting from the loading area 19 to the cutting area 20 using the first glass plate holder 40a. Thus, description of conveyance procedure using each of the second to fourth glass plates holders 40b to 40d is eliminated.

After the glass plates 11a and 11b are placed on the cutting table 59, the controller transmits a retreat signal (ON signal) to the control unit of the first servomotor 34. The control unit of the first servomotor 34, having received the retreat signal (ON signal), drives the first servomotor 34. The shaft of the first servomotor 34 rotates to move the first slide block from forward to backward in the front-rear direction along the first guide frame 35, thereby moving the cutting device 60 together with the first traveling frame 32 backward in the front-rear direction in the cutting area 20. Then, the cutting device 60 is located outward in the width direction (cutting start position) of the first corner 18a (front side edge 16) of each of the glass plates 11a and 11b.

After the cutting device 60 is located outside the first corner 18a of the corresponding one of the glass plates 11a and 11b in the width direction, the controller transmits not only a stop signal (OFF signal) to the control unit of the first servomotor 34, but also a drive signal (ON signal) to the control unit of the fourth servomotor 65. The control unit of the first servomotor 34, having received the stop signal (OFF signal), stops the first servomotor 34, and the control unit of the fourth servomotor 65, having received the drive signal (ON signal), drives the fourth servomotor 65. When the shaft of the fourth servomotor 65 rotates to cause the slide block 67a to move the feed screw 64a in the width direction from the second side edge part 53b toward the first side edge part 53a of the cutting area 20, the cutting table 59 is moved in the width direction from a side close to the second side edge part 53b toward the first side edge part 53a of the cutting area 20. Then, the cutter wheel 71 of the cutting device 60 is located at the first corner 18a of the corresponding one of the glass plates 11a and 11b.

After the cutter wheel 71 of the cutting device 60 is located at the first corner 18a of the corresponding one of the glass plates 11a and 11b, the controller transmits a stop signal (OFF signal) to the control unit of the fourth servomotor 65. Then, the controller transmits not only a drive signal (ON signal) and an NC control signal to the control unit of each of the air cylinder 69 and the fifth servomotor 70 of the cutting device 60, but also a retreat signal (ON signal) to the control unit of the first servomotor 34. The control unit of the fourth servomotor 65, having received the stop signal (OFF signal), stops the fourth servomotor 65. The control unit of the air cylinder 69 and the control unit of the fifth servomotor 70 of the cutting device, having received the drive signal (ON signal) and the NC control signal, drive the air cylinder 69 and the fifth servomotor 70, respectively, to perform contouring control motion under NC control on the vicinity of the first side edge 14 (first side edge part) of each of the glass plates 11a and 11b. Then, the cutter wheel 71 cuts the vicinity of the first side edge 14 (first side edge part) of each of the glass plates 11a and 11b. The control unit of the first servomotor 34, having received the retreat signal (ON signal), drives the first servomotor 34 to move the cutting device 60 backward in the front-rear direction in the cutting area 20 in synchronization with the cutting (during the cutting). The cutter wheel 71 of the cutting device 60 is gradually moved from the first corner 18a toward the second corner 18b of the corresponding one of the glass plates 11a and 11b.

When the cutting of the vicinity of the first side edge 14 (first side edge part) of each of the glass plates 11a and 11b is finished by the cutter wheel 71 of the cutting device 60 and the cutter wheel 71 is located at the second corner 18b of the corresponding one of the glass plates 11a and 11b, the controller transmits not only a stop signal (OFF signal) to the control unit of the first servomotor 34, but also a drive signal (ON signal) to the control unit of the fourth servomotor 65. The control unit of the first servomotor 34, having received the stop signal (OFF signal), stops driving of the first servomotor 34, and the control unit of the fourth servomotor 65, having received the drive signal (ON signal), drives the fourth servomotor 65. As a result, the cutting device 60 is stopped from moving backward in the front-rear direction, and the cutting table 59 moves in the width direction from a side close to the first side edge part 53a toward the second side edge part 53b of the cutting area 20. As the cutting table 59 is moved in the width direction, the cutter wheel 71 cuts the vicinity (rear end edge part) of the rear end edge 17 of each of the glass plates 11a and 11b. The control unit of the fourth servomotor 65, having received the drive signal (ON signal), drives the fourth servomotor 65 to move the cutting table 59 in the width direction in the cutting area 20 in synchronization with the cutting (during the cutting). The cutter wheel 71 of the cutting device 60 is gradually moved from the second corners 18b toward third corners 18c of the corresponding glass plates 11a and 11b.

When the cutter wheel 71 of the cutting device 60 finishes the cutting of the vicinity of the rear end edge 17 (rear end edge part) of each of the glass plates 11a and 11b and the cutter wheel 71 is located at the third corner 18c of the corresponding one of the glass plates 11a and 11b, the controller transmits not only a stop signal (OFF signal) to the control unit of the fourth servomotor 65, but also an advance signal (ON signal) to the control unit of the first servomotor 34. The controller of the fourth servomotor 65, having received the stop signal (OFF signal), stops driving of the fourth servomotor 65, and the controller of the first servomotor 34, having received the forward signal (ON signal), drives the first servomotor 34. As a result, the cutting table 59 is stopped from moving in the width direction, and the cutting device 60 is moved forward in the front-rear direction. As the cutting device 60 is moved forward, the cutter wheel 71 cuts the vicinity of the second side edge 15 (second side edge part) of each of the glass plates 11a and 11b. The control unit of the first servomotor 34, having received the advance signal (ON signal), drives the first servomotor 34 to move the cutting device 60 forward in the front-rear direction in the cutting area 20 in synchronization with the cutting (during the cutting). The cutter wheel 71 of the cutting device 60 is gradually moved from the third corners 18c toward fourth corners 18d of the corresponding glass plates 11a and 11b.

When the cutting of the vicinity of the second side edge 15 (second side edge part) of each of the glass plates 11a and 11b is finished by the cutter wheel 71 of the cutting device 60 and the cutter wheel 71 is located at the fourth corner 18d of the corresponding one of the glass plates 11a and 11b, the controller transmits not only a stop signal (OFF signal) to the control unit of the first servomotor 34, but also a drive signal (ON signal) to the control unit of the fourth servomotor 65. The control unit of the first servomotor 34, having received the stop signal (OFF signal), stops driving of the first servomotor 34, and the control unit of the fourth servomotor 65, having received the drive signal (ON signal), drives the fourth servomotor 65. As a result, the cutting device 60 is stopped from moving forward in the front-rear direction, and the cutting table 59 moves in the width direction from a side close to the second side edge part 53b toward the first side edge part 53a of the cutting area 19. As the cutting table 59 is moved in the width direction, the cutter wheel 71 cuts the vicinity (front end edge part) of the front end edge 16 of each of the glass plates 11a and 11b. The control unit of the fourth servomotor 65, having received the drive signal (ON signal), drives the fourth servomotor 65 to move the cutting table 59 in the width direction in the cutting area 20 in synchronization with the cutting (during the cutting). The cutter wheel 71 of the cutting device 60 is gradually moved from the fourth corners 18d toward the first corners 18a of the corresponding glass plates 11a and 11b. When the cutter wheel 71 of the cutting device 60 finishes the cutting of the vicinity (front end edge part) of the front end edge 16 of each of the glass plates 11a and 11b, the cutting device 60 is moved outward in the width direction (cutting start position) of the first corner 18a (front end edge 16) of the corresponding one of the glass plates 11a and 11b and stands by.

For example, the glass plate 11a and 11b are positioned in the cutting area 19 as follows: the first positioning means allows the outermost edge located outermost in the width direction of the first side edge 14 (first side edge 14 of the glass plate 11b illustrated) of the glass plate 11b of a small size (small area) that is to be processed later and has the upper surface 12 and the lower surface 13 of a small area, the first side edge 14 extending in front-rear direction on one side in the width direction, to be located (aligned) at a position (the first positioning reference L1, or the first virtual positioning reference line) of the outermost edge located outermost in the width direction of the first side edge 14 (first side edge 14 of the glass plate 11a illustrated) of the glass plate 11a of a large size (large area) that is to be processed first and has the upper surface 12 and the lower surface 13 of a large area, the first side edge 14 extending in front-rear direction on the one side in the width direction, thereby positioning the glass plates 11a and 11b that are different in size and in area of the upper surface 12 and the lower surface 13; and the second positioning means allows the center O1 in the front-rear direction (the center line L2 extending in the width direction, while dividing the glass plate 11b in dimension into two regions in the front-rear direction) of the first side edge 14 of the glass plate 11b of a small size that is to be processed later to be located (aligned) at a position (the second positioning reference L2, or the second virtual positioning reference line) of the center O1 in the front-rear direction (the center line L2 extending in the width direction, while dividing the glass plate 11a in dimension into two regions in the front-rear direction) of the first side edge 14 of the glass plate 11a of a large size that is to be processed first, thereby positioning the glass plates 11a and 11b that are different in area of the upper surface 12 and the lower surface. Thus, when cutting is performed on the glass plate 11b to be processed later and different in area after the positioning, not only a moving distance of the cutting device 60 (moving distance of the cutting table 59 in the width direction) until the cutting device 60 reaches the first side edge 14 of the glass plate 11a of a large size equals to a moving distance of the cutting device 60 (moving distance of the cutting table 59 in the width direction) until the cutting device 60 reaches the first side edge 14 of the glass plate 11b of a small size, but also a moving distance of the cutting device 60 until the cutting device 60 returns to the outside in the width direction of the glass plate 11a of a large size from the outermost edge (first side edge 14) of the glass plate 11a equals to a moving distance of the cutting device 60 until the cutting device 60 returns to the outside in the width direction of the glass plate 11b of a small size from the outermost edge (first side edge 14) of the glass plate 11b. As a result, the moving distance of the cutting device 60 until the cutting device 60 reaches the outermost edge (the first side edge 14) of the glass plate 11b of a small size is shortened, and the moving distance of the cutting device 60 until the cutting device 60 returns to the outside in the width direction of the glass from the outermost edge (the first side edge 14) of the glass plate 11b is shortened. Thus, arrival time (non-processing time) until the cutting device 60 reaches the outermost edge (the first side edge 14) of the glass plate 11b of a small size is shortened, and return time until the cutting device 60 returns to the outside in the width direction of the gara from the outermost edge (the first side edge 14) of glass plate 11b is shortened.

After the cutting for the peripheral part of each of the glass plates 11a and 11b is finished, the second glass plate holder 40b conveys the glass plates 11a and 11b after the cutting from the cutting area 19 to the breaking area 20. After the glass plates 11a and 11b after the cutting are placed on the breaking table 78, the controller transmits a drive signal (ON signal) to not only the control unit of each of the first to fourth air cylinders 88a, 88b, 89a, and 89b of the first breaking device 79a and the second breaking device 79b, but also the control unit of each of the sixth to eleventh servomotors 90, 91, 93, 96, 97, and 98 of the first breaking device 79a and the second breaking device 79b. The control units of the air cylinders 88a, 88b, 89a, and 89b and the servomotors 90, 91, 93, 96, 97, and 98, the control units each having received the drive signal (ON signal), drive the corresponding air cylinders 88a, 88b, 89a, and 89b and the corresponding servomotors 90, 91, 93, 96, 97, and 98.

The first breaking device 79a, in which the air cylinders 88a and 89a, and the servomotors 90, 91, and 93, are driven, causes the first X-axis actuator 92a and the first Y-axis actuator 94a to move the pressing roller 102 and the breaking cutter wheel 99 in the front-rear direction and the width direction. Then, the pressing roller 102 is located at an edge part located outside a cut in the first corner 18a of the corresponding one of the glass plates 11a and 11b, and the breaking cutter wheel 99 is located near the cut in the first corner 18a of the corresponding one of the glass plates 11a and 11b. The second breaking device 79b, in which the air cylinders 88b and 89b, and the servomotors 96, 97, and 98, are driven, causes the second X-axis actuator 92b and the second Y-axis actuator 94b to move the pressing roller 102 and the breaking cutter wheel 99 in the front-rear direction and the width direction. Then, the pressing roller 102 is located at an edge part located outside a cut in the fourth corner 18d of the corresponding one of the glass plates 11a and 11b, and the breaking cutter wheel 99 is located near the cut in the fourth corner 18d of the corresponding one of the glass plates 11a and 11b.

While the breaking cutter wheel 99 of the first breaking device 79a cuts the first corner 18a of the corresponding one of the glass plates 11a and 11b, the pressing roller 102 of the first breaking device 79a presses the first corner 18a downward. Then, while the breaking cutter wheel 99 of the second breaking device 79b cuts the fourth corner 18d of the corresponding one of the glass plates 11a and 11b, the pressing roller 102 of the second breaking device 79b presses the fourth corner 18d downward. As a result, the peripheral part of the corresponding one of the glass plates 11a and 11b, the peripheral part extending outward of the cut, is separated from the corresponding one of the glass plates 11a and 11b. The peripheral part separated from the corresponding one of the glass plates 11a and 11b remains on the belt conveyor 80.

Next, the first breaking device 79a causes the first X-axis actuator 92a and the first Y-axis actuator 94a to move the pressing roller 102 and the breaking cutter wheel 99 backward in the front-rear direction. Then, the pressing roller 102 is located at an edge part located outside a cut in the second corner 18b of the corresponding one of the glass plates 11a and 11b, and the breaking cutter wheel 99 is located near the cut in the second corner 18b of the corresponding one of the glass plates 11a and 11b. Then, the second breaking device 79b causes the second X-axis actuator 92b and the second Y-axis actuator 94b to move the pressing roller 102 and the breaking cutter wheel 99 backward in the front-rear direction. Then, the pressing roller 102 is located at an edge part located outside a cut in the third corner 18c of the corresponding one of the glass plates 11a and 11b, and the breaking cutter wheel 99 is located near the cut in the third corner 18c of the corresponding one of the glass plates 11a and 11b.

While the breaking cutter wheel 99 of the first breaking device 79a cuts the second corner 18b of the corresponding one of the glass plates 11a and 11b, the pressing roller 102 of the first breaking device 79a presses the second corner 18b downward. Then, while the breaking cutter wheel 99 of the second breaking device 79b cuts the third corner 18c of the corresponding one of the glass plates 11a and 11b, the pressing roller 102 of the second breaking device 79b presses the third corner 18c downward. As a result, the peripheral part of the corresponding one of the glass plates 11a and 11b, the peripheral part extending outward of the cut, is separated from the corresponding one of the glass plates 11a and 11b. The peripheral part separated from the corresponding one of the glass plates 11a and 11b remains on the belt conveyor 80.

After the breaking is finished and the third glass plate holder 40c lifts the glass plates 11a and 11b after the breaking upward, the controller transmits a drive signal (ON signal) to the control unit of the conveyor drive motor 81. The control unit of the conveyor drive motor 81, having received the drive signal (ON signal), drives the belt conveyor 80. The belt conveyor 80 is moved from one side to the other side in the width direction. When the belt conveyor 80 is moved in the width direction, the peripheral part of each of the glass plate 11a and 11b remaining on the belt conveyor 80 is gradually moved from the one side to the other side in the width direction, and the peripheral part of each of the glass plates 11a and 11b falls from the belt conveyor 80 and are accommodated in a dust box (not illustrated).

After the breaking for the glass plates 11a and 11b is finished, the third glass plate holder 40c conveys the glass plates 11a and 11b after the breaking from the breaking area 21 to the grinding area 22, and then the glass plates 11a and 11b are placed on the grinding table 107. After the glass plates 11a and 11b are placed on the grinding table 107, the controller transmits not only a drive signal to the control unit of the vacuum mechanism of the grinding table 107, but also a retreat signal (ON signal) to the control unit of the first servomotor 34. The control unit of the vacuum mechanism, having received the drive signal, drives the vacuum mechanism. The vacuum mechanism is driven to cause the glass plates 11a and 11b to be sucked and held by the suction pad 124 (grinding table 107).

The control unit of the first servomotor 34, having received the retreat signal (ON signal), drives the first servomotor 34. The shaft of the first servomotor 34 rotates to move the first slide block from forward to backward in the front-rear direction along the first guide frame 30, thereby moving the grinding device 108 together with the first traveling frame 32 backward in the front-rear direction in the grinding area 22. Then, the grinding device 108 is located outward in the width direction (grinding start position) of the first corner 18a (front side edge 16) of each of the glass plates 11a and 11b. The grinding device 108 is moved along the peripheral parts (first and second side edges 14 and 15, front and rear end edges 16 and 17) of the glass plates 11a and 11b in synchronization with the cutting device 60.

After the grinding device 108 is located outside the first corner 18a of the corresponding one of the glass plates 11a and 11b in the width direction, the controller transmits not only a stop signal (OFF signal) to the control unit of the first servomotor 34, but also a drive signal (ON signal) to the control unit of the twelfth servomotor 109. The control unit of the first servomotor 34, having received the stop signal (OFF signal), stops the first servomotor 34, and the control unit of the twelfth servomotor 102, having received the drive signal (ON signal), drives the twelfth servomotor 102. When the shaft of the twelfth servomotor 102 rotates to cause the slide block 67b to move the feed screw 64b in the width direction from the second side edge part 53b toward the first side edge part 53a of the grinding area 23, the grinding table 107 is moved in the width direction from a side close to the second side edge 53b part toward the first side edge part 53a of the grinding area 23. Then, the grinding wheel 116 of the grinding device 108 is located at the first corner 18a of the corresponding one of the glass plates 11a and 11b. The first corner 18a of each of the glass plates 11a and 11b enter the slit 120 of the cover 118 of the grinding tool 110.

After the grinding wheel 116 of the grinding device 108 is located at the first corner 18a of the corresponding one of the glass plates 11a and 11b, the controller transmits a stop signal (OFF signal) to the control unit of the twelfth servomotor 109, and transmits not only a drive signal (ON signal) and an NC control signal to the control unit of the thirteenth to fifteenth servomotors 111 to 113 and the control unit of the spindle motor 119 of the grinding device 108, but also a backward signal (ON signal) to the control unit of the first servomotor 34. The control unit of the twelfth servomotor 109, having received the stop signal (OFF signal), stops the twelfth servomotor 109.

The control unit of each of the thirteenth to fifteenth servomotors 111 to 113 of the grinding device 108, the control unit having received the drive signal (ON signal) and the NC control signal, drives the corresponding one of the thirteenth to fifteenth servomotors 111 to 113 to perform the contouring control motion under NC control on the vicinity of the first side edge 14 (first side edge part) of each of the glass plates 11a and 11b. Then, the grinding wheel 116 grinds the vicinity 14 of the first side edge of the corresponding one of the glass plates. The control unit of the first servomotor 34, having received the retreat signal (ON signal), drives the first servomotor 34 to move the grinding device 108 backward in the front-rear direction in the grinding area 23 in synchronization with the grinding (during the grinding). The grinding wheel 116 of the grinding device 108 is gradually moved from the first corner 18a toward the second corner 18b of the corresponding one of the glass plates 11a and 11b.

When the grinding of the vicinity of the first side edge (first side edge part) of each of the glass plates 11a and 11b is finished by the grinding wheel 116 of the grinding device 108 and the grinding wheel 116 is located at the second corner 18b of the corresponding one of the glass plates 11a and 11b, the controller transmits not only a stop signal (OFF signal) to the control unit of the first servomotor 34, but also a drive signal (ON signal) to the control unit of the twelfth servomotor 109. The control unit of the first servomotor 34, having received the stop signal (OFF signal), stops driving of the first servomotor 34, and the control unit of the twelfth servomotor 109, having received the drive signal (ON signal), drives the twelfth servomotor 109. As a result, the grinding device 108 is stopped from moving backward in the front-rear direction, and the grinding table 107 moves in the width direction from a side close to the second side edge part 53b toward the first side edge part 53a of the grinding area 23. As the grinding table 107 is moved in the width direction, the grinding wheel 116 grinds the vicinity (rear end edge part) of the rear end edge of each of the glass plates 11a and 11b. The control unit of the twelfth servomotor 109, having received the drive signal (ON signal), drives the twelfth servomotor 109 to move the grinding table 107 in the width direction in the grinding area 23 in synchronization with the grinding (during the grinding). The grinding wheel 116 of the grinding device 108 is gradually moved from the second corner 18b toward the third corner 18c of the corresponding one of the glass plates 11a and 11b.

When the grinding of the vicinity of the rear end edge (rear end edge part) of each of the glass plates 11a and 11b is finished by the grinding wheel 116 of the grinding device 108 and the grinding wheel 116 is located at the third corner 18c of the corresponding one of the glass plates 11a and 11b, the controller transmits not only a stop signal (OFF signal) to the control unit of the twelfth servomotor 109, but also an advance signal (ON signal) to the control unit of the first servomotor 34. The controller of the twelfth servomotor 108, having received the stop signal (OFF signal), stops driving of the twelfth servomotor 109, and the controller of the first servomotor 34, having received the forward signal (ON signal), drives the first servomotor 34. As a result, the grinding table 107 is stopped from moving in the width direction, and the grinding device 108 is moved forward in a rear direction. As the grinding device 108 is moved forward in the rear direction, the grinding wheel 116 grinds the vicinity of the second side edge 15 (second side edge part) of each of the glass plates 11a and 11b. The control unit of the first servomotor 34, having received the advance signal (ON signal), drives the first servomotor 34 to move the grinding device 108 forward in the front-rear direction in the grinding area 23 in synchronization with the grinding (during the grinding). The grinding wheel 116 of the grinding device 108 is gradually moved from the third corner 18c toward the fourth corner 18d of the corresponding one of the glass plates 11a and 11b.

When the grinding of the vicinity of the second side edge 15 (side edge part) of each of the glass plates 11a and 11b is finished by the grinding wheel 116 of the grinding device 108 and the grinding wheel 116 is located at the fourth corner 18d of the corresponding one of the glass plates 11a and 11b, the controller transmits not only a stop signal (OFF signal) to the control unit of the first servomotor 34, but also a drive signal (ON signal) to the control unit of the twelfth servomotor 109. The control unit of the first servomotor 34, having received the stop signal (OFF signal), stops driving of the first servomotor 34, and the control unit of the twelfth servomotor 109, having received the drive signal (ON signal), drives the twelfth servomotor 109. As a result, the grinding device 108 is stopped from moving forward in the front-rear direction, and the grinding table 107 moves in the width direction from a side close to the first side edge part 53a toward the second side edge part 53b of the grinding area 23. As the grinding table 107 is moved in the width direction, the grinding wheel 116 grinds the vicinity (rear end edge part) of the front end edge 16 of each of the glass plates 11a and 11b. The control unit of the twelfth servomotor 109, having received the drive signal (ON signal), drives the twelfth servomotor 109 to move the grinding table 107 in the width direction in the grinding area 23 in synchronization with the grinding (during the grinding). The grinding wheel 116 of the grinding device 108 is gradually moved from the third corner 18c toward the fourth corner 18d of the corresponding one of the glass plates 11a and 11b. When the grinding wheel 116 of the grinding device 108 finishes the grinding of the vicinity (front end edge part) of the front end edge 16 of each of the glass plates 11a and 11b, the grinding device 108 is moved outward in the width direction (grinding start position) of the first corner 18a (front end edge 16) of the corresponding one of the glass plates 11a and 11b and stands by.

For example, the glass plate 11a and 11b are positioned in the grinding area 23 as follows: the first positioning means allows the outermost edge located outermost in the width direction of the first side edge 14 (first side edge 14 of the glass plate 11b illustrated) of the glass plate 11b of a small size (small area) that is to be processed later and has the upper surface 12 and the lower surface 13 of a small area, the first side edge 14 extending in front-rear direction on one side in the width direction, to be located (aligned) at a position (the first positioning reference L1, or the first virtual positioning reference line) of the outermost edge located outermost in the width direction of the first side edge 14 (first side edge 14 of the glass plate 11a illustrated) of the glass plate 11a of a large size (large area) that is to be processed first and has the upper surface 12 and the lower surface 13 that are large in area, the first side edge 14 extending in front-rear direction on the one side in the width direction, thereby positioning the glass plates 11a and 11b that are different in area of the upper surface 12 and the lower surface 13; and the second positioning means allows the center O1 in the front-rear direction (the center line L2 extending in the width direction, while dividing the glass plate 11b in dimension into two regions in the front-rear direction) of the first side edge 14 of the glass plate 11b of a small size that is to be processed later to be located (aligned) at a position (the second positioning reference L2, or the second virtual positioning reference line) of the center O1 in the front-rear direction (the center line L2 extending in the width direction, while dividing the glass plate 11a in dimension into two regions in the front-rear direction) of the first side edge 14 of the glass plate 11a of a large size that is to be processed first, thereby positioning the glass plates 11a and 11b that are different in area of the upper surface 12 and the lower surface 13. Thus, when grinding is performed on the glass plate 11b to be processed later and different in area after the positioning, not only a moving distance of the grinding device 108 (moving distance of the grinding table in the width direction) until the grinding device 108 reaches the first side edge 14 of the glass plate 11a of a large size equals to a moving distance of the grinding device 108 (moving distance of the grinding table in the width direction) until the grinding device 108 reaches the first side edge 14 of the glass plate 11b of a small size, but also a moving distance of the grinding device 108 until the grinding device 108 returns to the outside in the width direction of the glass plate 11a of a large size from the outermost edge (first side edge 14) of the glass plate 11a equals to a moving distance of the grinding device 108 until the grinding device 108 returns to the outside in the width direction of the glass plate 11b of a small size from the outermost edge (first side edge 14) of the glass plate 11b. As a result, the moving distance of the grinding device 108 until the grinding device 108 reaches the outermost edge (the first side edge 14) of the glass plate 11b of a small size is shortened, and the moving distance of the grinding device 108 until the grinding device 108 returns to the outside in the width direction of the glass plate 11b of a small size from the outermost edge (the first side edge 14) of the glass plate 11b is shortened. Thus, arrival time (non-processing time) until the grinding device 108 reaches the outermost edge (the first side edge 14) of the glass plate 11b of a small size is shortened, and return time until the grinding device 108 returns to the outside in the width direction of the gara of a small size from the outermost edge (the first side edge 14) of glass plate 11b is shortened.

After the grinding for the glass plates 11a and 11b is finished, the fourth glass plate holder 40d conveys the glass plates 11a and 11b after the grinding from the grinding area 22 to the unloading area 23. The unloading conveyor 123 in the unloading area 23 causes the glass plates 11a and 11b having been subjected to the cutting, the breaking, or the grinding to move forward from the rear end part toward the front end part of the unloading area 23, and the glass plates 11a and 11b having been subjected to the corresponding processing are unloaded from the unloading area 23.

When the glass plates 11a and 11b having been subjected to the corresponding processing are located on the unloading conveyor 123 in the unloading area 23, the glass plates 11a and 11b having been subjected to the grinding are located on the grinding table 110 in the grinding area 22, the glass plates 11a and 11b having been subjected to the breaking are located on the breaking table 78 in the breaking area 21, the glass plates 11a and 11b having been subjected to the cutting are located on the cutting table 59 in the cutting area 20, and the glass plates 11a and 11b before processing that are positioned by the first positioning means and the second positioning means are located on the loading conveyor 48 in the loading area 19. As described above, the glass plate processing system 10 allows the plurality of glass plates is sequentially conveyed from the loading area 19 toward the unloading area 23 to continuously perform corresponding processing on the plurality of glass plates 11a and 11b.

The glass plate processing system 10 is configured as follows: the first positioning means allows a position (the first positioning reference L1, or the first virtual positioning reference line) of the outermost edge located outermost in the width direction of the first side edge 14 (first side edge 14 of the glass plate 11b illustrated) of the glass plate 11b of a small size (small area) that is to be processed later and has the upper surface 12 and the lower surface 13 of a small area, the first side edge 14 extending in front-rear direction on one side in the width direction, to be aligned with a position (the first positioning reference L1, or the first virtual positioning reference line) of the outermost edge located outermost in the width direction of the first side edge 14 (first side edge 14 of the glass plate 11a illustrated) of the glass plate 11a of a large size (large area) that is to be processed first and has the upper surface 12 and the lower surface 13 that are large in area, the first side edge 14 extending in front-rear direction on the one side in the width direction, thereby positioning the glass plates 11a and 11b that are different in area of the upper surface 12 and the lower surface 13; and the second positioning means allows a position (the second positioning reference, or the second virtual positioning reference line) of the center O1 in the front-rear direction (the center line L2 extending in the width direction, while dividing the glass plate 11b in dimension into two regions in the front-rear direction) of the first side edge 14 of the glass plate 11b of a small size that is to be processed later to be aligned) with a position (the second positioning reference L2, or the second virtual positioning reference line) of the center O1 in the front-rear direction (the center line L2 extending in the width direction, while dividing the glass plate 11a in dimension into two regions in the front-rear direction) of the first side edge 14 of the glass plate 11a of a large size that is to be processed first, thereby positioning the glass plates 11a and 11b that are different in size and in area of the upper surface 12 and the lower surface 13. Thus, when cutting is performed on the glass plate 11b of a small size to be processed later (the glass plate 11b different in area) after the positioning, not only a moving distance of the cutting device 60 (moving distance of the cutting table 59 in the width direction) until the cutting device 60 reaches the outermost edge (the first side edge 14) of the glass plate 11a of a large size (large area), which is large in area of the upper surface 12 and the lower surface 13, equals to a moving distance of the cutting device 60 (moving distance of the cutting table 59 in the width direction) until the cutting device 60 reaches the outermost edge (the first side edge 14) of the glass plate 11b of a small size (small area), which is small in area of the upper surface 12 and the lower surface 13, but also a moving distance of the cutting device 60 (moving distance of the cutting table 59 in the width direction) until the cutting device 60 returns to the outside in the width direction of the glass plate 11a of a large size from the outermost edge (first side edge 14) of the glass plate 11a equals to a moving distance of the cutting device 60 (moving distance of the cutting table 59 in the width direction) until the cutting device 60 returns to the outside in the width direction of the glass plate 11b of a small size from the outermost edge (first side edge 14) of the glass plate 11b. Thus, as compared with a glass plate processing system of a conventional technique, the moving distance of the cutting device 60 until the cutting device 60 reaches the outermost edge (the first side edge 14) of the glass plate 11b of a small size can be shortened, and the moving distance of the cutting device 60 until the cutting device 60 returns to the outside in the width direction of the glass plate 11b of a small size from the outermost edge (the first side edge 14) of the glass plate 11b can be shortened. As a result, arrival time (non-processing time) until the cutting device 60 reaches the outermost edge (the first side edge 14) of the glass plate 11b of a small size can be shortened, and return time until the cutting device 60 returns to the outside in the width direction of the glass plate 11b of a small size from the outermost edge (the first side edge 14) of glass plate 11b can be shortened.

The glass plate processing system 10 is configured as follows: the first positioning means allows a position (the first positioning reference L1, or the first virtual positioning reference line) of the outermost edge located outermost in the width direction of the first side edge 14 (first side edge 14 of the glass plate 11b illustrated) of the glass plate 11b of a small size (small area) that is to be processed later and has the upper surface 12 and the lower surface 13 of a small area, the first side edge 14 extending in front-rear direction on one side in the width direction, to be aligned with a position (the first positioning reference L1, or the first virtual positioning reference line) of the outermost edge located outermost in the width direction of the first side edge 14 (first side edge 14 of the glass plate 11a illustrated) of the glass plate 11a of a large size (large area) that is to be processed first and has the upper surface 12 and the lower surface 13 of a large area, thereby positioning the glass plates 11a and 11b that are different in area of the upper surface 12 and the lower surface 13; and the second positioning means allows a position (the second positioning reference L2, or the second virtual positioning reference line) of the center O1 in the front-rear direction (the center line L2 extending in the width direction, while dividing the glass plate 11a in dimension into two regions in the front-rear direction) of the first side edge 14 of the glass plate 11b of a small size that is to be processed later to be aligned with a position (the second positioning reference L2, or the second virtual positioning reference line) of the center O1 in the front-rear direction (the center line L2 extending in the width direction, while dividing the glass plate 11a in dimension into two regions in the front-rear direction) of the first side edge 14 of the glass plate 11a of a large size that is to be processed first, thereby positioning the glass plates 11a and 11b that are different in size and in area of the upper surface 12 and the lower surface 13. Thus, when grinding is performed on the glass plate 11b of a small size to be processed later (the glass plate 11b different in area) after the positioning, not only a moving distance of the grinding device 108 (moving distance of the grinding table 107 in the width direction) until the grinding device 108 reaches the outermost edge (the first side edge 14) 4 of the glass plate 11a of a large size (large area), which is large in area of the upper surface 12 and the lower surface 13, equals to a moving distance of the grinding device 108 (moving distance of the grinding table 107 in the width direction) until the grinding device 108 reaches the outermost edge (the first side edge 14) of the glass plate 11b of a small size (small area), which is small in area of the upper surface 12 and the lower surface 13, but also a moving distance of the grinding device 108 (moving distance of the grinding table 107 in the width direction) until the grinding device 108 returns to the outside in the width direction of the glass plate 11a of a large size from the outermost edge (first side edge 14) of the glass plate 11a equals to a moving distance of the grinding device 108 (moving distance of the grinding table 107 in the width direction) until the grinding device 108 returns to the outside in the width direction of the glass plate 11b of a small size from the outermost edge (first side edge 14) of the glass plate 11b. Thus, as compared with a glass plate processing system of a conventional technique, the moving distance of the grinding device 108 until the grinding device 108 reaches the first side edge 14 of the glass plate 11b of a small size can be shortened, and the moving distance of the grinding device 108 until the grinding device 108 returns to the outside in the width direction of the glass plate 11b of a small size from the outermost edge (the first side edge 14) of the glass plate 11b can be shortened. As a result, arrival time (non-processing time) until the grinding device 108 reaches the outermost edge (the first side edge 14) of the glass plate 11b of a small size can be shortened, and return time until the grinding device 108 returns to the outside in the width direction of the glass plate 11b of a small size from the outermost edge (the first side edge 14) of glass plate 11b can be shortened. The glass plate processing system 10 can quickly perform cutting and grinding on the glass plate 11b of a small size, and can shorten cycle time of the cutting and the grinding.

The glass plate processing system 10 causes the third moving mechanism 52 to press the second side edge 15 of each of the glass plates 11a and 11b raised together with the rollers 50 by the air cylinder (first lifting mechanism 51) to move the corresponding one of the glass plates 11a and 11b in the width direction to locate the outermost edge (the first side edge 14 of the glass plate 11b illustrated) located outermost in the width direction of the first side edges 14 of the corresponding one of the glass plates 11a and 11b in the width direction at the first positioning reference L1 (first virtual positioning reference line) in the loading area 19. This configuration enables the outermost edge located outermost in the width direction (the first side edge 14 of the glass plate 11b illustrated) of the first side edge 14 extending in the front-rear direction on one side in the width direction of the glass plate 11b of a small size (small area) that is to be processed later and has the upper surface 12 and the lower surface 13 of a small area to be accurately located (aligned) at a position of the outermost edge located outermost in the width direction (the first side edge 14 of the glass plate 11b illustrated) of the first side edge 14 extending in the front-rear direction on one side in the width direction of the glass plate 11a of a large size (large area) that is to be processed first and has the upper surface 12 and the lower surface 13 of a large area. Thus, the glass plates 11a and 11b different in size and in area of the upper surface 12 and the lower surface 13 can be reliably positioned, and the first positioning means can be automatically performed by using the loading conveyor 48, the stopper 49, the rollers 50, the first lifting mechanism 51, and the third moving mechanism 52, without manual operation.

The glass plate processing system 10 determines the first moving dimension of each of the glass plates 11a and 11b in the width direction for locating the outermost edge (the first side edge 14 of the glass plate 11b illustrated) located outermost in the width direction of the first side edge 14 of the corresponding one of the glass plates 11a and 11b at the first positioning reference L1 in accordance with a difference in dimension in the width direction between the glass plates 11a and 11b, and determines the number of revolutions of the shaft of the third servomotor 56 based on the determined first moving dimension. Thus, the glass plates 11a and 11b can be accurately moved in the width direction by the first moving dimension by the third moving mechanism 52 to accurately locate the outermost edge (the first side edge 14 of the glass plate 11b illustrated) located outermost in the width direction of the first side edge 14 in the width direction of each of the glass plates 11a and 11b on the first positioning reference L1 (first virtual positioning reference line) in the loading area 19.

The glass plate processing system 10 causes the loading conveyor 48 to move the glass plates 11a and 11b backward in the front-rear direction to locate the center O1 in the front-rear direction of the first side edge 14 in the width direction of each of the glass plates 11a and 11b (the center line L2 extending in the width direction, while dividing each of the glass plates 11a and 11b in dimension into two regions in the front-rear direction) on the second positioning reference L2 (second virtual positioning reference line) in the loading area 19. Thus, the center O1 in the front-rear direction of the first side edge 14 extending in the front-rear direction on one side in the width direction of the glass plate 11b of a small size (small area) that is to be processed later and has the upper surface 12 and the lower surface 13 of a small area (the center line L2 extending in the width direction, while dividing the glass plate 11b in dimension into two regions in the front-rear direction) can be accurately aligned at a position of the center O1 in the front-rear direction of the first side edge 14 extending in the front-rear direction on the one side in the width direction of the glass plate 11a of a large size (large area) that is to be processed first and has the upper surface 12 and the lower surface 13 of a large area (the center line L2 extending in the width direction, while dividing the glass plate 11a in dimension into two regions in the front-rear direction). As a result, the glass plates 11a and 11b different in size and in area of the upper surface 12 and the lower surface 13 can be reliably positioned, and the second positioning means can be automatically performed by using the loading conveyor 48 without manual operation.

The glass plate processing system 10 determines the second moving dimension of the loading conveyor 48 backward in the front-rear direction for locating the center O1 in the front-rear direction of the first side edge 14 in the width direction of each of the glass plates 11a and 11b (the center line L2 extending in the width direction, while dividing each of the glass plates 11a and 11b in dimension into two regions in the front-rear direction) on the second positioning reference L2 in accordance with a difference in dimension in the front-rear direction between the glass plates 11a and 11b. Then, the loading conveyor 48 moves the glass plates 11a and 11b backward in the front-rear direction based on the second moving dimension determined, so that the glass plates 11a and 11b can be accurately moved backward in the front-rear direction by the second moving dimension by the loading conveyor 48. As a result, the center O1 in the front-rear direction of the first side edge 14 in the width direction of each of the glass plates 11a and 11b (the center line L2 extending in the width direction, while dividing each of the glass plates 11a and 11b in dimension into two regions in the front-rear direction) can be accurately located on the second positioning reference L2 (first virtual positioning reference line) in the loading area 19.

### Reference Signs List

- 10: glass plate processing system
- 11a: glass plate of a large size
- 11b: glass plate of a small size
- 12: upper surface
- 13: lower surface
- 14: first side edge
- 15: second side edge
- 16: front end edge
- 17: rear end edge
- 18a to 18d: first to fourth corners
- 19: loading area
- 20: cutting area
- 21: breaking area
- 22: grinding area
- 23: unloading area
- 24: conveyance mechanism
- 25: system base
- 26a, 26b: first and second pillars
- 27: fixed frame
- 28: first moving means
- 29: second moving means
- 30: first guide frame
- 31: first guide rail
- 32: first traveling frame
- 33: first guide shoe
- 34: first servomotor
- 35: second guide frame
- 36: second guide rail
- 37: second traveling frame
- 38: guide shoe
- 39: second servomotor
- 40a to 40d: first to fourth glass plate holders
- 41: suction pad
- 41a: inner suction pad
- 41b: outer suction pad
- 42: pad mounting plate
- 43a, 43b: first and second arms
- 44: slit
- 45: handle screw
- 46: attachment plate
- 47: slit
- 48: loading conveyor
- 49: stopper
- 50: roller
- 50a: roller
- 51: lifting mechanism (first lifting mechanism)
- 52: moving mechanism (third moving mechanism)
- 53a: first side edge part
- 53b: second side edge part
- 54: shaft
- 55: rod
- 56: third servomotor
- 57: moving arm
- 58: contact member
- 59: cutting table
- 60: cutting device
- 61a, 61b: base lane
- 62: first moving mechanism
- 63a, 63b: traveling guide rail
- 64a, 64b: feed screw
- 65: fourth servomotor
- 66a, 66b: guide shoe
- 67a, 67b: slide block (housing nut)
- 68: cutting tool
- 69: air cylinder
- 70: fifth servomotor
- 71: cutter wheel
- 72: cutter holder
- 73: cutter lifting shaft
- 74: cutter lifting guide
- 75: support shaft
- 76: bracket
- 77: timing belt
- 78: breaking table
- 79: breaking device
- 80: belt conveyor
- 81: conveyor drive motor
- 82: belt
- 83: pulley
- 84: carrier roller
- 85: conveyor frame
- 86: suspension frame
- 87a, 87b: breaking tool
- 88a: first air cylinder
- 88b: third air cylinder
- 89a: second air cylinder
- 89b: fourth air cylinder
- 90: sixth servomotor (Z-axis servomotor)
- 91: seventh servomotor (X-axis servomotor)
- 92a: first X-axis actuator
- 92b: second X-axis actuator
- 93: eighth servomotor (Y-axis servomotor)
- 94a: first Y-axis actuator
- 94b: second Y-axis actuator
- 95a: first actuator frame
- 95b: second actuator frame
- 96: ninth servomotor (Z-axis servomotor)
- 97: tenth servomotor (X-axis servomotor)
- 98: eleventh servomotor (Y-axis servomotor)
- 99: breaking cutter wheel
- 100: breaking cutter holder
- 101: cutter lifting shaft
- 102: pressing roller
- 103: roller lifting shaft
- 104: support shaft
- 105: bracket
- 106: timing belt
- 107: grinding table
- 108: grinding device
- 109: twelfth servomotor
- 110: grinding tool
- 111: thirteenth servomotor (Z-axis grinding servomotor)
- 112: fourteenth servomotor (lifting servomotor)
- 113: fifteenth servomotor(cutting servomotor)
- 114: grinding wheel lifting screw
- 115: grinding wheel cutting screw
- 116: grinding wheel
- 117: grinding holder
- 118: cover
- 119: spindle motor
- 120: slit
- 121: motor housing
- 122: bracket
- 123: unloading conveyor
- 124: suction pad
- e: edge (peripheral part)
- L1: first positioning reference (first virtual positioning reference line)
- L2: second positioning reference (second virtual positioning reference line)(enter line)
- O1: center of side edge in front-rear direction
- O2: center of side edge in front-rear direction

## Claims

1. A glass plate processing system comprising: a loading area into which a glass plate to be processed is loaded; a processing area located in front of the loading area and configured to perform processing on the glass plate; an unloading area located in front of the processing area and configured to unload the glass plate processed; and a conveyance mechanism configured to sequentially convey the glass plate to the areas from backward to forward in a front-rear direction,
a first positioning means,
wherein the glass plate processing system comprises a first positioning means, when first and second glass plates different in size and in area of an upper surface are processed, the first positioning means locating an outermost edge located outermost in a width direction of a first side edge extending in a front-rear direction on one side in the width direction of the second glass plate to be processed later on a virtual line extending in the front-rear direction and being imagined based on an outermost edge located outermost in the width direction of a first side edge extending in the front-rear direction on the one side in the width direction of the first glass plate to be processed first, and
in the glass plate processing system, after the second glass plate is positioned by locating the outermost edge of the second glass plate on the virtual line using the first positioning means, the processing is performed on the second glass plate.

2. The glass plate processing system according to claim 1, further comprising: a second positioning means, wherein when the first and second glass plates different in size and in area of an upper surface are processed, the second positioning means locates a second center line extending in the width direction, while dividing the second glass plate in dimension into two regions in the front-rear direction on a first center line extending in the width direction, while dividing the first glass plate in dimension into two regions in the front-rear direction, and after the second glass plate is positioned by locating the second center line of the second glass plate on the first center line of the first glass plate, the processing is performed on the second glass plate.

3. The glass plate processing system according to claim 2, wherein the first positioning means and the second positioning means operate in the loading area.

4. The glass plate processing system according to claim 3, wherein the processing area includes a cutting area located in front of the loading area, a breaking area located in front of the cutting area, and a grinding area located in front of the breaking area, the cutting area includes a cutting table that is provided with a first moving mechanism and that is moved in the width direction while the glass plate positioned is placed on the cutting table, and a cutting device that is movable in the front-rear direction and that cuts in an edge of the glass plate placed on the cutting table, the breaking area includes a breaking table for placing the glass plate positioned after the cutting on the breaking table, and a breaking device that is movable in the front-rear direction and breaks the edge of the glass plate placed on the breaking table, the grinding area includes a grinding table that is provided with a second moving mechanism and that is moved in the width direction while the glass plate positioned after the breaking is placed on the grinding table, and a grinding device that is movable in the front-rear direction and grinds the edge of the glass plate placed on the grinding table, the first positioning means positions the second glass plate by locating the outermost edge of the second glass plate on the virtual line, the second positioning means positions the second center line of the second glass plate on the first center line of the first glass plate, and, then, the cutting, the breaking, and the grinding are performed on the second glass plate.

5. The glass plate processing system according to any one of claims 1 to 4, wherein the loading area includes a loading conveyor that conveys the glass plate from backward to forward in the front-rear direction of the loading area, a stopper with which a front end edge of the glass plate comes into contact when the glass plate is moved forward using the loading conveyor, a plurality of rollers that is in contact with a lower surface of the glass plate and holds the glass plate movably in the width direction, a first lifting mechanism that lifts the plurality of rollers in a vertical direction, and a third moving mechanism that presses a second side edge of the glass plate raised together with the plurality of rollers by the first lifting mechanism in the width direction to move the glass plate in the width direction from the second side edge toward the first side edge, the first positioning means then locates an outermost edge located outermost in the width direction of the first side edge in the width direction of the glass plate on a first positioning reference extending in the front-rear direction as a virtual line in the loading area by pressing the second side edge of the glass plate lifted together with the plurality of rollers by the first lifting mechanism in the width direction using the third moving mechanism to move the glass plate in the width direction.

6. The glass plate processing system according to claim 5, wherein the plurality of rollers includes at least one roller that has large rotation resistance, and the roller having the large rotation resistance prevents a glass plate located on the plurality of rollers from freely moving in the width direction.

7. The glass plate processing system according to claim 6, wherein the third moving mechanism includes a contact member that comes into contact with the second side edge of the glass plate, and a servomotor that moves the contact member in the width direction, a first moving dimension in the width direction for locating the outermost edge located outermost in the width direction of the first side edge of the glass plate on the first positioning reference is determined in accordance with a difference in dimension in the width direction of the glass plate, and a number of revolutions of a shaft of the servomotor is determined based on the first moving dimension determined.

8. The glass plate processing system according to any one of claims 5 to 7, wherein the second positioning means locates the center line of the glass plate on a second positioning reference in the loading area by moving the glass plate backward in the front-rear direction using the loading conveyor after the glass plate is moved from backward to forward in the loading area by the loading conveyor and a front end edge of the glass plate comes into contact with the stopper, and the first positioning means locates the outermost edge located outermost in the width direction of the first side edge of the glass plate on the first positioning reference in the loading area by raising the glass plate together with the plurality of rollers using the first lifting mechanism and pressing the second side edge of the raised glass plate to move the raised glass plate in the width direction using the third moving mechanism after the second positioning means locates the center line of the glass plate on the second positioning reference.

9. The glass plate processing system according to claim 8, wherein a second moving dimension of the loading conveyor backward in the front-rear direction for locating the center line of the glass plate on the second positioning reference is determined in accordance with a difference in dimension of the glass plate in the front-rear direction, and the second positioning means causes the loading conveyor to move the glass plate backward in the front-rear direction by the determined second moving dimension after the front end edge of the glass plate comes into contact with the stopper.

10. The glass plate processing system according to any one of claims 5 to 7, wherein the second positioning means locates the center line of the glass plate on the second positioning reference in the loading area by lowering the glass plate raised by the first lifting mechanism and moving the glass plate backward in the front-rear direction using the loading conveyor after the outermost edge located outermost in the width direction of the first side edge in the width direction of the glass plate is located on the first positioning reference in the loading area.

11. The glass plate processing system according to claim 10, wherein a second moving dimension of the loading conveyor backward in the front-rear direction for locating the center line of the glass plate on the second positioning reference is determines in accordance with a difference in dimension of the glass plate in the front-rear direction, and the second positioning means causes the loading conveyor to move the glass plate backward in the front-rear direction by the determined second moving dimension after the outermost edge located outermost in the width direction of the first side edge in the width direction of the glass plate is located on the first positioning reference.

12. The glass plate processing system according to any one of claims 4 to 11, wherein the conveyance mechanism includes a suction pad that is located in each of the loading area, the cutting area, the breaking area, and the grinding area, and that sucks and holds the glass plate, a vacuum mechanism that applies a suction force to the suction pad, the suction force causing the suction pad to be attached to the glass plate, and a second lifting device that lowers the suction pad toward the areas above and raises the suction pad from the areas, and the suction pad is changeable in mounting position in the front-rear direction or the width direction in accordance with an area of each of upper and lower surfaces of the glass plate.

13. The glass plate processing system according to claim 12, wherein the conveyance mechanism includes a pad mounting plate extending in the front-rear direction or the width direction, and at least two suction pads disposed side by side in the front-rear direction or the width direction that are disposed on the pad mounting plate, and the at least two suction pads are changeable in mounting position in the front-rear direction or the width direction in the pad mounting plate.

14. The glass plate processing system according to claim 13, wherein the at least two suction pads located in the cutting area includes an inner suction pad that sucks and holds the glass plate extending inside the cut and an outer suction pad that sucks and holds an edge extending outside the cut of the glass plate, the inner suction pad is installed on the pad mounting plate, and the outer suction pad is installed on a pad mounting arm that obliquely extends in the front-rear direction or the width direction from front and rear ends or both ends of the pad mounting plate.

15. The glass plate processing system according to claim 14, wherein the pad mounting arm includes first and second arms that obliquely extend forward in the front-rear direction or outward in the width direction from the front end or one end of the pad mounting plate and turn in the width direction or the front-rear direction, and third and fourth arms that obliquely extend backward in the front-rear direction or outward in the width direction from the rear end or another end of the pad mounting plate and turn in the width direction or the front-rear direction, and
the conveyance mechanism allows the first to fourth arms to be changeable in turning angle with respect to the pad mounting plate, and allows the first to fourth arms to be changeable in mounting position of the outer suction pad.
